(19)

Europäisches
Patentamt

European
Patent Office

Office européen
des brevets

(11) **EP 4 355 006 A1**

(12) **EUROPEAN PATENT APPLICATION**
published in accordance with Art. 153(4) EPC

(43) Date of publication:
**17.04.2024  Bulletin 2024/16**

(21) Application number: **22832099.0**

(22) Date of filing: **29.06.2022**

(51) International Patent Classification (IPC):
**H04W 72/12** (2023.01)    **H04W 24/10** (2009.01)

(52) Cooperative Patent Classification (CPC):
**H04L 5/00; H04W 24/10; H04W 72/12**

(86) International application number:
**PCT/CN2022/102259**

(87) International publication number:
**WO 2023/274287 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **30.06.2021  CN 202110742710**

(71) Applicant: **Huawei Technologies Co., Ltd.**
**Longgang**
**Shenzhen, Guangdong 518129 (CN)**

(72) Inventors:
• **WANG, Ting**
  **Shenzhen, Guangdong 518129 (CN)**
• **LYU, Yongxia**
  **Shenzhen, Guangdong 518129 (CN)**
• **WANG, Jun**
  **Shenzhen, Guangdong 518129 (CN)**
• **ZHANG, Liqing**
  **Shenzhen, Guangdong 518129 (CN)**
• **MA, Jianglei**
  **Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **CHANNEL STATE INFORMATION TRANSMISSION METHOD AND RELATED COMMUNICATION APPARATUSES**

(57)    Embodiments of this application disclose a channel state information transmission method and a related communication apparatus. A first communication apparatus receives a first reference signal, where the first reference signal is used by a terminal device in a first user group to perform channel estimation on a control channel, and the first user group includes at least two terminal devices. The first communication apparatus determines channel state information based on the first reference signal, and then sends the channel state information. Because all the terminal devices in the first user group can use the first reference signal, and the first reference signal can be used for both channel estimation of the control channel and measurement and feedback of the channel state information, pilot overheads can be reduced.

FIG. 2

**Description**

This application claims priority to Chinese Patent Application No. 202110742710.1, filed with the China National Intellectual Property Administration on June 30, 2021 and entitled "CHANNEL STATE INFORMATION TRANSMISSION METHOD AND RELATED COMMUNICATION APPARATUS", which is incorporated herein by reference in its entirety.

**TECHNICAL FIELD**

Embodiments of this application relate to the communication field, and in particular, to a channel state information transmission method and a related communication apparatus.

**BACKGROUND**

Channel state information (channel state information, CSI) measurement and reporting are a procedure in which a terminal device measures a channel on a preconfigured time-frequency resource based on a channel state information reference signal (channel state information reference signal, CSI-RS) configured by a network device, and reports, to the network device, obtained CSI that reflects a state of the channel, so that the network device can consider the state of the channel during downlink scheduling.

In the foregoing conventional CSI measurement and reporting procedure, reporting the CSI by the terminal device needs to depend on the CSI-RS configured by the network device. Because the CSI-RS needs to be separately configured by the network device for the terminal device, when there are a plurality of terminal devices in a cell, a conventional CSI measurement and reporting solution consumes a large quantity of pilot resources. In addition, a delay of conventional CSI measurement and reporting is large. Consequently, the channel state information is outdated and inaccurate, and communication performance is affected.

**SUMMARY**

This application provides a channel state information transmission method and a related communication apparatus, to reduce pilot overheads.

According to a first aspect, this application provides a channel state information transmission method. The method relates to a first communication apparatus and a second communication apparatus. The first communication apparatus may be a terminal device, and the second communication apparatus may be a network device. The method includes: The first communication apparatus receives a first reference signal from the second communication apparatus, where the first reference signal is used by a terminal device in a first user group to perform channel estimation on a control channel, and the first user group includes at least two terminal devices. The first communication apparatus determines channel state information based on the first reference signal. Further, the first communication apparatus sends the channel state information to the second communication apparatus.

The first communication apparatus may belong to the first user group, or may not belong to the first user group. It may also be understood that one of the at least two terminal devices may be the first communication apparatus, or the first communication apparatus may not exist in the at least two terminal devices. Therefore, the first communication apparatus may measure and report channel state information based on a reference signal corresponding to a user group to which the first communication apparatus belongs, or may measure and report channel state information based on a reference signal corresponding to another user group (that is, a user group that does not include the first communication apparatus). This is not specifically limited herein.

According to a solution in a current long term evolution (long term evolution, LTE) or new radio (new radio, NR) technology, in LTE or NR, a reference signal (for example, a demodulation reference signal (demodulation reference signal, DMRS) of a physical downlink control channel (physical downlink control channel, PDCCH)) used for channel estimation of a control channel is different from a reference signal (for example, a CSI-RS) used for measurement and reporting of channel state information. However, in this application, the first reference signal can be used for both channel estimation of the control channel and measurement and reporting of the channel state information. Therefore, the solution of reporting the channel state information in this application helps reduce pilot overheads. In addition, the first reference signal received by the first communication apparatus is a reference signal shared by the terminal devices in the first user group, and is not only a reference signal configured for a terminal device. Therefore, pilot overheads can be reduced.

In a possible implementation, the first communication apparatus receives a first group identifier, where the first group identifier identifies the first user group, and the first group identifier is used to determine a time-frequency resource of the first reference signal and/or a sequence of the first reference signal.

Determining the time-frequency resource of the first reference signal may be understood as determining a time-frequency domain position of the time-frequency resource for receiving the first reference signal, for example, a symbol (or symbols) in time domain and a subcarrier (or subcarriers) in frequency domain in which the time-frequency resource for receiving the first reference signal is located. Therefore, the first communication apparatus can receive the first reference signal on the time-frequency resource of the first reference signal.

In addition, the first group identifier may be further used to determine the sequence of the first reference signal, so that the first communication apparatus can perform channel estimation by using the sequence of the first reference signal. For example, the first communication apparatus compares the sequence of the first reference signal that is calculated based on the first group identifier with a sequence of the first reference signal that is received from the second communication apparatus, to determine a current channel state on the time-frequency resource of the first reference signal, so as to estimate a channel state (for example, a channel state of a time-frequency resource of a control channel) on an adjacent time-frequency resource (that is, a time-frequency resource adjacent to the time-frequency resource of the first reference signal).

It should be understood that the first group identifier may be a newly defined radio network temporary identifier RNTI, for example, a group RNTI; or may be an RNTI in an NR standard as the first group identifier; or may be another character or field that can identify a group of users. This is not specifically limited herein.

In this implementation, the first communication apparatus can receive and identify the first group identifier, and the first communication apparatus can determine the time-frequency resource of the first reference signal and/or the sequence of the first reference signal based on the first group identifier. Because the first group identifier identifies a user group (namely, the first user group), all the terminal devices in the first user group can determine the time-frequency resource of the first reference signal and/or the sequence of the first reference signal based on the first group identifier. Therefore, this helps reduce overheads of a pilot (that is, the foregoing first reference signal), and helps save a time-frequency resource for receiving the foregoing pilot.

In this implementation, determining the time-frequency resource of the first reference signal based on the group identifier (for example, the first group identifier) can avoid signaling indication overheads of the time-frequency resource. In addition, different group identifiers may correspond to different time-frequency resources, so that interference between different groups of first reference signals can be avoided in a time-frequency division manner, to improve communication performance.

In this implementation, determining the sequence of the first reference signal based on the group identifier (for example, the first group identifier) can avoid signaling indication overheads of the sequence. In addition, different group identifiers may correspond to different sequences, so that interference randomization can be implemented on the sequence, to improve communication performance.

In a possible implementation, a cell in which the first communication apparatus is located includes at least two user groups, and the at least two user groups include the first user group.

The first communication apparatus may belong to the first user group, or may not belong to the first user group.

In this implementation, a user group is different from a cell. Although the user group includes one or more terminal devices, and one cell also includes a plurality of terminal devices, the user group and the cell are different concepts. Generally, one cell includes at least two user groups, and each user group includes at least two terminal devices. Optionally, one terminal device may belong to two user groups. For example, a terminal device 1 is located in a cell 1, and the terminal device 1 belongs to a user group 1 and a user group 2.

In this implementation, terminal devices in a cell are further divided into user groups, so that user group-level communication can be implemented. Compared with terminal device-level communication, the user group-level communication can improve communication efficiency. Compared with cell-level communication, the user group-level communication can provide different communication manners based on different user groups, to improve communication performance.

In a possible implementation, the method further includes: The first communication apparatus determines the time-frequency resource of the first reference signal based on the first group identifier.

In this implementation, the first group identifier can implicitly indicate the time-frequency resource of the first reference signal. For example, the first communication apparatus stores a correspondence between a group identifier and a time-frequency resource of a reference signal, and the second communication apparatus also stores the correspondence between a group identifier and a time-frequency resource of a reference signal. After the second communication apparatus sends the first group identifier to the first communication apparatus, the first communication apparatus may determine, based on the correspondence, the time-frequency resource corresponding to the first group identifier.

In a possible implementation, the time-frequency resource of the first reference signal is located in a first symbol in time domain, and the first symbol includes only a resource element of a reference signal.

A resource element (resource element, RE) may be a smallest resource unit in a physical resource similar to that in LTE or NR. One resource element RE occupies one symbol in time domain, and occupies one subcarrier in frequency domain.

In this implementation, a specific symbol (for example, the first symbol) is reserved in time-frequency domain, time-frequency resources in the specific symbol are all used to receive a reference signal, and a time-frequency resource of a control channel, a time-frequency resource of a data channel, and the like are not set in the symbol. For example, a time-frequency resource in a first frequency band of the first symbol includes only a resource element of the reference signal. The first frequency band may be an entire bandwidth, or may be a segment of frequency domain resources in the bandwidth. This implementation helps the first communication apparatus quickly search for a time-frequency resource (for example, the time-frequency resource of the first reference signal) for receiving the reference signal, and helps reduce complexity of indicating, by the second communication apparatus, the time-frequency resource of the reference signal to the first communication apparatus. For example, the first communication apparatus knows that the time-frequency resource for receiving the first reference signal is in the first symbol, and the second communication apparatus may send, to the first communication apparatus, information indicating a frequency domain range, but may not send, to the first communication apparatus, information indicating a time domain range. Therefore, this helps reduce signaling overheads.

In a possible implementation, the first symbol is located before a symbol on which the control channel is located.

For example, the first symbol is a symbol preceding the symbol on which the control channel is located, or the first symbol is a $1^{st}$ symbol of the symbol on which the control channel is located.

A symbol is an indicator reflecting a time domain, that is, an indicator that can reflect time. If the first symbol is the symbol preceding the symbol on which the control channel is located, or the first symbol is the $1^{st}$ symbol of the symbol on which the control channel is located, it indicates that the first communication apparatus preferentially receives the first reference signal on the time-frequency resource of the first reference signal in the first symbol, to perform an operation such as channel estimation. In other words, an operation of receiving the first reference signal and performing channel estimation by the first communication apparatus is not later than an operation of receiving the control channel by the first communication apparatus. This helps the first communication apparatus use a channel estimation result to demodulate the control channel and/or determine the channel state information as early as possible. This helps shorten a delay of reporting the channel state information by the first communication apparatus. Optionally, this helps the first communication apparatus perform the step of demodulating the control channel as soon as possible, and shortens time required for successfully receiving the control channel by the first communication apparatus.

In a possible implementation, a subcarrier spacing of the first reference signal is the same as a subcarrier spacing of a control channel of the first communication apparatus, and the subcarrier spacing of the first reference signal is different from a subcarrier spacing of a data channel of the first communication apparatus; a subcarrier spacing of the first reference signal is different from a subcarrier spacing of a control channel of the first communication apparatus, and the subcarrier spacing of the first reference signal is the same as a subcarrier spacing of a data channel of the first communication apparatus; or a subcarrier spacing of the first reference signal is different from a subcarrier spacing of a control channel of the first communication apparatus, and the subcarrier spacing of the first reference signal is different from a subcarrier spacing of a data channel of the first communication apparatus.

In this implementation, the subcarrier spacing of the first reference signal, the subcarrier spacing of the control channel of the first communication apparatus, and the subcarrier spacing of the data channel of the first communication apparatus are not completely the same or are completely different. However, in the NR standard, the subcarrier spacing of the first reference signal, the subcarrier spacing of the control channel of the first communication apparatus, and the subcarrier spacing of the data channel of the first communication apparatus are completely the same. In this implementation, based on an idea of designing the time-frequency resource of the first reference signal, a plurality of possible implementations of the time-frequency resource of the first reference signal are provided.

In a possible implementation, the subcarrier spacing of the first reference signal is greater than the subcarrier spacing of the control channel of the first communication apparatus; and/or the subcarrier spacing of the first reference signal is greater than the subcarrier spacing of the data channel of the first communication apparatus.

The subcarrier spacing of the control channel of the first communication apparatus may be the same as or different from the subcarrier spacing of the data channel of the first communication apparatus.

A larger subcarrier spacing of the first reference signal indicates shorter duration of the time-frequency resource of the first reference signal in time domain, and the first communication apparatus may receive the first reference signal within shorter time, to quickly perform channel estimation. Therefore, this helps reduce a processing delay. In addition, a larger subcarrier spacing of the first reference signal indicates a shorter symbol occupied by the resource element RE of the first reference signal and a wider occupied frequency domain. This helps obtain channel state information in wide frequency domain with low pilot overheads, and helps reduce pilot overheads.

In a possible implementation, the method further includes: The first communication apparatus receives first time-frequency resource information, where the first time-frequency resource information indicates the time-frequency resource of the first reference signal.

Optionally, the first communication apparatus determines the time-frequency resource of the first reference signal based on the first group identifier and the first time-frequency resource information.

In this implementation, the first communication apparatus may not store a correspondence between the first group identifier and the time-frequency resource of the first reference signal. Therefore, the second communication apparatus needs to send, to the first communication apparatus, information (namely, the first time-frequency resource information) indicating the time-frequency resource of the first reference signal, so that the first communication apparatus determines the time-frequency resource of the first reference signal based on the first group identifier and the first time-frequency resource information.

It should be understood that the first communication apparatus may obtain the first group identifier and the first time-frequency resource information by using different messages, or the first communication apparatus may obtain the first group identifier and the first time-frequency resource information by using a same message.

In a possible implementation, the first time-frequency resource information includes at least one of the following: information indicating a quantity of resource elements between resource elements of the first reference signal in one resource block; information indicating a quantity of resource elements of the first reference signal in one resource block; or a pattern identifier of the time-frequency resource of the first reference signal.

In a possible implementation, the method further includes: The first communication apparatus determines the sequence of the first reference signal based on the first group identifier.

In this implementation, the first communication apparatus determines the sequence of the first reference signal based on the first group identifier. However, in the NR standard, a terminal device calculates a sequence of a reference signal based on a user identifier (for example, a temporary identifier C-RNTI of the terminal device) or a cell identifier. Determining the sequence of the first reference signal based on the group identifier (for example, the first group identifier) can avoid signaling indication overheads of the sequence. In addition, different group identifiers may correspond to different sequences, so that interference randomization can be implemented on the sequence, to improve communication performance.

In a possible implementation, that the first communication apparatus determines the sequence of the first reference signal based on the first group identifier includes: The first communication apparatus calculates a first offset based on the first group identifier, where the first offset is an offset of a resource element of the first reference signal in one resource block; and the first communication apparatus calculates the sequence of the first reference signal based on the first group identifier and the first offset.

In this implementation, the first communication apparatus calculates a first offset in a process of calculating the sequence of the first reference signal. However, in the NR standard, the terminal device does not calculate an offset when calculating a sequence of a reference signal. Sequences of a reference signal that correspond to different group identifiers may be distinguished by using the first offset, to avoid interference between reference signals of different user groups, and improve communication performance.

In a possible implementation, the channel state information includes first channel state information and/or second channel state information; and the first channel state information includes instantaneous channel state information determined by the first communication apparatus based on the first reference signal, and the second channel state information includes average channel state information determined by the first communication apparatus based on the first reference signal.

The instantaneous channel state information is channel state information measured by the first communication apparatus on a time domain unit (for example, a symbol of the time-frequency resource of the first reference signal). The average channel state information is an average result of a plurality of pieces of channel state information that are respectively measured by the first communication apparatus on a plurality of time domain units. The plurality of time domain units may form one time-domain filtering window.

In this implementation, the channel state information fed back by the first communication apparatus to the second communication apparatus is the average channel state information, or may be the instantaneous channel state information, or may include the average channel state information and the instantaneous channel state information. In this way, CSI reporting with different measurement requirements can be implemented, and accuracy of obtaining the channel state information is improved, to improve communication performance.

In a possible implementation, the channel state information includes at least one of the following: a channel quality indicator (channel quality indicator, CQI) corresponding to the time-frequency resource of the first reference signal; a modulation and coding scheme MCS corresponding to the time-frequency resource of the first reference signal; or information indicating the time-frequency resource corresponding to the first reference signal.

The channel quality indicator CQI corresponding to the time-frequency resource of the first reference signal may be a channel quality indicator CQI determined for a time domain unit, that is, an instantaneous channel quality indicator CQI, or may be an average result of a plurality of channel quality indicators CQIs determined for a plurality of time domain units, that is, an average channel quality indicator CQI.

The modulation and coding scheme MCS corresponding to the time-frequency resource of the first reference signal may be a modulation and coding scheme MCS determined for a time domain unit, that is, an instantaneous modulation and coding scheme MCS, or may be an average result of a plurality of modulation and coding schemes MCSs determined for a plurality of time domain units, that is, an average modulation and coding scheme MCS.

In a possible implementation, the information indicating the time-frequency resource corresponding to the first reference signal may be at least one of the following: a control channel resource set identifier corresponding to the first reference signal, an identifier of the first reference signal, the first group identifier, and an identifier of a first control channel element CCE group corresponding to the first reference signal.

In a possible implementation, the first communication apparatus belongs to the first user group.

In a possible implementation, the method further includes: The first communication apparatus receives a second reference signal, where the second reference signal is used by a terminal device in a second user group to perform channel estimation on a control channel, and the second user group includes at least two terminal devices. Optionally, the second user group does not include the first communication apparatus. That the first communication apparatus determines channel state information based on the first reference signal includes: The first communication apparatus determines the channel state information based on the first reference signal and the second reference signal.

For example, the first communication apparatus determines third channel state information based on the first reference signal, where the third channel state information includes average channel state information determined by the first communication apparatus based on the first reference signal; and the first communication apparatus determines fourth channel state information based on the second reference signal, where the fourth channel state information includes average channel state information determined by the first communication apparatus based on the second reference signal.

In this implementation, the first communication apparatus may receive a plurality of reference signals (for example, the first reference signal and the second reference signal), and the plurality of reference signals correspond to different user groups. Certainly, the first communication apparatus may belong to either of the foregoing two user groups (that is, the first user group corresponding to the first reference signal and the second user group corresponding to the second reference signal), or the first communication apparatus may not belong to the foregoing two user groups. In this case, the first communication apparatus can separately perform channel estimation based on the first reference signal and the second reference signal to determine channel state information (for example, the third channel state information determined based on the first reference signal and the fourth channel state information determined based on the second reference signal). Then, the first communication apparatus may report, to the second communication apparatus according to a preset rule, a plurality of pieces of channel state information that are respectively determined based on the plurality of reference signals. The preset rule may be that the first communication apparatus is required to report the channel state information corresponding to each reference signal to the second communication apparatus, and the second communication apparatus perform decision-making (for example, terminal pairing, that is, allocation of the terminal device to a more suitable user group) based on the foregoing plurality of pieces of channel state information. The preset rule may alternatively be that the first communication apparatus is required to report a part of the plurality of pieces of channel state information to the second communication apparatus, for example, feed back channel state information of a channel with good channel quality to the second communication apparatus.

In a possible implementation, that the first communication apparatus sends the channel state information includes: The first communication apparatus sends third channel state information to the second communication apparatus.

Optionally, a channel state indicated by the third channel state information is better than a channel state indicated by fourth channel state information.

In this implementation, the first communication apparatus can decide channel state information to be fed back to the second communication apparatus. In a possible implementation, the first communication apparatus feeds back the determined channel state information with a better channel state to the second communication apparatus.

In a possible implementation, the channel state information includes at least one of the following: a channel quality indicator CQI corresponding to a time-frequency resource of the second reference signal; a modulation and coding scheme MCS corresponding to a time-frequency resource of the second reference signal; or information indicating a time-frequency resource corresponding to the second reference signal.

In a possible implementation, the information indicating the time-frequency resource corresponding to the second reference signal may be at least one of the following: a control channel resource set identifier corresponding to the second reference signal, an identifier of the second reference signal, a second group identifier, and an identifier of a third control channel element CCE group corresponding to the second reference signal.

In a possible implementation, the method further includes: The first communication apparatus receives first indication information, where the first indication information indicates a time-frequency resource for feeding back the first channel state information and/or the second channel state information. That the first communication apparatus sends the channel state information includes: The first communication apparatus feeds back the first channel state information and the second channel state information on the time-frequency resource indicated by the first indication information.

In this implementation, the second communication apparatus can indicate a time-frequency resource to be used by the first communication apparatus to feed back the channel state information. The second communication apparatus may separately indicate a time-frequency resource for feeding back average channel state information, the second communication apparatus may separately indicate a time-frequency resource for feeding back instantaneous channel state information, or the second communication apparatus may indicate a time-frequency resource to be used by the first communication apparatus to feed back both instantaneous channel state information and average channel state information to the second communication apparatus.

Optionally, the first communication apparatus feeds back the instantaneous channel state information and the average channel state information on a same time-frequency resource. That is, the first communication apparatus may feed back both the instantaneous channel state information and the average channel state information, to reduce a delay of feeding back the channel state information, and improve communication performance.

In a possible implementation, the method further includes: The first communication apparatus receives second indication information and/or third indication information, where the second indication information indicates the first communication apparatus to feed back the first channel state information, and the third indication information indicates the first communication apparatus to feed back the second channel state information.

Optionally, the second indication information and the third indication information may be one piece of information. That is, the first communication apparatus determines, based on the information, to feed back the first channel state information and/or the second channel state information.

In a possible implementation, the method further includes: The first communication apparatus receives second indication information and/or third indication information, where the second indication information indicates the first communication apparatus to feed back average channel state information, and the third indication information indicates the first communication apparatus to feed back instantaneous channel state information.

Optionally, the second indication information and the third indication information may be one piece of information. That is, the first communication apparatus determines, based on the information, to feed back the average channel state information and/or the instantaneous channel state information.

In this implementation, the second indication information may indicate to feed back the average channel state information determined based on the first reference signal and average channel state information determined based on another reference signal. This helps the second communication apparatus indicate, based on one piece of indication information, the terminal device to feed back average channel state information determined based on one or more reference signals, and helps reduce signaling sent by the second communication apparatus to the first communication apparatus. Similarly, the third indication information may indicate to feed back the instantaneous channel state information determined based on the first reference signal and instantaneous channel state information determined based on another reference signal. This helps the second communication apparatus indicate, based on one piece of indication information, the terminal device to feed back instantaneous channel state information determined based on one or more reference signals, and helps reduce signaling sent by the second communication apparatus to the first communication apparatus.

In a possible implementation, channel state feedback configuration information further includes a time-domain filtering length, and the time-domain filtering length is used to determine a time domain unit for measuring average channel state information.

In this implementation, when the first communication apparatus needs to measure the average channel state information, the second communication apparatus may configure the time-domain filtering length for the first communication apparatus based on an actual network status, to obtain accurate channel state information, so as to improve communication performance. However, in the NR standard, the second communication apparatus does not configure the time-domain filtering length for the first communication apparatus, and in the NR standard, the second communication apparatus indicates only whether the first communication apparatus needs to perform time-domain filtering.

In a possible implementation, the method further includes: The first communication apparatus performs channel estimation based on the first reference signal, and blindly detects a control channel. The channel state information further includes an identifier of a second control channel element CCE group, a channel quality indicator CQI corresponding to a second control channel element CCE group, and/or a modulation and coding scheme MCS corresponding to a second control channel element CCE group.

In this implementation, the first reference signal may be used for channel estimation of the control channel. When calculating the channel state information, the first communication apparatus may further blindly detect the control channel (for example, a downlink control channel) based on the first reference signal. When feeding back the channel state information to the second communication apparatus, the first communication apparatus can also feed back, to the second communication apparatus as a part of the channel state information, a result of channel state information determined during blind detection of the control channel. In the foregoing manner, the channel state information may be fed back with reference to a blind detection status of the control channel, so that accuracy and applicability of the channel state information can be improved, to improve communication performance.

In a possible implementation, the second control channel element CCE group includes a control channel element CCE group whose channel quality meets a preset threshold; all control channel element CCE groups determined in a blind detection procedure of the control channel; or a control channel element CCE group that is successfully blindly detected.

In a possible implementation, the first reference signal is used for channel measurement and/or interference measurement.

In this implementation, the first reference signal can be used for both channel measurement and interference measurement. In the foregoing manner, the first communication apparatus may measure interference between user groups in a same cell or measure interference between user groups in different cells based on the first reference signal, so that accuracy of the channel state information can be improved, to improve communication performance.

In a possible implementation, the first reference signal is further used by the terminal device in the first user group to demodulate a data channel.

Optionally, the demodulating a data channel may be at least one of channel estimation of the data channel, data channel demodulation, and data channel decoding.

In this implementation, the first reference signal can be used for both channel estimation of the control channel and channel estimation of the data channel. In the foregoing manner, the first reference signal can be used for both channel estimation of the control channel and channel estimation of the data channel, so that pilot overheads can be reduced, to improve communication performance. In addition, a channel estimation result of the first reference signal may continue to be used for channel estimation of the control channel and channel estimation of the data channel, and there is no need to detect another reference signal for additional channel estimation, so that processing complexity of the terminal device can be reduced, and a delay can be reduced.

In a possible implementation, the first group identifier is a group radio network temporary identifier RNTI of the first user group.

According to a second aspect, this application provides a channel state information transmission method. The method relates to a first communication apparatus and a second communication apparatus. The first communication apparatus may be a terminal device, and the second communication apparatus may be a network device. The method includes: The second communication apparatus sends a first reference signal to the first communication apparatus, where the first reference signal is used by a terminal device in a first user group to perform channel estimation on a control channel, the first reference signal is used by the first communication apparatus to determine channel state information, and the first user group includes at least two terminal devices. Then, the second communication apparatus receives the channel state information from the first communication apparatus.

The first communication apparatus may belong to the first user group, or may not belong to the first user group. It may also be understood that one of the at least two terminal devices may be the first communication apparatus, or the first communication apparatus may not exist in the at least two terminal devices. It can be learned that in a form of sending the first reference signal to the first communication apparatus, the second communication apparatus may configure the first communication apparatus to measure and report channel state information based on a reference signal corresponding to a user group to which the first communication apparatus belongs, or configure the first communication apparatus to measure and report channel state information based on a reference signal corresponding to another user group (that is, a user group that does not include the first communication apparatus). This is not specifically limited herein.

In an NR standard, a reference signal (for example, a demodulation reference signal DMRS of a physical downlink control channel PDCCH) used for channel estimation of a control channel is different from a reference signal (for example, a CSI-RS) used for measurement and reporting of channel state information. However, in this application, the first reference signal can be used for both channel estimation of the control channel and measurement and reporting of the channel state information. Therefore, the solution for transmitting the channel state information provided in this application helps reduce pilot overheads. In addition, the first reference signal received by the first communication apparatus is a reference signal shared by the terminal devices in the first user group, and is not only a reference signal configured for a terminal device. Therefore, pilot overheads can be reduced.

In a possible implementation, the method further includes: The second communication apparatus sends a first group identifier to the first communication apparatus, where the first group identifier identifies the first user group, and the first group identifier is used to determine a time-frequency resource of the first reference signal and/or a sequence of the first reference signal.

Determining the time-frequency resource of the first reference signal may be understood as determining a time-frequency domain position of the time-frequency resource for receiving the first reference signal, for example, a symbol (or symbols) in time domain and a subcarrier (or subcarriers) in frequency domain in which the time-frequency resource for receiving the first reference signal is located. Therefore, the first communication apparatus can receive the first reference signal on the time-frequency resource of the first reference signal.

It should be understood that the first group identifier may be a newly defined radio network temporary identifier RNTI, for example, a group RNTI; or may be an RNTI in an NR standard as the first group identifier; or may be another character or field that can identify a group of users. This is not specifically limited herein.

In this implementation, the second communication apparatus can send the first group identifier to the first communication apparatus, so that the first communication apparatus can determine the time-frequency resource of the first reference signal and/or the sequence of the first reference signal based on the first group identifier. Because the first group identifier identifies a user group (namely, the first user group), all the terminal devices in the first user group can determine the time-frequency resource of the first reference signal and/or the sequence of the first reference signal based on the first group identifier. Therefore, this helps reduce overheads of a pilot (that is, the foregoing first reference signal), and helps save a time-frequency resource for receiving the foregoing pilot.

In this implementation, the second communication apparatus sends the first group identifier to the first communication apparatus, so that the first communication apparatus can determine the time-frequency resource of the first reference signal based on the first group identifier, to avoid signaling indication overheads of the time-frequency resource. In addition, different group identifiers may correspond to different time-frequency resources, so that interference between different groups of first reference signals can be avoided in a time-frequency division manner, to improve communication performance.

In this implementation, the second communication apparatus sends the first group identifier to the first communication apparatus, so that the first communication apparatus determines the sequence of the first reference signal based on the first group identifier, to avoid signaling indication overheads of the sequence. In addition, different group identifiers may correspond to different sequences, so that interference randomization can be implemented on the sequence, to improve communication performance.

In a possible implementation, a cell in which the first communication apparatus is located includes at least two user groups, and the at least two user groups include the first user group.

The first communication apparatus may belong to the first user group, or may not belong to the first user group.

In this implementation, a user group is different from a cell. Although the user group includes one or more terminal devices, and one cell also includes a plurality of terminal devices, the user group and the cell are different concepts. Generally, one cell includes at least two user groups, and each user group includes at least two terminal devices. Optionally, one terminal device may belong to two user groups. For example, a terminal device 1 is located in a cell 1, and the terminal device 1 belongs to a user group 1 and a user group 2.

In this implementation, terminal devices in a cell are further divided into user groups, so that user group-level communication can be implemented. Compared with terminal device-level communication, the user group-level communication can improve communication efficiency. Compared with cell-level communication, the user group-level communication can provide different communication manners based on different user groups, to improve communication performance.

In a possible implementation, the time-frequency resource of the first reference signal is located in a first symbol in time domain, and the first symbol includes only a resource element of a reference signal.

A resource element RE may be a smallest resource unit in a physical resource in LTE or NR. One resource element RE occupies one symbol in time domain, and occupies one subcarrier in frequency domain.

In this implementation, a specific symbol (for example, the first symbol) is reserved in time-frequency domain, time-frequency resources in the specific symbol are all used to receive a reference signal, and a time-frequency resource of a control channel, a time-frequency resource of a data channel, and the like are not set in the symbol. For example, a time-frequency resource in a first frequency band of the first symbol includes only a resource element of the reference signal. The first frequency band may be an entire bandwidth, or may be a segment of frequency domain resources in the bandwidth. This implementation helps the first communication apparatus quickly search for a time-frequency resource (for example, the time-frequency resource of the first reference signal) for receiving the reference signal, and helps reduce complexity of indicating, by the second communication apparatus, the time-frequency resource of the reference signal to the first communication apparatus. For example, the first communication apparatus knows that the time-frequency resource for receiving the first reference signal is in the first symbol, and the second communication apparatus may send, to the first communication apparatus, information indicating a frequency domain range, but may not send, to the first communication apparatus, information indicating a time domain range. Therefore, this helps reduce signaling overheads.

In a possible implementation, the first symbol is located before a symbol on which the control channel is located.

For example, the first symbol is a symbol preceding the symbol on which the control channel is located, or the first symbol is a 1st symbol of the symbol on which the control channel is located.

A symbol is an indicator reflecting a time domain, that is, an indicator that can reflect time. If the first symbol is the symbol preceding the symbol on which the control channel is located, or the first symbol is the 1st symbol of the symbol on which the control channel is located, it indicates that the first communication apparatus preferentially receives the first reference signal on the time-frequency resource of the first reference signal in the first symbol, to perform an operation such as channel estimation. In other words, an operation of receiving the first reference signal and performing channel estimation by the first communication apparatus is not later than an operation of receiving the control channel by the first communication apparatus. This helps the first communication apparatus use a channel estimation result to demodulate the control channel and/or determine the channel state information as early as possible. This helps shorten a delay of reporting the channel state information by the first communication apparatus. Optionally, this helps the first communication apparatus perform the step of demodulating the control channel as soon as possible, and shortens time required for successfully receiving the control channel by the first communication apparatus.

In a possible implementation, a subcarrier spacing of the first reference signal is the same as a subcarrier spacing of a control channel of the first communication apparatus, and the subcarrier spacing of the first reference signal is different from a subcarrier spacing of a data channel of the first communication apparatus; a subcarrier spacing of the first reference signal is different from a subcarrier spacing of a control channel of the first communication apparatus, and the subcarrier spacing of the first reference signal is the same as a subcarrier spacing of a data channel of the first communication apparatus; or a subcarrier spacing of the first reference signal is different from a subcarrier spacing of a control channel of the first communication apparatus, and the subcarrier spacing of the first reference signal is different from a subcarrier spacing of a data channel of the first communication apparatus.

In this implementation, the subcarrier spacing of the first reference signal, the subcarrier spacing of the control channel of the first communication apparatus, and the subcarrier spacing of the data channel of the first communication apparatus are not completely the same or are completely different. However, in the NR standard, the subcarrier spacing of the first reference signal, the subcarrier spacing of the control channel of the first communication apparatus, and the subcarrier spacing of the data channel of the first communication apparatus are completely the same. In this implementation, based on an idea of designing the time-frequency resource of the first reference signal, a plurality of possible implementations of the time-frequency resource of the first reference signal are provided.

In a possible implementation, the subcarrier spacing of the first reference signal is greater than the subcarrier spacing of the control channel of the first communication apparatus; and/or the subcarrier spacing of the first reference signal is greater than the subcarrier spacing of the data channel of the first communication apparatus.

The subcarrier spacing of the control channel of the first communication apparatus may be the same as or different from the subcarrier spacing of the data channel of the first communication apparatus.

In this implementation, a larger subcarrier spacing of the first reference signal indicates shorter duration of the time-frequency resource of the first reference signal in time domain, and the first communication apparatus may receive the first reference signal within shorter time, to quickly perform channel estimation. Therefore, this helps reduce a processing delay. In addition, a larger subcarrier spacing of the first reference signal indicates a shorter symbol occupied by the resource element RE of the first reference signal and a wider occupied frequency domain. This helps obtain channel state information in wide frequency domain with low pilot overheads, and helps reduce pilot overheads.

In a possible implementation, the method further includes: The second communication apparatus sends first time-frequency resource information to the first communication apparatus, where the first time-frequency resource information indicates the time-frequency resource of the first reference signal.

In this implementation, the first communication apparatus may not store a correspondence between the first group identifier and the time-frequency resource of the first reference signal. Therefore, the second communication apparatus needs to send, to the first communication apparatus, information (namely, the first time-frequency resource information) indicating the time-frequency resource of the first reference signal, so that the first communication apparatus determines the time-frequency resource of the first reference signal based on the first group identifier and the first time-frequency resource information.

It should be understood that the second communication apparatus may send the first group identifier and the first time-frequency resource information to the first communication apparatus by using different messages, or the second communication apparatus may send the first group identifier and the first time-frequency resource information to the first communication apparatus by using a same message.

In a possible implementation, the first time-frequency resource information includes at least one of the following: information indicating a quantity of resource elements between resource elements of the first reference signal in one resource block; information indicating a quantity of resource elements of the first reference signal in one resource block; or a pattern identifier of the time-frequency resource of the first reference signal.

In a possible implementation, the channel state information includes first channel state information and/or second channel state information; and the first channel state information includes instantaneous channel state information determined by the first communication apparatus based on the first reference signal, and the second channel state information includes average channel state information determined by the first communication apparatus based on the first reference signal.

The instantaneous channel state information is channel state information measured by the first communication apparatus on a time domain unit (for example, a symbol of the time-frequency resource of the first reference signal). The average channel state information is an average result of a plurality of pieces of channel state information that are respectively measured by the first communication apparatus on a plurality of time domain units. The plurality of time domain units may form one time-domain filtering window.

In this implementation, the channel state information fed back by the first communication apparatus to the second communication apparatus is the average channel state information, or may be the instantaneous channel state information, or may include the average channel state information and the instantaneous channel state information. In this way, CSI reporting with different measurement requirements can be implemented, and accuracy of obtaining the channel state information is improved, to improve communication performance.

In a possible implementation, the channel state information includes at least one of the following: a channel quality indicator CQI corresponding to the time-frequency resource of the first reference signal; a modulation and coding scheme MCS corresponding to the time-frequency resource of the first reference signal; or information indicating the time-frequency resource corresponding to the first reference signal.

The channel quality indicator CQI corresponding to the time-frequency resource of the first reference signal may be a channel quality indicator CQI determined for a time domain unit, that is, an instantaneous channel quality indicator CQI, or may be an average result of a plurality of channel quality indicators CQIs determined for a plurality of time domain units, that is, an average channel quality indicator CQI.

The modulation and coding scheme MCS corresponding to the time-frequency resource of the first reference signal may be a modulation and coding scheme MCS determined for a time domain unit, that is, an instantaneous modulation and coding scheme MCS, or may be an average result of a plurality of modulation and coding schemes MCSs determined for a plurality of time domain units, that is, an average modulation and coding scheme MCS.

In a possible implementation, the information indicating the time-frequency resource corresponding to the first reference signal may be at least one of the following: a control channel resource set identifier corresponding to the first reference signal, an identifier of the first reference signal, the first group identifier, and an identifier of a first control channel element CCE group corresponding to the first reference signal.

In a possible implementation, the first communication apparatus belongs to the first user group.

In a possible implementation, the method further includes: The second communication apparatus sends a second reference signal to the first communication apparatus, where the second reference signal is used by a terminal device in a second user group to perform channel estimation on a control channel, and the second user group includes at least two terminal devices. Optionally, the second user group does not include the first communication apparatus.

In this implementation, the second communication apparatus may send a plurality of reference signals (for example, the first reference signal and the second reference signal) to the first communication apparatus, so that the first communication apparatus can respectively feed back channel state information based on the plurality of reference signals.

The plurality of reference signals correspond to different user groups. The first communication apparatus may belong to either of the foregoing two user groups (that is, the first user group corresponding to the first reference signal and the second user group corresponding to the second reference signal), or the first communication apparatus may not belong to the foregoing two user groups.

The channel state information received by the second communication apparatus from the first communication apparatus may be a plurality of pieces of channel state information determined, according to a preset rule, based on the plurality of reference signals. The preset rule may be that the first communication apparatus is required to report the channel state information corresponding to each reference signal to the second communication apparatus, and the second communication apparatus perform decision-making (for example, terminal pairing, that is, allocation of the terminal device to a more suitable user group) based on the foregoing plurality of pieces of channel state information. The preset rule may alternatively be that the first communication apparatus is required to report a part of the plurality of pieces of channel state information to the second communication apparatus, for example, feed back channel state information of a channel with good channel quality to the second communication apparatus.

In a possible implementation, that the second communication apparatus receives the channel state information from the first communication apparatus includes: The second communication apparatus receives the channel state information from the first communication apparatus, where the channel state information is channel state information determined by the first communication apparatus based on the first reference signal and the second reference signal.

In a possible implementation, that the second communication apparatus receives the channel state information from the first communication apparatus includes: The second communication apparatus receives third channel state information from the first communication apparatus.

Optionally, a channel state indicated by the third channel state information is better than a channel state indicated by fourth channel state information.

For example, the second communication apparatus receives the third channel state information from the first communication apparatus, where the channel state indicated by the third channel state information is better than the channel state indicated by the fourth channel state information. The third channel state information is average channel state information determined by the first communication apparatus based on the first reference signal, and the fourth channel state information is average channel state information determined by the first communication apparatus based on the second reference signal.

In this implementation, the first communication apparatus can decide channel state information to be fed back to the second communication apparatus. Generally, the first communication apparatus feeds back the determined channel state information with a better channel state to the second communication apparatus.

In a possible implementation, the channel state information includes at least one of the following: a channel quality indicator CQI corresponding to a time-frequency resource of the second reference signal; a modulation and coding scheme MCS corresponding to a time-frequency resource of the second reference signal; or information indicating a time-frequency resource corresponding to the second reference signal.

In a possible implementation, the information indicating the time-frequency resource corresponding to the second reference signal may be at least one of the following: a control channel resource set identifier corresponding to the second reference signal, an identifier of the second reference signal, a second group identifier, and an identifier of a third control channel element CCE group corresponding to the second reference signal.

In a possible implementation, the method further includes: The second communication apparatus sends first indication information to the first communication apparatus, where the first indication information indicates a time-frequency resource for feeding back the first channel state information and/or the second channel state information. That the second communication apparatus receives the channel state information from the first communication apparatus includes: The second communication apparatus receives the first channel state information and the second channel state information from the first communication apparatus on the time-frequency resource indicated by the first indication information.

In this implementation, the second communication apparatus can indicate a time-frequency resource to be used by the first communication apparatus to feed back the channel state information. The second communication apparatus may separately indicate a time-frequency resource for feeding back average channel state information, the second communication apparatus may separately indicate a time-frequency resource for feeding back instantaneous channel state information, or the second communication apparatus may indicate a time-frequency resource to be used by the first communication apparatus to feed back both instantaneous channel state information and average channel state information to the second communication apparatus.

Optionally, the second communication apparatus indicates, by using the first indication information, the first communication apparatus to feed back the instantaneous channel state information and the average channel state information on a same time-frequency resource. That is, the first communication apparatus may feed back both the instantaneous channel state information and the average channel state information, to reduce a delay of feeding back the channel state information, and improve communication performance.

In a possible implementation, the method further includes: The second communication apparatus sends second indication information and/or third indication information to the first communication apparatus, where the second indication information indicates the first communication apparatus to feed back the first channel state information, and the third indication information indicates the first communication apparatus to feed back the second channel state information.

Optionally, the second indication information and the third indication information may be one piece of information. That is, the first communication apparatus determines, based on the information, to feed back the first channel state information and/or the second channel state information.

In a possible implementation, the method further includes: The second communication apparatus sends second indication information and/or third indication information to the first communication apparatus, where the second indication information indicates the first communication apparatus to feed back average channel state information, and the third indication information indicates the first communication apparatus to feed back instantaneous channel state information.

Optionally, the second indication information and the third indication information may be one piece of information. That is, the first communication apparatus determines, based on the information, to feed back the average channel state information and/or the instantaneous channel state information.

In a possible implementation, channel state feedback configuration information further includes a time-domain filtering length, and the time-domain filtering length is used to determine a time domain unit for measuring average channel state information.

In this implementation, when the first communication apparatus needs to measure the average channel state information, the second communication apparatus may configure the time-domain filtering length for the first communication apparatus based on an actual network status, to obtain accurate channel state information, so as to improve communication performance. However, in the NR standard, the second communication apparatus does not configure the time-domain filtering length for the first communication apparatus.

In a possible implementation, the channel state information further includes a channel estimation result of the control channel. The channel state information further includes an identifier of a second control channel element CCE group, a channel quality indicator CQI corresponding to a second control channel element CCE group, and/or a modulation and coding scheme MCS corresponding to a second control channel element CCE group.

In this implementation, the first reference signal may be used for channel estimation of the control channel. When calculating the channel state information, the first communication apparatus may further blindly detect the control channel (for example, a downlink control channel) based on the first reference signal. When feeding back the channel state information to the second communication apparatus, the first communication apparatus can also feed back, to the second communication apparatus as a part of the channel state information, a result of channel state information determined during blind detection of the control channel. In the foregoing manner, the channel state information may be fed back with reference to a blind detection status of the control channel, so that accuracy and applicability of the channel state information can be improved, to improve communication performance.

In a possible implementation, the second control channel element CCE group includes a control channel element CCE group whose channel quality meets a preset threshold; all control channel element CCE groups determined in a blind detection procedure of the control channel; or a control channel element CCE group that is successfully blindly detected.

In a possible implementation, the first reference signal is used for channel measurement and/or interference measurement.

In this implementation, the first reference signal can be used for both channel measurement and interference measurement. In the foregoing manner, the first communication apparatus may measure interference between user groups in a same cell or measure interference between user groups in different cells based on the first reference signal, so that accuracy of the channel state information can be improved, to improve communication performance.

In a possible implementation, the first reference signal is further used by the terminal device in the first user group to demodulate a data channel.

Optionally, the demodulating a data channel may be at least one of channel estimation of the data channel, data channel demodulation, and data channel decoding.

In this implementation, the first reference signal can be used for both channel estimation of the control channel and channel estimation of the data channel. In the foregoing manner, the first reference signal can be used for both channel estimation of the control channel and channel estimation of the data channel, so that pilot overheads can be reduced, to improve communication performance. In addition, a channel estimation result of the first reference signal may continue to be used for channel estimation of the control channel and channel estimation of the data channel, and there is no need to detect another reference signal for additional channel estimation, so that processing complexity of the terminal device can be reduced, and a delay can be reduced.

In a possible implementation, the first group identifier is a group radio network temporary identifier RNTI of the first user group.

It should be noted that this embodiment of this application has a plurality of other specific implementations. For details, refer to the specific implementations of the first aspect and beneficial effects of the first aspect. Details are not described herein again.

According to a third aspect, this application provides a first communication apparatus. The first communication apparatus may be a terminal device (for example, a first terminal device described below), or may be an apparatus (for example, a chip, a chip system, or a circuit) in the terminal device, or may be an apparatus that can be used together with the terminal device.

In a possible implementation, the first communication apparatus may include modules or units that are in one-to-one correspondence with the methods/operations/steps/actions described in the first aspect. The modules or the units may be implemented by a hardware circuit, software, or a combination of a hardware circuit and software.

In a possible implementation, the first communication apparatus includes a receiving module, a processing module, and a sending module. The receiving module is configured to receive a first reference signal, where the first reference signal is used by a terminal device in a first user group to perform channel estimation on a control channel, and the first user group includes at least two terminal devices. The processing module is configured to determine channel state information based on the first reference signal. The sending module is configured to send the channel state information.

The first communication apparatus may belong to the first user group, or may not belong to the first user group. It may also be understood that one of the at least two terminal devices may be the first communication apparatus, or the first communication apparatus may not exist in the at least two terminal devices. Therefore, the processing module may measure and report channel state information based on a reference signal corresponding to a user group to which the first communication apparatus belongs, or may measure and report channel state information based on a reference signal corresponding to another user group (that is, a user group that does not include the first communication apparatus). This is not specifically limited herein.

In NR or LTE, a reference signal (for example, a demodulation reference signal DMRS of a physical downlink control channel PDCCH) used for channel estimation of a control channel is different from a reference signal (for example, a CSI-RS) used for measurement and reporting of channel state information. However, in this application, the first reference signal can be used for both channel estimation of the control channel and measurement and reporting of the channel state information. Therefore, the solution of reporting the channel state information in this application helps reduce pilot overheads. In addition, the first reference signal received by the receiving module in the first communication apparatus is a reference signal shared by the terminal devices in the first user group, and is not only a reference signal configured for a terminal device. Therefore, pilot overheads can be reduced.

In a possible implementation, the receiving module is further configured to receive a first group identifier, where the first group identifier identifies the first user group, and the first group identifier is used to determine a time-frequency resource of the first reference signal and/or a sequence of the first reference signal.

Determining the time-frequency resource of the first reference signal may be understood as determining a time-frequency domain position of the time-frequency resource for receiving the first reference signal, for example, a symbol (or symbols) in time domain and a subcarrier (or subcarriers) in frequency domain in which the time-frequency resource for receiving the first reference signal is located. Therefore, the first communication apparatus can receive the first reference signal on the time-frequency resource of the first reference signal.

In addition, the first group identifier may be further used to determine the sequence of the first reference signal, so that the first communication apparatus can perform channel estimation by using the sequence of the first reference signal. For example, the processing module in the first communication apparatus compares the sequence of the first reference signal that is calculated based on the first group identifier with a sequence of the first reference signal that is received from the second communication apparatus, to determine a current channel state on the time-frequency resource of the first reference signal, so as to estimate a channel state (for example, a channel state of a time-frequency resource of a control channel) on an adjacent time-frequency resource (that is, a time-frequency resource adjacent to the time-frequency resource of the first reference signal).

It should be understood that the first group identifier may be a newly defined radio network temporary identifier RNTI, for example, a group RNTI; or may be an RNTI in an NR standard as the first group identifier; or may be another character or field that can identify a group of users. This is not specifically limited herein.

In this implementation, in the first communication apparatus, the receiving module can receive the first group identifier, and the processing module can identify the first group identifier and determine the time-frequency resource of the first reference signal and/or the sequence of the first reference signal based on the first group identifier. Because the first group identifier identifies a user group (namely, the first user group), all the terminal devices in the first user group can determine the time-frequency resource of the first reference signal and/or the sequence of the first reference signal based on the first group identifier. Therefore, this helps reduce overheads of a pilot (that is, the foregoing first reference signal), and helps save a time-frequency resource for receiving the foregoing pilot.

In this implementation, determining the time-frequency resource of the first reference signal based on the group identifier (for example, the first group identifier) can avoid signaling indication overheads of the time-frequency resource. In addition, different group identifiers may correspond to different time-frequency resources, so that interference between different groups of first reference signals can be avoided in a time-frequency division manner, to improve communication performance.

In this implementation, determining the sequence of the first reference signal based on the group identifier (for example, the first group identifier) can avoid signaling indication overheads of the sequence. In addition, different group identifiers may correspond to different sequences, so that interference randomization can be implemented on the sequence, to improve communication performance.

In a possible implementation, a cell in which the first communication apparatus is located includes at least two user groups, and the at least two user groups include the first user group. The first communication apparatus may belong to the first user group, or may not belong to the first user group.

The first communication apparatus may belong to the first user group, or may not belong to the first user group.

In a possible implementation, the processing module is further configured to determine the time-frequency resource of the first reference signal based on the first group identifier.

In a possible implementation, the time-frequency resource of the first reference signal is located in a first symbol in time domain, and the first symbol includes only a resource element of a reference signal.

In this implementation, a specific symbol (for example, the first symbol) is reserved in time-frequency domain, time-frequency resources in the specific symbol are all used to receive a reference signal, and a time-frequency resource of a control channel, a time-frequency resource of a data channel, and the like are not set in the symbol. For example, a time-frequency resource in a first frequency band of the first symbol includes only a resource element of the reference signal. The first frequency band may be an entire bandwidth, or may be a segment of frequency domain resources in the bandwidth. This implementation helps the processing module in the first communication apparatus quickly search for a time-frequency resource (for example, the time-frequency resource of the first reference signal) for receiving the reference signal, and helps reduce complexity of indicating, by the second communication apparatus, the time-frequency resource of the reference signal to the first communication apparatus. For example, the first communication apparatus knows that the time-frequency resource for receiving the first reference signal is in the first symbol, and the second communication apparatus may send, to the first communication apparatus, information indicating a frequency domain range, but may not send, to the first communication apparatus, information indicating a time domain range. Therefore, this helps reduce signaling overheads.

In a possible implementation, the first symbol is located before a symbol on which the control channel is located.

For example, the first symbol is a symbol preceding the symbol on which the control channel is located, or the first symbol is a $1^{st}$ symbol of the symbol on which the control channel is located.

In this implementation, the first symbol is the symbol preceding the symbol on which the control channel is located, or the first symbol is the 1st symbol of the symbol on which the control channel is located. A symbol is an indicator reflecting a time domain, that is, an indicator that can reflect time. If the first symbol is the symbol preceding the symbol on which the control channel is located, or the first symbol is the 1st symbol of the symbol on which the control channel is located, it indicates that the receiving module in the first communication apparatus preferentially receives the first reference signal on the time-frequency resource of the first reference signal in the first symbol, to perform an operation such as channel estimation. In other words, an operation of receiving the first reference signal and performing channel estimation by the receiving module is not later than an operation of receiving the control channel by the receiving module. This helps the receiving module in the first communication apparatus use a channel estimation result to demodulate the control channel and/or determine the channel state information as early as possible. This helps shorten a delay of reporting the channel state information by the first communication apparatus. Optionally, this helps the processing module in the first communication apparatus perform the step of demodulating the control channel as soon as possible, and shortens time required for successfully receiving the control channel by the receiving module in the first communication apparatus.

In a possible implementation, a subcarrier spacing of the first reference signal is the same as a subcarrier spacing of a control channel of the first communication apparatus, and the subcarrier spacing of the first reference signal is different from a subcarrier spacing of a data channel of the first communication apparatus; a subcarrier spacing of the first reference signal is different from a subcarrier spacing of a control channel of the first communication apparatus, and the subcarrier spacing of the first reference signal is the same as a subcarrier spacing of a data channel of the first communication apparatus; or a subcarrier spacing of the first reference signal is different from a subcarrier spacing of a control channel of the first communication apparatus, and the subcarrier spacing of the first reference signal is different from a subcarrier spacing of a data channel of the first communication apparatus.

In a possible implementation, the subcarrier spacing of the first reference signal is greater than the subcarrier spacing of the control channel of the first communication apparatus; and/or the subcarrier spacing of the first reference signal is greater than the subcarrier spacing of the data channel of the first communication apparatus. The subcarrier spacing of the control channel of the first communication apparatus may be the same as or different from the subcarrier spacing of the data channel of the first communication apparatus.

In a possible implementation, the receiving module is further configured to receive first time-frequency resource information, where the first time-frequency resource information indicates the time-frequency resource of the first reference signal.

Optionally, the processing module is further configured to determine the time-frequency resource of the first reference signal based on the first group identifier and the first time-frequency resource information.

In a possible implementation, the first time-frequency resource information includes at least one of the following: information indicating a quantity of resource elements between resource elements of the first reference signal in one resource block; information indicating a quantity of resource elements of the first reference signal in one resource block; or a pattern identifier of the time-frequency resource of the first reference signal.

In a possible implementation, the processing module is further configured to determine the sequence of the first reference signal based on the first group identifier.

In this implementation, the processing module in the first communication apparatus determines the sequence of the first reference signal based on the first group identifier. However, in the NR standard, a terminal device calculates a sequence of a reference signal based on a user identifier (for example, a temporary identifier C-RNTI of the terminal device) or a cell identifier. Determining the sequence of the first reference signal based on the first group identifier can avoid signaling indication overheads of the sequence. In addition, different group identifiers may correspond to different sequences, so that interference randomization can be implemented on the sequence, to improve communication performance.

In a possible implementation, the processing module is specifically configured to:
calculate a first offset based on the first group identifier, where the first offset is an offset of a resource element of the first reference signal in one resource block; and calculate the sequence of the first reference signal based on the first group identifier and the first offset.

In this implementation, the processing module in the first communication apparatus calculates a first offset in a process of calculating the sequence of the first reference signal. However, in the NR standard, the terminal device does not calculate an offset when calculating a sequence of a reference signal. Sequences of a reference signal that correspond to different group identifiers may be distinguished by using the first offset, to avoid interference between reference signals of different user groups, and improve communication performance.

In a possible implementation, the channel state information includes first channel state information and/or second channel state information; and the first channel state information includes instantaneous channel state information determined by the first communication apparatus based on the first reference signal, and the second channel state information includes average channel state information determined by the first communication apparatus based on the first reference signal.

In a possible implementation, the channel state information includes at least one of the following: a channel quality indicator CQI corresponding to the time-frequency resource of the first reference signal; a modulation and coding scheme MCS corresponding to the time-frequency resource of the first reference signal; or information indicating the time-frequency resource corresponding to the first reference signal.

The channel quality indicator CQI corresponding to the time-frequency resource of the first reference signal may be a channel quality indicator CQI determined for a time domain unit, that is, an instantaneous channel quality indicator CQI, or may be an average result of a plurality of channel quality indicators CQIs determined for a plurality of time domain units, that is, an average channel quality indicator CQI.

The modulation and coding scheme MCS corresponding to the time-frequency resource of the first reference signal may be a modulation and coding scheme MCS determined for a time domain unit, that is, an instantaneous modulation and coding scheme MCS, or may be an average result of a plurality of modulation and coding schemes MCSs determined for a plurality of time domain units, that is, an average modulation and coding scheme MCS.

In a possible implementation, the information indicating the time-frequency resource corresponding to the first reference signal may be at least one of the following: a control channel resource set identifier corresponding to the first reference signal, an identifier of the first reference signal, the first group identifier, and an identifier of a first control channel element CCE group corresponding to the first reference signal.

In a possible implementation, the first communication apparatus belongs to the first user group.

In a possible implementation, the receiving module is further configured to receive a second reference signal, where the second reference signal is used by a terminal device in a second user group to perform channel estimation on a control channel, and the second user group includes at least two terminal devices. Optionally, the second user group does not include the first communication apparatus.

The processing module is specifically configured to: determine third channel state information based on the first reference signal, where the third channel state information includes average channel state information determined by the first communication apparatus based on the first reference signal; and determine fourth channel state information based on the second reference signal, where the fourth channel state information includes average channel state information determined by the first communication apparatus based on the second reference signal.

In a possible implementation, the sending module is configured to send third channel state information to the second communication apparatus, where a channel state indicated by the third channel state information is better than a channel state indicated by fourth channel state information.

In a possible implementation, the channel state information includes at least one of the following: a channel quality indicator CQI corresponding to a time-frequency resource of the second reference signal; a modulation and coding scheme MCS corresponding to a time-frequency resource of the second reference signal; or information indicating a time-frequency resource corresponding to the second reference signal.

In a possible implementation, the information indicating the time-frequency resource corresponding to the second reference signal may be at least one of the following: a control channel resource set identifier corresponding to the second reference signal, an identifier of the second reference signal, a second group identifier, and an identifier of a third control channel element CCE group corresponding to the second reference signal.

In a possible implementation, the receiving module is further configured to receive first indication information, where the first indication information indicates a time-frequency resource for feeding back the first channel state information and/or the second channel state information. The sending module is specifically configured to feed back the first channel state information and the second channel state information on the time-frequency resource indicated by the first indication information.

In this implementation, the second communication apparatus can indicate a time-frequency resource to be used by the first communication apparatus to feed back the channel state information. The second communication apparatus may separately indicate a time-frequency resource for feeding back average channel state information, the second communication apparatus may separately indicate a time-frequency resource for feeding back instantaneous channel state information, or the second communication apparatus may indicate a time-frequency resource to be used by the first communication apparatus to feed back both instantaneous channel state information and average channel state information to the second communication apparatus.

Optionally, the processing module in the first communication apparatus controls the sending module to feed back the instantaneous channel state information and the average channel state information on a same time-frequency resource. That is, the processing module in the first communication apparatus may control the sending module to feed back both the instantaneous channel state information and the average channel state information, to reduce a delay of feeding back the channel state information, and improve communication performance.

In a possible implementation, the receiving module is further configured to receive second indication information and/or third indication information, where the second indication information indicates the first communication apparatus to feed back the first channel state information, and the third indication information indicates the first communication apparatus to feed back the second channel state information.

In a possible implementation, the channel state feedback configuration information further includes a time-domain filtering length, and the time-domain filtering length is used to determine the average channel state information.

In this implementation, when the processing module in the first communication apparatus measures the average channel state information, the second communication apparatus may configure the time-domain filtering length for the first communication apparatus based on an actual network status, to obtain accurate channel state information, so as to improve communication performance. However, in the NR standard, the second communication apparatus does not configure the time-domain filtering length for the first communication apparatus.

In a possible implementation, the processing module is configured to perform channel estimation based on the first reference signal, and blindly detect a control channel. The channel state information further includes an identifier of a second control channel element CCE group, a channel quality indicator CQI corresponding to a second control channel element CCE group, and/or a modulation and coding scheme MCS corresponding to a second control channel element CCE group.

In a possible implementation, the second control channel element CCE group includes a control channel element CCE group whose channel quality meets a preset threshold; all control channel element CCE groups determined in a blind detection procedure of the control channel; or a control channel element CCE group that is successfully blindly detected.

In a possible implementation, the first reference signal is used for channel measurement and/or interference measurement.

In a possible implementation, the first reference signal is further used by the terminal device in the first user group to demodulate a data channel.

Optionally, the demodulating a data channel may be at least one of channel estimation of the data channel, data channel demodulation, and data channel decoding.

In a possible implementation, the first group identifier is a group radio network temporary identifier RNTI of the first user group.

It should be noted that this embodiment of this application has a plurality of other specific implementations. For details, refer to the specific implementations of the first aspect and beneficial effects of the first aspect. Details are not described herein again.

According to a fourth aspect, this application provides a second communication apparatus. The second communication apparatus may be a network device, or may be an apparatus (for example, a chip, a chip system, or a circuit) in the network device, or may be an apparatus that can be used together with the network device.

In a possible implementation, the second communication apparatus may include modules or units that are in one-to-one correspondence with the methods/operations/steps/actions described in the second aspect. The modules or the units may be implemented by a hardware circuit, software, or a combination of a hardware circuit and software.

In a possible implementation, the second communication apparatus includes a sending module and a receiving module. The sending module is configured to send a first reference signal, where the first reference signal is used by a terminal device in a first user group to perform channel estimation on a control channel, the first reference signal is used by a first communication apparatus to determine channel state information, and the first user group includes at least two terminal devices. The receiving module is configured to receive the channel state information.

The first communication apparatus may belong to the first user group, or may not belong to the first user group. It may also be understood that one of the at least two terminal devices may be the first communication apparatus, or the first communication apparatus may not exist in the at least two terminal devices. In an NR standard, a reference signal (for example, a demodulation reference signal DMRS of a physical downlink control channel PDCCH) used for channel estimation of a control channel is different from a reference signal (for example, a CSI-RS) used for measurement and reporting of channel state information. However, in this application, the first reference signal can be used for both channel estimation of the control channel and measurement and reporting of the channel state information. Therefore, the solution of reporting the channel state information in this application helps reduce pilot overheads. In addition, the first reference signal received by the first communication apparatus is a reference signal shared by the terminal devices in the first user group, and is not only a reference signal configured for a terminal device. Therefore, pilot overheads can be reduced.

In a possible implementation, the sending module is configured to send a first group identifier to the first communication apparatus, where the first group identifier identifies the first user group, and the first group identifier is used to determine a time-frequency resource of the first reference signal and/or a sequence of the first reference signal.

In this implementation, the sending module in the second communication apparatus can send the first group identifier to the first communication apparatus, so that the first communication apparatus can determine the time-frequency resource of the first reference signal and/or the sequence of the first reference signal based on the first group identifier. Because the first group identifier identifies a user group (namely, the first user group), all the terminal devices in the first user group can determine the time-frequency resource of the first reference signal and/or the sequence of the first reference signal based on the first group identifier. Therefore, this helps reduce overheads of a pilot (that is, the foregoing first reference signal), and helps save a time-frequency resource for receiving the foregoing pilot.

In this implementation, the sending module in the second communication apparatus sends the first group identifier to the first communication apparatus, so that the first communication apparatus can determine the time-frequency resource of the first reference signal based on the first group identifier, to avoid signaling indication overheads of the time-frequency resource. In addition, different group identifiers may correspond to different time-frequency resources, so that interference between different groups of first reference signals can be avoided in a time-frequency division manner, to improve communication performance.

In this implementation, the sending module in the second communication apparatus sends the first group identifier to the first communication apparatus, so that the first communication apparatus determines the sequence of the first reference signal based on the first group identifier, to avoid signaling indication overheads of the sequence. In addition, different group identifiers may correspond to different sequences, so that interference randomization can be implemented on the sequence, to improve communication performance.

In a possible implementation, a cell in which the first communication apparatus is located includes at least two user groups, and the at least two user groups include the first user group.

The first communication apparatus may belong to the first user group, or may not belong to the first user group.

In a possible implementation, the time-frequency resource of the first reference signal is located in a first symbol in time domain, and the first symbol includes only a resource element of a reference signal.

In this implementation, a specific symbol (for example, the first symbol) is reserved in time-frequency domain, time-frequency resources in the specific symbol are all used to receive a reference signal, and a time-frequency resource of a control channel, a time-frequency resource of a data channel, and the like are not set in the symbol. For example, a time-frequency resource in a first frequency band of the first symbol includes only a resource element of the reference signal. The first frequency band may be an entire bandwidth, or may be a segment of frequency domain resources in the bandwidth. This implementation helps the first communication apparatus quickly search for a time-frequency resource (for example, the time-frequency resource of the first reference signal) for receiving the reference signal, and helps reduce complexity of indicating, by the second communication apparatus, the time-frequency resource of the reference signal to the first communication apparatus. For example, the first communication apparatus knows that the time-frequency resource for receiving the first reference signal is in the first symbol, and the second communication apparatus may send, to the first communication apparatus, information indicating a frequency domain range, but may not send, to the first communication apparatus, information indicating a time domain range. Therefore, this helps reduce signaling overheads.

In a possible implementation, the first symbol is located before a symbol on which the control channel is located.

For example, the first symbol is a symbol preceding the symbol on which the control channel is located, or the first symbol is a 1st symbol of the symbol on which the control channel is located.

In this implementation, the first symbol is the symbol preceding the symbol on which the control channel is located, or the first symbol is the 1st symbol of the symbol on which the control channel is located. A symbol is an indicator reflecting a time domain, that is, an indicator that can reflect time. If the first symbol is the symbol preceding the symbol on which the control channel is located, or the first symbol is the 1st symbol of the symbol on which the control channel is located, it indicates that the first communication apparatus preferentially receives the first reference signal on the time-frequency resource of the first reference signal in the first symbol, to perform an operation such as channel estimation. In other words, an operation of receiving the first reference signal and performing channel estimation by the first communication apparatus is not later than an operation of receiving the control channel by the first communication apparatus. This helps the first communication apparatus use a channel estimation result to demodulate the control channel and/or determine the channel state information as early as possible. This helps shorten a delay of reporting the channel state information by the first communication apparatus. Optionally, this helps the first communication apparatus perform the step of demodulating the control channel as soon as possible, and shortens time required for successfully receiving the control channel by the first communication apparatus.

In a possible implementation, a subcarrier spacing of the first reference signal is the same as a subcarrier spacing of a control channel of the first communication apparatus, and the subcarrier spacing of the first reference signal is different from a subcarrier spacing of a data channel of the first communication apparatus; a subcarrier spacing of the first reference signal is different from a subcarrier spacing of a control channel of the first communication apparatus, and the subcarrier spacing of the first reference signal is the same as a subcarrier spacing of a data channel of the first communication apparatus; or a subcarrier spacing of the first reference signal is different from a subcarrier spacing of a control channel of the first communication apparatus, and the subcarrier spacing of the first reference signal is different from a subcarrier spacing of a data channel of the first communication apparatus.

In a possible implementation, the subcarrier spacing of the first reference signal is greater than the subcarrier spacing of the control channel of the first communication apparatus; and/or the subcarrier spacing of the first reference signal is greater than the subcarrier spacing of the data channel of the first communication apparatus.

In a possible implementation, the sending module is further configured to send first time-frequency resource information to the first communication apparatus, where the first time-frequency resource information indicates the time-frequency resource of the first reference signal.

In a possible implementation, the first time-frequency resource information includes at least one of the following: information indicating a quantity of resource elements between resource elements of the first reference signal in one resource block; information indicating a quantity of resource elements of the first reference signal in one resource block; or a pattern identifier of the time-frequency resource of the first reference signal.

In a possible implementation, the channel state information includes first channel state information and/or second channel state information; and the first channel state information includes instantaneous channel state information determined by the first communication apparatus based on the first reference signal, and the second channel state information includes average channel state information determined by the first communication apparatus based on the first reference signal.

The instantaneous channel state information is channel state information measured by the first communication apparatus on a time domain unit (for example, a symbol of the time-frequency resource of the first reference signal). The average channel state information is an average result of a plurality of pieces of channel state information that are respectively measured by the first communication apparatus on a plurality of time domain units. The plurality of time domain units may form one time-domain filtering window.

In a possible implementation, the channel state information includes at least one of the following: a channel quality indicator CQI corresponding to the time-frequency resource of the first reference signal; a modulation and coding scheme MCS corresponding to the time-frequency resource of the first reference signal; or information indicating the time-frequency resource corresponding to the first reference signal.

The channel quality indicator CQI corresponding to the time-frequency resource of the first reference signal may be a channel quality indicator CQI determined for a time domain unit, that is, an instantaneous channel quality indicator CQI, or may be an average result of a plurality of channel quality indicators CQIs determined for a plurality of time domain units, that is, an average channel quality indicator CQI.

The modulation and coding scheme MCS corresponding to the time-frequency resource of the first reference signal may be a modulation and coding scheme MCS determined for a time domain unit, that is, an instantaneous modulation and coding scheme MCS, or may be an average result of a plurality of modulation and coding schemes MCSs determined for a plurality of time domain units, that is, an average modulation and coding scheme MCS.

In a possible implementation, the information indicating the time-frequency resource corresponding to the first reference signal may be at least one of the following: a control channel resource set identifier corresponding to the first reference signal, an identifier of the first reference signal, the first group identifier, and an identifier of a first control channel element CCE group corresponding to the first reference signal.

In a possible implementation, the first communication apparatus belongs to the first user group.

In a possible implementation, the sending module is configured to send a second reference signal to the first communication apparatus, where the second reference signal is used by a terminal device in a second user group to perform channel estimation on a control channel, and the second user group includes at least two terminal devices. Optionally, the second user group does not include the first communication apparatus.

In this implementation, the sending module in the second communication apparatus may send a plurality of reference signals (for example, the first reference signal and the second reference signal) to the first communication apparatus, so that the first communication apparatus can respectively feed back channel state information based on the plurality of reference signals.

The plurality of reference signals correspond to different user groups. The first communication apparatus may belong to either of the foregoing two user groups (that is, the first user group corresponding to the first reference signal and the second user group corresponding to the second reference signal), or the first communication apparatus may not belong to the foregoing two user groups.

The channel state information received by the receiving module in the second communication apparatus from the first communication apparatus may be a plurality of pieces of channel state information determined, according to a preset rule, based on the plurality of reference signals. The preset rule may be that the first communication apparatus is required to report the channel state information corresponding to each reference signal to the second communication apparatus, and the processing module in the second communication apparatus perform decision-making (for example, terminal pairing, that is, allocation of the terminal device to a more suitable user group) based on the foregoing plurality of pieces of channel state information. The preset rule may alternatively be that the first communication apparatus is required to report a part of the plurality of pieces of channel state information to the second communication apparatus, for example, feed back channel state information of a channel with good channel quality to the second communication apparatus.

In a possible implementation, the receiving module is specifically configured to receive the channel state information from the first communication apparatus, where the channel state information is channel state information determined by the first communication apparatus based on the first reference signal and the second reference signal.

In a possible implementation, the receiving module is specifically configured to receive third channel state information from the first communication apparatus.

Optionally, a channel state indicated by the third channel state information is better than a channel state indicated by second channel state information.

For example, the second communication apparatus receives the third channel state information from the first communication apparatus, where the channel state indicated by the third channel state information is better than the channel state indicated by the fourth channel state information. The third channel state information is average channel state information determined by the first communication apparatus based on the first reference signal, and the fourth channel state information is average channel state information determined by the first communication apparatus based on the second reference signal.

In a possible implementation, the channel state information includes at least one of the following: a channel quality indicator CQI corresponding to a time-frequency resource of the second reference signal; a modulation and coding scheme MCS corresponding to a time-frequency resource of the second reference signal; or information indicating a time-frequency resource corresponding to the second reference signal.

In a possible implementation, the information indicating the time-frequency resource corresponding to the second reference signal may be at least one of the following: a control channel resource set identifier corresponding to the second reference signal, an identifier of the second reference signal, a second group identifier, and an identifier of a third control channel element CCE group corresponding to the second reference signal.

In a possible implementation, the sending module is further configured to send first indication information to the first communication apparatus, where the first indication information indicates a time-frequency resource for feeding back the first channel state information and/or the second channel state information. The receiving module is specifically configured to receive the first channel state information and the second channel state information from the first communication apparatus on the time-frequency resource indicated by the first indication information.

In this implementation, the sending module in the second communication apparatus can indicate, by sending the first indication information to the first communication apparatus, a time-frequency resource to be used by the first communication apparatus to feed back the channel state information. A time-frequency resource for feeding back average channel state information may be separately indicated, a time-frequency resource for feeding back instantaneous channel state information may be separately indicated, or a time-frequency resource to be used by the first communication apparatus to feed back both instantaneous channel state information and average channel state information to the second communication apparatus may be indicated.

Optionally, the first indication information indicates the first communication apparatus to feed back the instantaneous channel state information and the average channel state information on a same time-frequency resource. That is, the first communication apparatus may feed back both the instantaneous channel state information and the average channel state information, to reduce a delay of feeding back the channel state information, and improve communication performance.

In a possible implementation, the sending module is further configured to send second indication information and/or third indication information to the first communication apparatus, where the second indication information indicates the first communication apparatus to feed back the first channel state information, and the third indication information indicates the first communication apparatus to feed back the second channel state information.

In a possible implementation, channel state feedback configuration information further includes a time-domain filtering length, and the time-domain filtering length is used to determine a time domain unit for measuring average channel state information.

In this implementation, when the first communication apparatus needs to measure the average channel state information, the processing module in the second communication apparatus may configure the time-domain filtering length for the first communication apparatus based on an actual network status, and control the sending module to send the time-domain filtering length to the first communication apparatus, to obtain accurate channel state information, so as to improve communication performance. However, in the NR standard, the second communication apparatus does not configure the time-domain filtering length for the first communication apparatus.

In a possible implementation, the channel state information further includes a channel estimation result of the control channel. The channel state information further includes an identifier of a second control channel element CCE group, a channel quality indicator CQI corresponding to a second control channel element CCE group, and/or a modulation and coding scheme MCS corresponding to a second control channel element CCE group.

In this implementation, the first reference signal may be used for channel estimation of the control channel. When calculating the channel state information, the first communication apparatus may further blindly detect the control channel (for example, a downlink control channel) based on the first reference signal. When feeding back the channel state information to the second communication apparatus, the first communication apparatus can also feed back, to the second communication apparatus as a part of the channel state information, a result of channel state information determined during blind detection of the control channel. In the foregoing manner, the channel state information may be fed back with reference to a blind detection status of the control channel, so that accuracy and applicability of the channel state information can be improved, to improve communication performance.

In a possible implementation, the second control channel element CCE group includes a control channel element CCE group whose channel quality meets a preset threshold; all control channel element CCE groups determined in a blind detection procedure of the control channel; or a control channel element CCE group that is successfully blindly detected.

In a possible implementation, the first reference signal is used for channel measurement and/or interference measurement.

In a possible implementation, the first reference signal is further used by the terminal device in the first user group to demodulate a data channel. Optionally, the demodulating a data channel may be at least one of channel estimation of the data channel, data channel demodulation, and data channel decoding.

In a possible implementation, the first group identifier is a group radio network temporary identifier RNTI of the first user group.

It should be noted that this embodiment of this application has a plurality of other specific implementations. For details, refer to the specific implementations of the first aspect and beneficial effects of the first aspect. Details are not described herein again.

According to a fifth aspect, an embodiment of this application provides a first communication apparatus. The first communication apparatus may be the terminal device (for example, the first terminal device) in the foregoing implementations, or may be a chip in the terminal device (for example, a chip in the first terminal device). The first communication apparatus may include a processing module and a transceiver module. When the first communication apparatus is the terminal device, the processing module may be a processor, and the transceiver module may be a transceiver. The terminal device may further include a storage module, and the storage module may be a memory. The storage module is configured to store instructions, and the processing module executes the instructions stored in the storage module, to enable the terminal device to perform the method according to any one of the first aspect or the implementations of the first aspect. When the first communication apparatus is the chip in the terminal device, the processing module may be a processor, and the transceiver module may be an input/output interface, a pin, a circuit, or the like. The processing module executes the instructions stored in the storage module, to enable the terminal device to perform the method according to any one of the first aspect or the implementations of the first aspect. The storage module may be a storage module (for example, a register or a cache) in the chip, or may be a storage module (for example, a read-only memory or a random access memory) that is in the terminal device and that is located outside the chip.

According to a sixth aspect, an embodiment of this application provides a second communication apparatus. The second communication apparatus may be the second communication apparatus (for example, the network device) in the foregoing implementations, or may be a chip in the second communication apparatus (for example, the network device). The second communication apparatus may include a processing module and a transceiver module. When the second communication apparatus is the network device, the processing module may be a processor, and the transceiver module may be a transceiver. The network device may further include a storage module, and the storage module may be a memory. The storage module is configured to store instructions, and the processing module executes the instructions stored in the storage module, to enable the network device to perform the method according to any one of the second aspect or the implementations of the second aspect. When the second communication apparatus is the chip in the network device, the processing module may be a processor, and the transceiver module may be an input/output interface, a pin, a circuit, or the like. The processing module executes the instructions stored in the storage module, to enable the network device to perform the method according to any one of the second aspect or the implementations of the second aspect. The storage module may be a storage module (for example, a register or a cache) in the chip, or may be a storage module (for example, a read-only memory or a random access memory) that is in the network device and that is located outside the chip.

According to a seventh aspect, this application provides a communication apparatus. The apparatus may be an integrated circuit chip. The integrated circuit chip includes a processor. The processor is coupled to a memory. The memory is configured to store a program or instructions. When the program or the instructions is/are executed by the processor, the communication apparatus is enabled to perform the method according to any one of the first aspect or the implementations of the first aspect.

According to an eighth aspect, this application provides a communication apparatus. The apparatus may be an integrated circuit chip. The integrated circuit chip includes a processor. The processor is coupled to a memory. The memory is configured to store a program or instructions. When the program or the instructions is/are executed by the processor, the communication apparatus is enabled to perform the method according to any one of the second aspect or the implementations of the second aspect.

According to a ninth aspect, an embodiment of this application provides a computer program product including instructions. When the computer program product runs on a computer, the computer is enabled to perform the method described in any one of the first aspect, the second aspect, or the implementations of the foregoing aspects.

According to a tenth aspect, an embodiment of this application provides a computer-readable storage medium, including instructions. When the instructions are run on a computer, the computer is enabled to perform the method described in any one of the first aspect, the second aspect, or the implementations of the foregoing aspects.

According to an eleventh aspect, an embodiment of this application provides a computer program. When the computer program is run on a computer, the method according to any one of the first aspect, the second aspect, or the implementations of the foregoing aspects is performed.

According to a twelfth aspect, an embodiment of this application provides a communication system. The communication system includes the first terminal device according to any one of the first aspect and the implementations of the first aspect and the network device according to any one of the second aspect and the implementations of the second aspect.

According to the foregoing technical solutions, it can be learned that embodiments of this application have the following advantages:

In this application, a first group of reference signals received by a first terminal device are reference signals shared by the terminal devices in the first user group, and the first reference signal can be used for both channel estimation of the control channel and feedback of the channel state information. Therefore, pilot overheads can be reduced.

**BRIEF DESCRIPTION OF DRAWINGS**

To describe the technical solutions in embodiments of this application more clearly, the following briefly describes the accompanying drawings for describing embodiments. It is clear that the accompanying drawings in the following description show merely some embodiments of this application.

FIG. 1 is a schematic diagram of a communication system to which this application is applicable;
FIG. 2 is a flowchart of a channel state information transmission method according to this application;
FIG. 3A shows an example of an application scenario of a reference signal;
FIG. 3B shows an example of an application scenario of a first reference signal;
FIG. 4A is an example diagram of a time-frequency resource of a first reference signal according to this application;
FIG. 4B is another example diagram of a time-frequency resource of a first reference signal according to this application;
FIG. 4C is another example diagram of a time-frequency resource of a first reference signal according to this application;
FIG. 4D is another example diagram of a time-frequency resource of a first reference signal according to this application;
FIG. 4E is another example diagram of a time-frequency resource of a first reference signal according to this application;
FIG. 4F is another example diagram of a time-frequency resource of a first reference signal according to this application;
FIG. 4G is another example diagram of a time-frequency resource of a first reference signal according to this application;
FIG. 4H is another example diagram of a time-frequency resource of a first reference signal according to this application;
FIG. 4I is another example diagram of a time-frequency resource of a first reference signal according to this application;
FIG. 4J is another example diagram of a time-frequency resource of a first reference signal according to this application;
FIG. 5A is an example diagram of an arrangement manner of resource elements REs of a first reference signal according to this application;
FIG. 5B is another example diagram of an arrangement manner of resource elements REs of a first reference signal according to this application;
FIG. 5C is another example diagram of an arrangement manner of resource elements REs of a first reference signal according to this application;
FIG. 5D is an example diagram of an aggregation level according to this application;
FIG. 6A is a schematic interaction diagram of a channel state information transmission method according to this application;
FIG. 6B is another schematic interaction diagram of a channel state information transmission method according to this application;

FIG. 6C is still another schematic interaction diagram of a channel state information transmission method according to this application;

FIG. 7 is a schematic structural diagram of a communication apparatus according to this application;

FIG. 8 is another schematic structural diagram of a communication apparatus according to this application;

FIG. 9 is still another schematic structural diagram of a communication apparatus according to this application; and

FIG. 10 is still another schematic structural diagram of a communication apparatus according to this application.

## DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application.

In the specification, the claims, and the accompanying drawings of this application, the terms "first", "second", "third", "fourth", and the like (if existent) are intended to distinguish between similar objects but do not necessarily indicate a specific order or sequence. It should be understood that the terms used in such a way are interchangeable in appropriate circumstances, so that embodiments of the present invention described herein can be implemented in other orders than the order illustrated or described herein. In addition, the terms "include" and "have" and any other variants are intended to cover a non-exclusive inclusion. For example, a process, a method, a system, a product, or a device that includes a list of steps or units is not necessarily limited to those expressly listed steps or units, but may include other steps or units not expressly listed or inherent to such a process, method, product, or device.

For ease of understanding, the following describes some terms used in embodiments of this application.

A time-frequency resource of a reference signal is a physical time-frequency resource of the reference signal. A network device can send the reference signal to a terminal device on the time-frequency resource of the reference signal, and the terminal device can receive the reference signal on the time-frequency resource of the reference signal. Generally, the time-frequency resource may be represented by using a resource block (resource block, RB) and a resource element (resource element, RE) based on different division granularities. For example, one RB occupies one symbol (that is, an orthogonal frequency division multiplexing (orthogonal frequency division multiplexing, OFDM) symbol) in time domain, and occupies 12 subcarriers in frequency domain. One RE occupies one symbol in time domain, and occupies one subcarrier in frequency domain. One RB includes 12 REs.

In embodiments of this application, a time domain measurement unit for communication may be referred to as a time unit or a time scheduling unit. The time scheduling unit or the time unit may be a radio frame (radio frame), a subframe (subframe), a slot (slot), a mini-slot (mini-slot), a sub-slot (sub-slot), or the like. The time scheduling unit or the time unit may alternatively be one or more symbols or the like. The symbol is a basic unit in time domain.

A control channel element (control channel element, CCE) may include a plurality of resource element groups (resource element groups, REGs). For example, one REG includes one RB (that is, 12 REs). Generally, different CCEs include different quantities of REGs.

An aggregation level (aggregation level) is also referred to as an aggregation degree, and indicates a quantity of CCEs that are aggregated into a PDCCH.

A search space (search space, SS) is a set of candidate control channels. Generally, a set of candidate control channels at a given aggregation level is defined as one search space. Therefore, one search space set may include a set of search spaces at one or more different aggregation levels.

For the search space, the network device may configure a control channel resource set (control channel resource set, CORESET) and a search space SS for the terminal device. For a search space set, the terminal device may detect a PDCCH candidate (PDCCH candidate). One PDCCH candidate may include one or more control channel elements (control channel elements, CCEs). An aggregation level L of the PDCCH candidate may mean that the PDCCH candidate includes L CCEs. A value of L may be 1, 2, 4, 8, 16, 32, or the like.

A demodulation reference signal (demodulation reference signal, DMRS) is a reference signal used for demodulation of a control channel and/or a reference signal used for demodulation of a data channel. Optionally, the demodulation may include at least one of channel estimation, demodulation, and decoding.

A radio network temporary identifier (radio network temporary identifier, RNTI) identifies a terminal device. For example, during actual application, the radio network temporary identifier may be used as a mask to scramble a cyclic redundancy check (cyclic redundancy check, CRC) bit sequence obtained based on a downlink control information (downlink control information, DCI) payload. A value of the RNTI may be predefined in a standard or configured by using higher layer signaling. Optionally, different RNTIs may also be used to distinguish between different DCI functions. For example, DCI scrambled by using different RNTI values may indicate time domain resources and/or frequency domain resources of physical downlink shared channels (physical downlink shared channels, PDSCHs) of different data types. For example, DCI scrambled by using an SI-RNTI is used to schedule a PDSCH carrying system information, and DCI scrambled by using a C-RNTI is used to schedule a PDSCH dedicated to the terminal device.

A cell radio network temporary identifier (cell radio network temporary identifier, C-RNTI) is a dynamic identifier allocated by the network device to the terminal device, and uniquely identifies a terminal device on an air interface of a cell.

The radio network temporary identifier of the terminal device is an identifier configured by the network device for the terminal device, and the identifier may be an identifier dedicated to the terminal device or dedicated to a terminal device group.

A group identifier identifies a group of terminal devices. For example, during actual application, the group identifier may be used as a mask to scramble a cyclic redundancy check (cyclic redundancy check, CRC) bit sequence obtained based on a group control information (downlink control information, DCI) payload. A value of the group identifier may be predefined in a standard or configured by using higher layer signaling.

Reference signal pattern (pattern): Generally, a time-frequency resource for receiving a reference signal includes a plurality of resource elements REs. The plurality of REs are distributed in one or more symbols in time domain, and are distributed in a plurality of subcarriers in frequency domain. Generally, a distribution status of positions of the plurality of REs in time-frequency domain is referred to as a pattern. In this application, the pattern of the reference signal is a distribution status of the plurality of REs for receiving the reference signal in time domain and frequency domain.

The following first describes a system architecture and an application scenario to which a channel state information transmission method provided in this application is applicable.

The channel state information transmission method provided in this application may be applied to a fourth generation (4th generation, 4G) communication system such as an LTE system or a fifth generation (5th generation, 5G) communication system such as an NR system, or may be applied to a subsequently evolved standard, for example, a sixth generation mobile information technology (6th generation mobile communication technology, 6G) system or another future communication technology (or another communication system). This is not limited in this application. In addition, the method in this application may be applied to a vehicle to everything (vehicle to everything, V2X) system, or may be applied to a hybrid networking system of 4G and 5G, a device-to-device (device-to-device, D2D) communication system, a machine-to-machine (machine-to-machine, M2M) communication system, an internet of things (internet of things, IoT), a frequency division duplex (frequency division duplex, FDD) system, a time division duplex (time division duplex, TDD) system, a satellite communication system, or another next-generation communication system, or may be applied to a non-3GPP communication system. This is not limited.

A communication method provided in embodiments of this application may be applied to various communication scenarios, for example, may be applied to one or more of the following communication scenarios: enhanced mobile broadband (enhanced mobile broadband, eMBB), ultra-reliable and low latency communication (ultra-reliable and low latency communication, URLLC), machine type communication (machine type communication, MTC), an internet of things (internet of things, IoT), a narrowband internet of things (narrowband internet of thing, NB-IoT), customer premise equipment (customer premise equipment, CPE), augmented reality (augmented reality, AR), virtual reality (virtual reality, VR), massive machine type communication (massive machine type communication, mMTC), device-to-device (device-to-device, D2D), vehicle to everything (vehicle to everything, V2X), vehicle to vehicle (vehicle to vehicle, V2V), and the like.

It should be noted that in embodiments of this application, the internet of things IoT may include one or more of the NB-IoT, the MTC, the mMTC, or the like. This is not limited.

Embodiments of this application are applicable to both a homogeneous network scenario and a heterogeneous network scenario, and impose no limitation on a transmission point. Coordinated multipoint transmission may be performed between macro base stations, between micro base stations, and between a macro base station and a micro base station. Embodiments of this application are applicable to a frequency division multiplexing system, a time division multiplexing system, a duplex system, an access and backhaul system, a relay system, and the like. Embodiments of this application are applicable to a low-frequency scenario (sub 6G), a high-frequency scenario (above 6G), terahertz, optical communication, and the like.

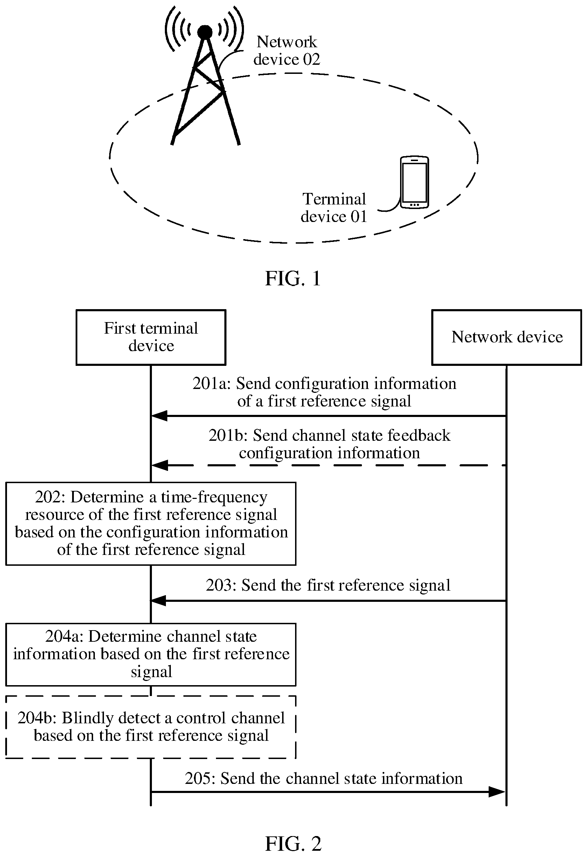

FIG. 1 is an example of a communication system to which an embodiment of this application is applicable. The system includes a terminal device 01 and a network device 02. Before data transmission is performed between the network device 02 and the terminal device 01, or in a process in which the network device 02 exchanges data with the terminal device 01, the network device 02 needs to learn of a state of a channel between the network device 02 and the terminal device 01, so that the network device 02 can adjust a data transmission policy more appropriately based on the state of the channel.

In an implementation, the network device 02 may send reference signal configuration information (for example, a CSI-RS configuration) to the terminal device 01, and send a reference signal (for example, a CSI-RS) to the terminal device 01. Then, the terminal device 01 determines, based on the CSI-RS configuration, a time-frequency resource for receiving the CSI-RS, and receives the CSI-RS on the time-frequency resource corresponding to the CSI-RS. Then, the terminal device 01 performs channel estimation based on the CSI-RS and calculates channel state information CSI, and the terminal device 01 reports the channel state information CSI to the network device 02.

It can be learned that, when reporting the CSI, the terminal device 01 needs to depend on a specific reference signal (that is, the CSI-RS) configured by the network device 02 for the terminal device 01. Because the CSI-RS needs to be separately configured by the network device 02 for the terminal device 01, when there are a plurality of terminal devices 01 in a cell, a conventional CSI measurement and reporting solution consumes a large quantity of pilot resources. In addition, a delay of conventional CSI measurement and reporting is large. Consequently, the channel state information is outdated and inaccurate, and communication performance is affected.

In this case, embodiments of this application provide a channel state information transmission method and a related communication apparatus, to configure a same reference signal (for example, a first reference signal and a second reference signal that are described below) for a group of users. In addition, the reference signal can be used for both channel estimation of a control channel and feedback of channel state information. Therefore, pilot overheads can be reduced. In addition, a delay of feeding back the channel state information can also be reduced. Specifically, detailed descriptions are provided below in an embodiment corresponding to FIG. 2.

A terminal device (for example, a first terminal device, a terminal device in a first user group, and a terminal device in a second user group that are described below) in this application may be referred to as a terminal (terminal), user equipment (user equipment, UE), a mobile station (mobile station, MS), a mobile terminal (mobile terminal, MT), or the like, and includes a device that provides voice and/or data connectivity for a user. For example, the terminal device may include a handheld device having a wireless connection function, or a processing device connected to a wireless modem. The terminal device may communicate with a core network (for example, a 4G core network (evolved packet core, EPC) or a 5G core network (5th generation core, 5GC)) by using a radio access network (radio access network, RAN), and may exchange a voice and/or data with the RAN. The terminal device may further include a wireless terminal device, a subscriber unit (subscriber unit), a subscriber station (subscriber station), a mobile radio station (mobile station), a mobile station (mobile), a remote station (remote station), an access point (access point, AP), a remote terminal device (remote terminal), an access terminal device (access terminal), a user terminal device (user terminal), a user agent (user agent), a user device (user device), or the like. In addition, the terminal device may alternatively be a vehicle-mounted terminal, for example, a telematics box (telematics box, T-Box), a domain controller (domain controller, DC), a multi-domain controller (multi-domain controller, MDC), or an on board unit (on board unit, OBU) that are integrated into a vehicle. The terminal device may alternatively be a palmtop computer, a mobile internet device (mobile internet device, MID), an eMBB terminal, a URLLC terminal, an MTC terminal, an NB-IoT terminal, a CPE terminal, a VR terminal, an AR terminal, a V2X terminal, a wireless terminal in industrial control, a wireless terminal in self-driving, a wireless terminal in telemedicine, a wireless terminal in a smart grid, a wireless terminal in transportation security, a wireless terminal in a smart city (smart city), a wireless terminal in a smart home (smart home), a sensor, a cellular phone, a cordless phone, a session initiation protocol (session initiation protocol, SIP) phone, a wireless local loop (wireless local loop, WLL) station, a personal digital assistant (personal digital assistant, PDA), a computing device or another processing device connected to a wireless modem, a vehicle-mounted terminal, a vehicle having a vehicle to vehicle (vehicle to vehicle, V2V) capability, an unmanned aerial vehicle (unmanned aerial vehicle, UAV) having an unmanned aerial vehicle to unmanned aerial vehicle communication capability, a terminal device in a 5G network, a terminal device in a future evolved public land mobile network (public land mobile network, PLMN), or the like. This is not limited. The terminal device may alternatively be a wearable device, for example, glasses, gloves, a watch, clothes, shoes, or another portable device that can be directly worn on a body or integrated into clothes or accessories of a user. In addition, the terminal device may alternatively include sensors such as an intelligent printer, a train detector, and a gas station, and main functions include: collecting data, receiving control information and downlink data of a network device, sending an electromagnetic wave, and transmitting uplink data to the network device. This is not specifically limited in this application.

It should be understood that the terminal device in embodiments of this application may be any one of the foregoing devices or a chip. This is not specifically limited herein. Regardless of whether the terminal device is a device or a chip, the terminal device can be manufactured, sold, or used as an independent product. In this embodiment and subsequent embodiments, only the terminal device is used as an example for description.

In addition, the network device in this application may be any device having a radio transceiver function, and may be responsible for functions related to an air interface, for example, a radio link maintenance function, a radio resource management function, and some mobility management functions. The radio link maintenance function is used to maintain a radio link to the terminal device, and is responsible for protocol conversion between radio link data and internet protocol (internet protocol, IP) data. The radio resource management function may include functions such as radio link establishment and release, and radio resource scheduling and allocation. Some mobility management functions may include configuring the terminal device to perform measurement, evaluating radio link quality of the terminal device, deciding a handover of the terminal device between cells, and so on.

For example, the network device may be a device supporting wired access, for example, an access network (access network, AN) device, or may be a device supporting wireless access, for example, a radio access network (radio access network, RAN) device. The AN device generally includes one or more AN nodes, and the RAN device generally includes one or more RAN nodes. The AN/RAN node may be an access point (access point, AP), a base station (NodeB, NB), an enhanced base station (enhanced NodeB, eNB), a next-generation base station (NR NodeB, gNB), a transmission reception point (transmission reception point, TRP), a transmission point (transmission point, TP), another access node of a specific type, or the like.

Currently, some examples of the RAN node may be a continuously evolved NodeB (gNB), a transmission reception point (or a transmission reception point) (transmission reception point, TRP), an evolved NodeB (evolved NodeB, eNB), a radio network controller (radio network controller, RNC), a home base station (for example, a home evolved NodeB or a home NodeB, HNB), a wireless fidelity (wireless fidelity, Wi-Fi) access point (access point, AP), a wireless relay node, and a wireless backhaul node; or may be an ngNB, a transmission point (a TRP or a TP) in an NR system, or may be an antenna panel or a group of antenna panels of a base station in a 5G system, or may be a network node that forms a gNB or a transmission point, for example, a baseband unit (baseband unit, BBU) or a distributed unit (distributed unit, DU); or may be a device that has a base station function in D2D, V2X, or machine-to-machine (machine-to-machine, M2M) communication, or a base station in a future communication system. This is not specifically limited herein.

It should be understood that the network device in embodiments of this application may be any one of the foregoing devices or a chip in the foregoing device. This is not specifically limited herein. Regardless of whether the network device is a device or a chip, the network device may be manufactured, sold, or used as an independent product. In this embodiment and subsequent embodiments, only the network device is used as an example for description.

The communication method described in embodiments of this application may be applied to communication between a first communication apparatus and a second communication apparatus. The first communication apparatus may be a terminal device or a network device. The second communication apparatus may be a terminal device or a network device. In the following embodiments, an example in which the first communication apparatus is a terminal device and the second communication apparatus is a network device is used for description. It should be noted that the communication method described in embodiments of this application may be applied to communication between a terminal device and a network device, or may be applied to communication between terminal devices, or may be applied to communication between network devices. Communication between network devices may be coordinated multipoint transmission between macro base stations, between micro base stations, or between a macro base station and a micro base station.

With reference to FIG. 2, an example in which the communication method described in embodiments of this application is applied to communication between a terminal device and a network device is used below to describe a main procedure of the channel state information transmission method provided in this application. In the method, a first terminal device and the network device mainly perform the following steps.

Step 201a: The network device sends configuration information of a first reference signal to the first terminal device. Correspondingly, the first terminal device receives the configuration information of the first reference signal from the network device.

In this embodiment, step 201a is an optional step.

The first reference signal can be used for both channel estimation of a control channel and feedback of channel state information. That the first reference signal is used for feedback of channel state information may be understood as that the first terminal device may perform channel measurement based on the first reference signal and feed back the channel state information.

Optionally, the first reference signal can be used for both channel estimation of a control channel and channel estimation of a data channel. When the first reference signal can be used for both channel estimation of the control channel and channel estimation of the data channel, the first reference signal may be referred to as a reference signal shared by the control channel and the data channel. The control channel may be a downlink control channel, for example, a physical downlink control channel (physical downlink control channel, PDCCH) in LTE or 5G, or a physical reception link control channel (physical reception link control channel, PRxCCH), where the PRxCCH may be a channel used to transmit control information, and the control information is used to schedule data transmission. Alternatively, the control channel may be an uplink control channel, for example, a physical uplink control channel (physical uplink control channel, PUCCH) in LTE or 5G, or a physical transmission link control channel (physical transmission link control channel, PTxCCH), where the PTxCCH may be a channel used by the terminal device to transmit control information and/or a channel used by the network device to receive control information. The control information may include at least one of the following: an acknowledge character (also referred to as a positive acknowledgment) (acknowledge character, ACK)/a negative character (also referred to as a negative acknowledgment) (negative acknowledge character, NACK), CSI, a scheduling request (scheduling request, SR), or the like. The data channel may be a downlink data channel, for example, a physical downlink shared channel (physical downlink shared channel, PDSCH) in LTE or 5G, or a physical reception link shared channel (physical reception link shared channel, PRxSCH), where the PRxSCH may be a channel used by the terminal device to receive data and/or a channel used by the network device to transmit data. Alternatively, the data channel may be an uplink data channel, for example, a physical uplink shared channel (physical uplink shared channel, PUSCH) or a physical transmission shared channel (physical transmission link shared channel, PTxSCH) in LTE or 5G, where the PTxSCH may be a channel used by the terminal device to transmit data and/or a channel used by the network device to receive data.

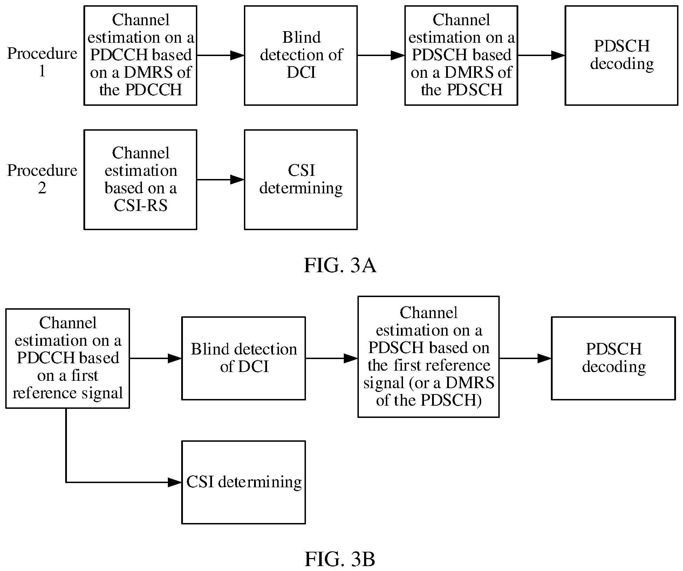

As shown in FIG. 3A, in an implementation, the terminal device needs to perform channel estimation on a PDCCH based on a DMRS of the PDCCH, perform channel estimation on a PDSCH based on a DMRS of the PDSCH, and perform channel estimation and CSI measurement and feedback based on a CSI-RS. To be specific, the terminal device needs to perform channel estimation for a plurality of times based on a plurality of reference signals, and reference signal overheads are high. In addition, the step of performing, by the terminal device, channel estimation on the PDCCH based on the DMRS of the PDCCH and the step of performing channel estimation on the PDSCH based on the DMRS of the PDSCH are performed in series, and the step of performing channel estimation based on the CSI-RS is independent of the step of performing channel estimation on the PDCCH and the step of performing channel estimation on the PDSCH. Therefore, a delay is large. As shown in FIG. 3B, in this application, the first terminal device may perform channel estimation on the PDCCH and CSI measurement and feedback (and channel estimation on the PDSCH) based on the first reference signal, to help reduce reference signal overheads. In addition, the first terminal device may determine CSI by using a result of the channel estimation based on the first reference signal. Therefore, PDSCH decoding and CSI calculation can be performed in parallel, to reduce a CSI processing delay. The first terminal device and/or the network device may determine, in the following manner, whether the first reference signal can be used for both channel estimation of the control channel and estimation, demodulation, and decoding of the data channel.

In an optional implementation, whether the control channel and the data channel can share the first reference signal is determined according to a rule predefined in a protocol.

For example, the network device and/or the first terminal device may determine, based on time-frequency resource allocation statuses (for example, time-frequency positions) of the control channel (for example, the PDCCH) and the data channel (for example, the PDSCH), whether the first reference signal is shared. Specifically, for example, when a symbol offset and/or an RB offset are/is less than a threshold 1, sharing of the first reference signal is supported. The threshold 1 may be related to or have a correspondence with a factor such as a moving speed, a channel environment, or a service of the first terminal device.

For example, the network device and/or the first terminal device may determine, based on the moving speed (for example, a Doppler frequency shift status) of the first terminal device, whether the first reference signal is shared. For example, when the moving speed is less than a threshold 2, sharing of the first reference signal is supported.

For example, the network device and/or the first terminal device may determine, based on the channel environment (for example, a multipath delay status) of the first terminal device, whether sharing of the first reference signal is supported. For example, when a channel multipath delay is less than a threshold 3, sharing of the first reference signal is supported.

For example, the network device and/or the first terminal device may determine, based on the service (for example, a latency requirement) of the first terminal device, whether the first reference signal is shared. For example, when a service latency requirement of the first terminal device is less than a threshold 4, sharing of the first reference signal is supported.

It should be understood that the threshold 1, the threshold 2, the threshold 3, and the threshold 4 are merely examples listed for ease of description. During actual application, a specific threshold may be set based on an application scenario or an actual application status. Values of the thresholds in the foregoing example are not limited herein.

In another optional implementation, the first terminal device determines, based on an indication of the network device, whether the control channel and the data channel can share the first reference signal.

For example, the network device may notify, by using signaling, the terminal device whether the first reference signal is a reference signal that can be shared, or notify the terminal device whether the control channel (for example, the PDCCH) and the data channel (for example, the PDSCH) support a shared reference signal. The signaling may be higher layer signaling (for example, RRC signaling), physical layer signaling (for example, downlink control information DCI), or the like.

In another optional implementation, the first terminal device determines, based on a capability of the first terminal device, whether the control channel and the data channel can share the first reference signal.

In this implementation, the first terminal device may report a capability status of sharing the first reference signal to the network device. For example, the capability of the first terminal device may include one or more of the following: The first terminal device supports sharing of a reference signal (for example, the first reference signal), the first terminal device does not support sharing of a reference signal (for example, the first reference signal), the first terminal device supports a case in which a subcarrier spacing of a reference signal (for example, the first reference signal) is different from a subcarrier spacing of the data channel (for example, the PDSCH), the first terminal device does not support a case in which a subcarrier spacing of a reference signal (for example, the first reference signal) is different from a subcarrier spacing of the data channel (for example, the PDSCH), the first terminal device supports a case in which a subcarrier spacing of the control channel (for example, the PDCCH) is different from a subcarrier spacing of the data channel (for example, the PDSCH), the first terminal device does not support a case in which a subcarrier spacing of the control channel (for example, the PDCCH) is different from a subcarrier spacing of the data channel (for example, the PDSCH), the first terminal device supports a case in which a subcarrier spacing of a reference signal (for example, the first reference signal) is different from a subcarrier spacing of the data channel (for example, the PDCCH), or the first terminal device does not support a case in which a subcarrier spacing of a reference signal (for example, the first reference signal) is different from a subcarrier spacing of the data channel (for example, the PDCCH).

In this embodiment, the first terminal device and/or the network device may determine, in any one of the foregoing implementations, whether the control channel and the data channel share the first reference signal. This is not specifically limited herein.

In addition, the first reference signal may not be dedicated to a terminal device for channel estimation of a control channel and/or feedback of channel state information, but may be used by a group of users (that is, a plurality of terminal devices in a user group) for channel estimation of a control channel and/or feedback of channel state information. In other words, all terminal devices belonging to a same user group can separately perform channel estimation on a control channel and/or feed back channel state information by using a reference signal corresponding to the user group. In this application, different user groups correspond to different first reference signals. For example, both a reference signal A and a reference signal B are first reference signals, a user group A corresponds to the reference signal A, and a user group B corresponds to the reference signal B. All terminal devices in the user group A may perform channel estimation on a control channel and/or feed back signal state information by using the reference signal A, and all terminal devices in the user group B may perform channel estimation on a control channel and/or feed back signal state information by using the reference signal B. However, the terminal device in the user group A may fail to perform channel estimation on the control channel and/or feed back the channel state information by using the reference signal B.

For ease of description, this may be referred to as that the first reference signal configured by the network device for the first terminal device corresponds to a first user group. In other words, all terminal devices in the first user group may perform channel estimation on the control channel and/or feed back the channel state information by using the first reference signal. The first user group includes at least two terminal devices. The first terminal device may belong to the first user group, or the first terminal device may not belong to the first user group. This is not specifically limited herein.

In addition, the configuration information of the first reference signal indicates a time-frequency resource of the first reference signal to the first terminal device, so that the first terminal device can receive, on the time-frequency resource of the first reference signal, the first reference signal sent by the network device to the first terminal device.

The time-frequency resource of the first reference signal may be different from a time-frequency resource of a CSI-RS (that is, a time-frequency resource used by a terminal device to receive the CSI-RS from a network device) in an NR standard, and the time-frequency resource of the first reference signal may not be completely the same as a time-frequency resource of a DMRS of a PDCCH (that is, a time-frequency resource used by the terminal device to receive the DMRS of the PDCCH from the network device) in the NR standard.

Optionally, a symbol in which the time-frequency resource of the first reference signal is located may be an independent symbol, or may be a symbol (for example a 1st symbol) in a control resource set CORESET, or may be a symbol before a control resource set CORESET.

The following separately describes optional implementations of the time-frequency resource of the first reference signal.

In an optional implementation, the time-frequency resource of the first reference signal is located in a specific symbol in time domain, and the specific symbol in time domain includes only a resource element RE of a reference signal. In other words, the symbol may not include another time-frequency resource (for example, a time-frequency resource of the control channel or a time-frequency resource of the data channel). For ease of description, in this embodiment and subsequent embodiments, the foregoing specific symbol is referred to as a first symbol. It should be understood that the "first symbol" is merely a name of the foregoing specific symbol. During actual application, another name may be used to describe the foregoing symbol that includes only the RE of the reference signal. This is not specifically limited herein.

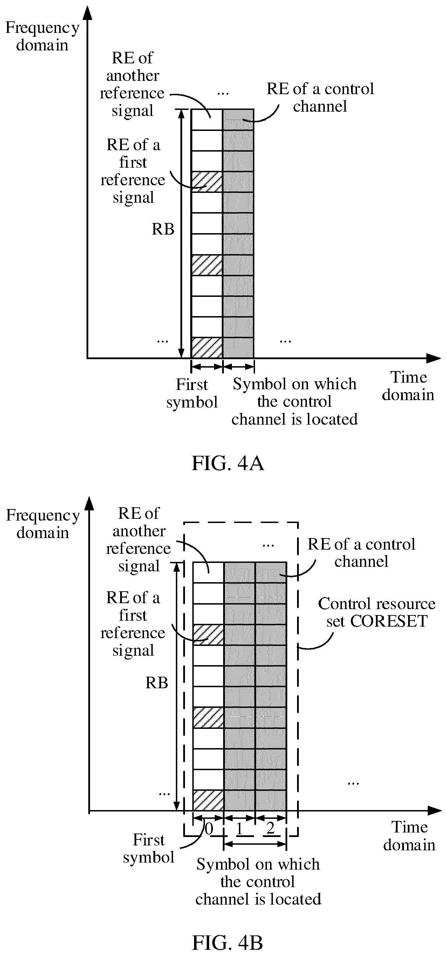

The time-frequency resource of the first reference signal is located in the first symbol in time domain, and the first symbol includes only the resource element RE of the reference signal. For example, a time-frequency resource in a first frequency band of the first symbol includes only the resource element RE of the reference signal. The first frequency band may be an entire bandwidth, or may be a segment of frequency domain resources in the bandwidth. Generally, there are a plurality of REs corresponding to one symbol in frequency domain. Therefore, there are also a plurality of REs corresponding to the first symbol in frequency domain. However, the plurality of REs corresponding to the first symbol in frequency domain are all REs of the reference signal. The reference signal includes the first reference signal. Therefore, a part of the plurality of REs corresponding to the first symbol in frequency domain are REs of the first reference signal. Optionally, the reference signal further includes another reference signal, for example, a reference signal corresponding to another user group. In this case, the plurality of REs corresponding to the first symbol in frequency domain further include an RE of another reference signal. For example, as shown in FIG. 4A, one RB in the first symbol is used as an example. The RB shown in FIG. 4A includes three REs that are REs of the first reference signal, and the other nine REs are REs of other reference signals.

In this implementation, a specific symbol (for example, the first symbol) is reserved in time-frequency domain, time-frequency resources in the specific symbol are all used to receive a reference signal, and a time-frequency resource of a control channel, a time-frequency resource of a data channel, and the like are not set in the symbol. This implementation helps the first terminal device quickly search for a time-frequency resource (for example, the time-frequency resource of the first reference signal) for receiving the reference signal, and helps reduce complexity of indicating, by the network device, the time-frequency resource of the reference signal to the first terminal device. For example, the first terminal device knows that the time-frequency resource for receiving the first reference signal is in the first symbol, and the network device may send, to the first terminal device, information indicating a frequency domain range, but may not send, to the first terminal device, information indicating a time domain range, to reduce signaling overheads.

Optionally, the first symbol is located before a symbol in which the time-frequency resource of the control channel is located. For example, in the example shown in FIG. 4A, the first symbol is a previous symbol of the time-frequency resource of the control channel. A symbol is an indicator reflecting a time domain, that is, an indicator that can reflect time. If the first symbol is located before the symbol on which the control channel is located, it indicates that the first terminal device preferentially receives the first reference signal on the time-frequency resource of the first reference signal in the first symbol, to perform an operation such as channel estimation. In other words, an operation of receiving the first reference signal and performing channel estimation by the first terminal device is not later than an operation of receiving the control channel by the first terminal device. This helps the first terminal device use a channel estimation result to demodulate the control channel and/or determine the channel state information as early as possible. This helps shorten a delay of reporting the channel state information by the first terminal device. Optionally, this helps the first terminal device perform the step of demodulating the control channel as soon as possible, and shortens time required for successfully receiving the control channel by the first terminal device.

Optionally, the time-frequency resource of the control channel is located in a control resource set CORESET. The first symbol may be in a symbol of the control resource set CORESET. For example, the first symbol is a 1st symbol of the symbol of the CORESET. Alternatively, the first symbol may be a symbol preceding the control resource set CORESET. For example, the first symbol is a previous symbol of the symbol of the CORESET.

For example, as shown in FIG. 4B, if the CORESET includes three symbols, the time-frequency resource of the first reference signal may be located in any one or more of the three symbols of the CORESET. For example, the CORESET includes symbols whose index values are 0, 1, and 2, and the time-frequency resource of the first reference signal may be in the symbol whose index value is 0. In other words, the first symbol is a 1st symbol in the symbols of the CORESET.

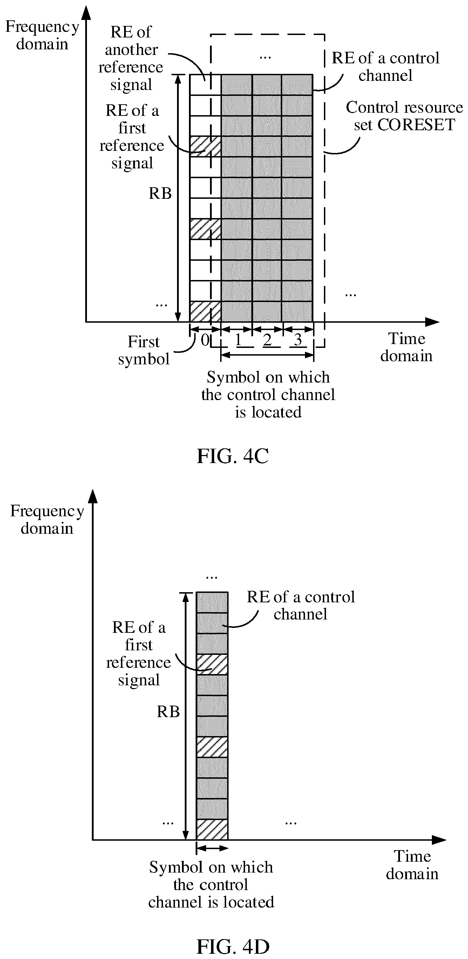

For example, as shown in FIG. 4C, the time-frequency resource of the first reference signal may alternatively be located in a symbol preceding the CORESET. For example, the CORESET includes symbols whose index values are 1, 2, and 3, and the time-frequency resource of the first reference signal may be in a symbol whose index value is 0. In other words, the first symbol is a symbol preceding the symbols of the CORESET.

In another optional implementation, the time-frequency resource of the first reference signal and the time-frequency resource of the control channel are distributed in a symbol. For example, the time-frequency resource of the first reference signal and the time-frequency resource of the control channel may be located in different REs in a same symbol, for example, distributed in a crossed manner. In this case, it may be understood that the symbol in which the time-frequency resource of the first reference signal is located is the symbol in which the time-frequency resource of the control channel is located. Optionally, the time-frequency resource of the control channel is located in the control resource set CORESET. Therefore, the time-frequency resource of the first reference signal in this implementation is also located in the control resource set CORESET. Optionally, in this manner, the first reference signal is a reference signal of the control channel, and is used for channel estimation of the control channel. The first reference signal and the control channel are located on a same symbol. For example, as shown in FIG. 4D, one RB in a symbol on which a control channel is located is used as an example. In the RB shown in FIG. 4D, an RE of the first reference signal and an RE of the control channel are located in one symbol. The RB includes three REs of the first reference signal, and the other nine REs of the RB are REs of the control channel.

Optionally, if the time-frequency resource of the control channel is distributed in at least two symbols, the time-frequency resource of the first reference signal may be located in any one or more of the at least two symbols in which the time-frequency resource of the control channel is located. For example, the time-frequency resource of the control channel is distributed in symbols whose index values are 0, 1, and 2. The time-frequency resource of the first reference signal may be located in the symbol whose index value is 0, or may be located in the symbol whose index value is 1, or may be located in the symbol whose index value is 2. Because the time-frequency resource of the control channel is located in the control resource set CORESET, the time-frequency resource of the first reference signal in this implementation is also located in the control resource set CORESET. This may also be understood as that the time-frequency resource of the first reference signal is a time-frequency resource located in the CORESET.

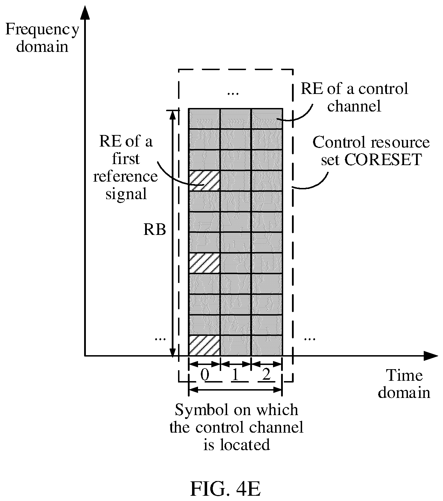

Further, if the time-frequency resource of the control channel is distributed in at least two symbols, the time-frequency resource of the first reference signal may be located in a 1st symbol in the at least two symbols in which the time-frequency resource of the control channel is located. For example, the time-frequency resource of the control channel is distributed in symbols whose index values are 0, 1, and 2, and the time-frequency resource of the first reference signal may be located in the symbol whose index value is 0. The time-frequency resource of the control channel is located in the control resource set CORESET. Therefore, the time-frequency resource of the first reference signal in this implementation is located in a 1st symbol in the control resource set CORESET. For example, as shown in FIG. 4E, the control resource set CORESET occupies symbols whose index values are 0, 1, and 2 in time domain, and occupies one or more RBs in frequency domain (where FIG. 4E shows only some RBs in the CORESET). In the CORESET shown in FIG. 4E, an RE of the first reference signal is in a 1st symbol of the CORESET, that is, the symbol whose index value is 0 in the CORESET.

It should be understood that the time-frequency resource of the first reference signal may be located in the symbol listed in any one of the foregoing implementations. This is not specifically limited herein.

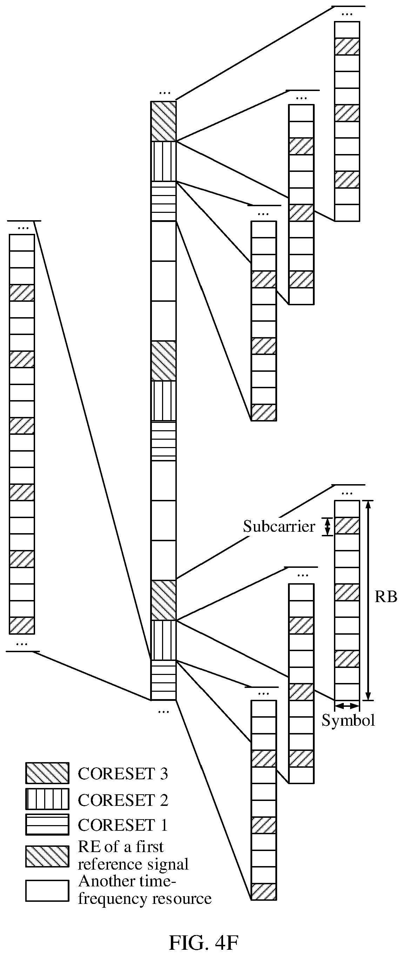

It should be further noted that when the time-frequency resource of the first reference signal is located in the control resource set CORESET, the time-frequency resource of the first reference signal may be distributed in a plurality of RBs, and a quantity and an arrangement manner of REs of the first reference signal that are included in each RB are the same. Optionally, a same CORESET may be discretely distributed in different frequency bands. However, a quantity and an arrangement manner of REs of the first reference signal that are included in each RB in the same CORESET are the same. As shown in FIG. 4F, a CORESET 1 is divided into three segments that are discretely distributed in different frequency bands. However, a 1st RE in each RB of each CORESET 1 is an RE of the first reference signal, and there is one RE of the first reference signal at an interval of three REs.

Optionally, quantities and/or arrangement manners of REs of the first reference signal that are included in different CORESETs are different. As shown in FIG. 4F, arrangement manners of time-frequency resources of reference signals in the CORESET 1, a CORESET 2, and a CORESET 3 are different.

For example, if there are N CORESETs in a bandwidth, an index value f(i) of a CCE of a CORESET i and/or an index value g(i) of an RB of the CORESET i may be determined, according to the following formulas, for a CORESET obtained through CCE interleaving:

$$f(i)=c \times N+i,$$

where i represents an identifier of the CORESET, i=0, 1, ..., or N-1; c represents a quantity of CCEs included in one CORESET, c=1, ..., or $N_{CCE}/(N-1)$, $N_{CCE}$ represents a total quantity of CCEs included in the CORESET, and N represents a quantity of CORESETs; and

$$g(i)=r \times N+i,$$

where i represents the identifier of the CORESET, i=0, 1, ..., or N-1; r represents a quantity of RBs included in one CORESET, r=1, ..., or $N_{RB}/(N-1)$, $N_{RB}$ represents a total quantity of RBs included in the CORESET, and N represents a quantity of CORESETs.

Optionally, the network device and/or the terminal device may determine the time-frequency resource of the CORESET and/or the time-frequency resource of the first reference signal according to a predefined rule.

In addition, distribution of the time-frequency resource of the first reference signal in frequency domain may not be completely the same as distribution of the time-frequency resource of the reference signal in frequency domain in the NR standard.

The subcarrier spacing of the first reference signal may be designed in the following manner. The following embodiment may be used as an independent embodiment, or may be combined with another embodiment of this application. This is not specifically limited in this application. The following separately describes several implementations.

In an optional implementation, the subcarrier spacing of the first reference signal is the same as the subcarrier spacing of the control channel of the first terminal device, and the subcarrier spacing of the first reference signal is the same as the subcarrier spacing of the data channel of the first terminal device.

It should be understood that the RE of the first reference signal and the RE of the control channel may be located in a same symbol, or may be located in different symbols. This is not specifically limited herein.

There may be three cases for time-frequency resource positions of the control channel and the data channel:
(1) The RE of the control channel and the RE of the data channel may be located in a same symbol and different RBs.
(2) The RE of the control channel and the RE of the data channel may be located in different symbols and a same RB. The RE of the control channel and the RE of the data channel may be located in different symbols and different RBs.

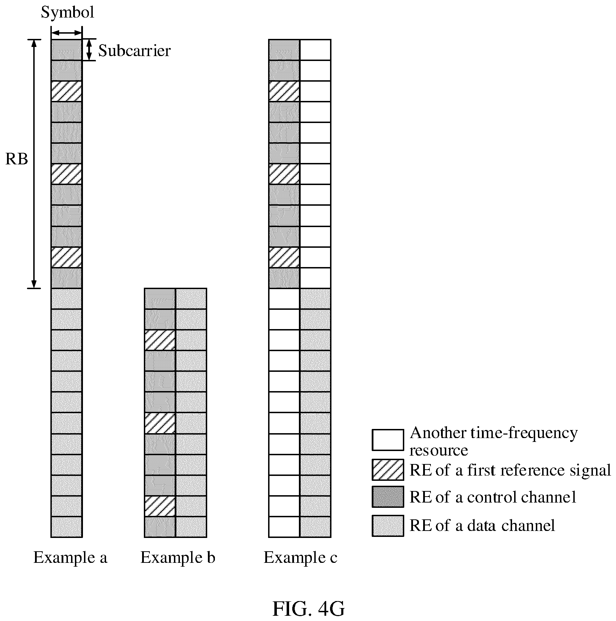

For example, the RE of the control channel and the RE of the first reference signal may be located in one RB. The RE of the control channel and the RE of the data channel may be located in a same symbol and different RBs, for example, as shown in Example a in FIG. 4G. The RE of the control channel and the RE of the data channel may be located in a same RB but different symbols, for example, as shown in Example b in FIG. 4G. The RE of the control channel and the RE of the data channel may be located in different symbols and different RBs, for example, as shown in Example c in FIG. 4G.

In this implementation, the network device may use a reference signal of the control channel of the first terminal device as the first reference signal (for example, the DMRS of the PDCCH). For example, the network device indicates, to the first terminal device, a CORESET in which the control channel is located and a pattern (pattern) of the first reference signal, so that the first terminal device decodes the PDCCH based on the first reference signal. Optionally, the first terminal device may determine a PDSCH resource position based on a PDCCH resource position.

Optionally, the first terminal device may decode the PDSCH based on channel information obtained by using the received first reference signal (for example, the DMRS of the PDCCH).

Optionally, precoding of the PDCCH may be the same as precoding of the first reference signal, that is, a channel estimated by using the first reference signal may be implemented by the PDCCH. Alternatively, when precoding of the PDCCH is the same as precoding of the first reference signal, a channel estimated by using the first reference signal may be the PDCCH.

Beams or precoding matrix indicators (precoding matrix indicators, PMIs) of the PDCCH and the PDSCH may be the same. For example, the PMI of the PDCCH is the same as that of the PDSCH. To be specific, a channel estimated by using the first reference signal may be a channel of the PDCCH and the PDSCH. Alternatively, PMIs of the PDCCH and the PDSCH may be different. For example, when the PDCCH has a wide beam and the PDSCH has a narrow beam, the DCI may indicate the PMI of the PDSCH. To be specific, a channel of the PDSCH may be obtained by superimposing the PMI based on a channel estimated by using the first reference signal.

Optionally, the time-frequency resource of the PDSCH may be determined based on the time-frequency resource of the PDCCH. This method can reduce overheads of indicating the time-frequency resource of the PDSCH. For example, for Example a in FIG. 4G, when the REs are located in a same symbol and different RBs, the network device may indicate only a frequency domain position, for example, an RB offset, to the first terminal device. For example, for Example b in FIG. 4G, when the REs are located in different symbols and a same RB, the network device may indicate only a time domain position, for example, a symbol offset, to the first terminal device. For example, for Example c in FIG. 4G, when the REs are located in different symbols and different RBs, the network device may indicate a time domain position and a frequency domain position, for example, a symbol offset and an RB offset, to the first terminal device.

In an optional implementation, the subcarrier spacing of the first reference signal is the same as the subcarrier spacing of the control channel of the first terminal device, and the subcarrier spacing of the first reference signal is different from the subcarrier spacing of the data channel of the first terminal device.

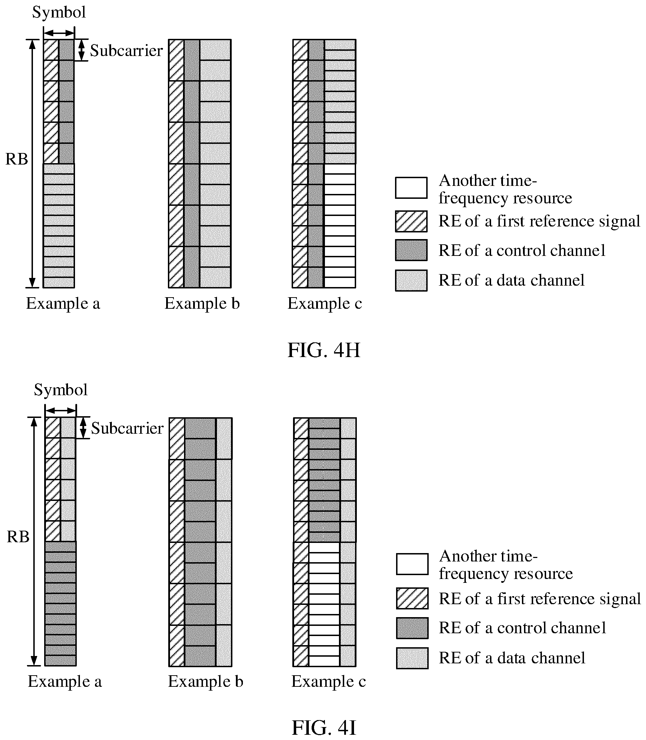

For example, the subcarrier spacing of the first reference signal is greater than the subcarrier spacing of the data channel of the first terminal device. For example, in Example a, Example b, and Example c in FIG. 4H, the subcarrier spacing of the first reference signal is equal to the subcarrier spacing of the control channel of the first terminal device, and the subcarrier spacing of the first reference signal is greater than the subcarrier spacing of the data channel of the first terminal device. It should be understood that the RE of the first reference signal and the RE of the control channel may be located in a same symbol, or may be located in different symbols. This is not specifically limited herein.

For example, the RE of the control channel and the RE of the data channel may be located in a same symbol and different RBs, for example, as shown in Example a in FIG. 4H. The RE of the control channel and the RE of the data channel may be located in a same RB but different symbols, for example, as shown in Example b in FIG. 4H. The RE of the control channel and the RE of the data channel may be located in different symbols and different RBs, for example, as shown in Example c in FIG. 4H.

In this implementation, the network device may use a reference signal of the control channel of the first terminal device as the first reference signal (for example, the DMRS of the PDCCH). For example, the network device indicates, to the first terminal device, a CORESET in which the control channel is located, a pattern (pattern) of the first reference signal, and the subcarrier spacing of the first reference signal, so that the first terminal device decodes the PDCCH based on the first reference signal.

Optionally, the first terminal device may determine a PDSCH resource position based on a PDCCH resource position.

Optionally, the first terminal device may decode the PDSCH based on channel information obtained by using the received first reference signal (that is, the DMRS of the PDCCH).

Optionally, precoding of the PDCCH may be the same as that of the first reference signal. To be specific, a channel estimated by using the first reference signal may be a channel of the PDCCH. The DCI in the PDCCH may indicate the subcarrier spacing (subcarrier spacing, SCS) of the PDSCH. For example, one BWP configuration includes two SCS configurations, one SCS is the subcarrier spacing of the PDCCH and the first reference signal, and the other SCS is the subcarrier spacing of the PDSCH.

When the first terminal device may determine a resource position of the PDSCH based on a resource position of the PDCCH, a beam and a precoding matrix indicator PMI of the PDCCH are the same as those of the PDSCH. For example, the PMI of the PDCCH is the same as that of the PDSCH. To be specific, a channel estimated by using the first reference signal may be a channel of the PDCCH and the PDSCH. Alternatively, PMIs of the PDCCH and the PDSCH may be different. For example, when the PDCCH has a wide beam and the PDSCH has a narrow beam, the DCI may indicate the PMI of the PDSCH. To be specific, a channel of the PDSCH may be obtained by superimposing the PMI based on a channel estimated by using the first reference signal.

Optionally, the time-frequency resource of the PDSCH may be determined based on the time-frequency resource of the PDCCH (to reduce overheads of indicating the time-frequency resource of the PDSCH). For details, refer to the descriptions in the foregoing implementation. Details are not described again.

In another optional implementation, the subcarrier spacing of the first reference signal is different from the subcarrier spacing of the control channel of the first terminal device, and the subcarrier spacing of the first reference signal is the same as the subcarrier spacing of the data channel of the first terminal device.

For example, the subcarrier spacing of the first reference signal is the same as the subcarrier spacing of the data channel of the first terminal device, and the subcarrier spacing of the first reference signal is greater than the subcarrier spacing of the control channel of the first terminal device. It should be understood that the RE of the first reference signal and the RE of the control channel may be located in a same symbol, or may be located in different symbols. This is not specifically limited herein.

For example, the RE of the control channel and the RE of the data channel may be located in a same symbol and different RBs, for example, as shown in Example a in FIG. 4I. The RE of the control channel and the RE of the data channel may be located in a same RB but different symbols, for example, as shown in Example b in FIG. 4I. The RE of the control channel and the RE of the data channel may be located in different symbols and different RBs, for example, as shown in Example c in FIG. 4I.

In this implementation, the network device may use a reference signal of the control channel of the first terminal device as the first reference signal (for example, the DMRS of the PDCCH). For example, the network device indicates, to the first terminal device, a CORESET in which the control channel is located, a pattern of the first reference signal, and the subcarrier spacing of the first reference signal, so that the first terminal device decodes the PDCCH based on the first reference signal.

Optionally, the first terminal device may determine a PDSCH resource position based on a PDCCH resource position.

Optionally, the first terminal device may decode the PDSCH based on channel information obtained by using the received first reference signal (that is, the DMRS of the PDCCH).

Optionally, precoding of the PDCCH may be the same as that of the first reference signal. To be specific, a channel estimated by using the first reference signal may be a channel of the PDCCH.

A CORESET configuration may indicate the subcarrier spacing (subcarrier spacing, SCS) of the first reference signal. For example, one BWP configuration includes two SCS configurations, one SCS is the subcarrier spacing of the PDCCH, and the other SCS is the subcarrier spacing of the first reference signal and the PDSCH.

A beam and a precoding matrix indicator PMI of the PDCCH are the same as those of the PDSCH. For example, the PMI of the PDCCH is the same as that of the PDSCH. To be specific, a channel estimated by using the first reference signal may be a channel of the PDCCH and the PDSCH. Alternatively, PMIs of the PDCCH and the PDSCH may be different. For example, when the PDCCH has a wide beam and the PDSCH has a narrow beam, the DCI may indicate the PMI of the PDSCH. To be specific, a channel of the PDSCH may be obtained by superimposing the PMI based on a channel estimated by using the first reference signal.

Optionally, the time-frequency resource of the PDSCH may be determined based on the time-frequency resource of the PDCCH (to reduce overheads of indicating the time-frequency resource of the PDSCH). For details, refer to the descriptions in the foregoing implementation. Details are not described again.

In another optional implementation, the subcarrier spacing of the first reference signal is different from the subcarrier spacing of the control channel of the first terminal device, and the subcarrier spacing of the first reference signal is different from the subcarrier spacing of the data channel of the first terminal device.

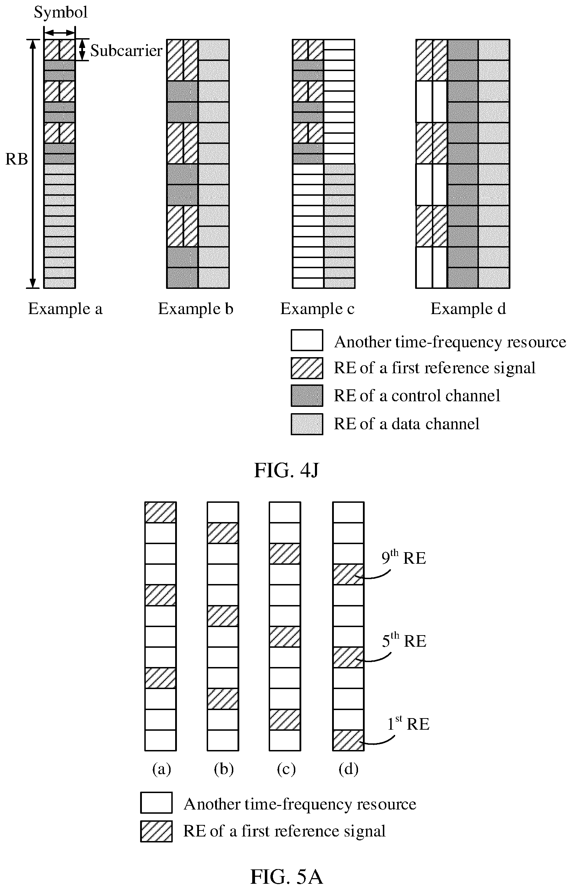

For example, the subcarrier spacing of the first reference signal is greater than the subcarrier spacing of the control channel of the first terminal device, and the subcarrier spacing of the first reference signal is greater than the subcarrier spacing of the data channel of the first terminal device,

for example, as shown in Example a, Example b, Example c, and Example d in FIG. 4J. Particularly, the subcarrier spacing of the first reference signal is greater than the subcarrier spacing of the control channel of the first terminal device, and the subcarrier spacing of the control channel of the first terminal device is equal to the subcarrier spacing of the data channel of the first terminal device, for example, as shown in Example a, Example b, and Example c in FIG. 4J. It should be understood that the RE of the first reference signal and the RE of the control channel may be located in a same symbol, for example, as shown in Example a, Example b, and Example c in FIG. 4J. The RE of the first reference signal and the RE of the control channel may be located in different symbols, for example, as shown in Example d in FIG. 4J. This is not specifically limited herein.

In this application, a larger subcarrier spacing of the first reference signal indicates shorter duration of the time-frequency resource of the first reference signal in time domain, and the first terminal device may receive the first reference signal within shorter time, to quickly perform channel estimation. Therefore, this helps reduce a processing delay. In addition, a larger subcarrier spacing of the first reference signal indicates a shorter symbol occupied by the resource element RE of the first reference signal and a wider occupied frequency domain. This helps obtain channel state information in wide frequency domain with low pilot overheads, and helps reduce pilot overheads.

In the NR standard, the subcarrier spacing of the first reference signal, the subcarrier spacing of the control channel of the first terminal device, and the subcarrier spacing of the data channel of the first terminal device are completely the same. In this application, based on an idea of designing the time-frequency resource of the first reference signal, a plurality of possible implementations of the time-frequency resource of the first reference signal are provided. It should be further understood that FIG. 4C, FIG. 4D, FIG. 4E, FIG. 4F, FIG. 4G, and FIG. 4H list only several typical examples. However, an implementation of the time-frequency resource of the first reference signal in this application is not limited to the examples listed in FIG. 4C, FIG. 4D, FIG. 4E, FIG. 4F, FIG. 4G, and FIG. 4H.

After the first terminal device receives the configuration information of the first reference signal, the first terminal device may learn of a time-frequency domain position of the time-frequency resource of the first reference signal (that is, the time domain position and the frequency domain position of the time-frequency resource of the first reference signal). Therefore, the configuration information of the first reference signal may also be understood as indicating the time-frequency domain position of the time-frequency resource of the first reference signal to the first terminal device. In other words, the first terminal device can determine, by using the configuration information of the first reference signal, a symbol (or symbols) in time domain and a subcarrier (or subcarriers) in frequency domain on which the first terminal device can receive the first reference signal.

The configuration information of the first reference signal may explicitly or implicitly indicate the time-frequency domain position of the time-frequency resource of the first reference signal to the first terminal device. The following separately provides descriptions.

Manner 1: The configuration information of the first reference signal includes a first group identifier, and the first group identifier identifies the first user group.

Optionally, the first group identifier may be used to determine the time-frequency resource of the first reference signal and/or a sequence of the first reference signal. The network device includes the first group identifier in the configuration information of the first reference signal that is to be sent to the first terminal device, to indicate the first terminal device to use a reference signal (that is, the first reference signal) corresponding to the first user group, and the first terminal device receives the first reference signal (the sequence including the first reference signal) on a time-frequency resource (that is, the time-frequency resource of the first reference signal) corresponding to the first user group (or the first group identifier).

Optionally, there is a correspondence between the first group identifier and the time-frequency resource of the first reference signal. The correspondence between the first group identifier and the time-frequency resource of the first reference signal may be defined in a protocol, or may be notified by the network device to the terminal device (for example, the first terminal device) by using signaling. This is not specifically limited in this application.

For example, the correspondence may be a correspondence between the first group identifier and information about the RB in which the time-frequency resource of the first reference signal is located and information about the RE in which the time-frequency resource of the first reference signal is located (where the correspondence in this example is referred to as a first correspondence below). For example, the information about the RB in which the time-frequency resource of the first reference signal is located is an identifier or a number of the RB, and the information about the RE in which the time-frequency resource of the first reference signal is located is an identifier or a number of the RE. In this case, the first terminal device may determine, based on the first group identifier and the first correspondence, the identifier or the number of the RB in which the time-frequency resource of the first reference signal is located and the identifier or the number of the RE. For example, the first correspondence obtained by the first terminal device may be shown in the following Table 1-1.

**Table 1-1**

| Group identifier | RB identifier and RE identifier |
| --- | --- |
| RNTI1 | RB0, RB1; RE0, RE 4, RE8 |

Table 1-1 shows the first correspondence between the first group identifier obtained by the first terminal device and the time-frequency resource of the first reference signal. The time-frequency resource of the first reference signal is implemented by using the identifier of the RB and the identifier of the RE. The first group identifier is RNTI1, and the first correspondence is a 2nd row in Table 1-1. That is, RNTI1 corresponds to {RB0, RB1; RE0, RE4, RE8}. {RB0, RB 1; RE0, RE4, RE8} indicates that the time-frequency resource of the reference signal is in RBs whose identifiers are RB0 and RB1, and REs of the reference signal are REs whose identifiers are RE0, RE4, and RE8 in RB0 and REs whose identifiers are RE, RE4, and RE8 in RB 1.

For example, the correspondence may be a correspondence between the first group identifier and information about the RB in which the time-frequency resource of the first reference signal is located (where the correspondence in this example is referred to as a second correspondence below). In this case, the information about the RE in which the time-frequency resource of the first reference signal is located is default or predefined. For example, the information about the RB in which the time-frequency resource of the first reference signal is located is an identifier or a number of the RB, and the first terminal device considers by default that there are four REs of the reference signal in one RB, and there are two REs between every two REs. In this case, the first terminal device may determine the time-frequency domain position of the time-frequency resource of the first reference signal based on the first group identifier, the second correspondence, and the default (or predefined) information about the RE. For example, the second correspondence obtained by the first terminal device may be shown in the following Table 1-2.

**Table 1-2**

| Group identifier | RB identifier |
|---|---|
| RNTI1 | RB0, RB1 |

Table 1-2 shows the second correspondence between the first group identifier obtained by the first terminal device and the time-frequency resource of the first reference signal. The time-frequency resource of the first reference signal is implemented by using the identifier of the RB. The first group identifier is RNTI1, and the second correspondence is a $2^{nd}$ row in Table 1-2. That is, RNTI1 corresponds to {RB0, RB1}. {RB0, RB1} indicates that the time-frequency resource of the reference signal is in RBs whose identifiers are RB0 and RB1. In this case, the first terminal device may determine that the time-frequency resource of the first reference signal is in the RBs whose identifiers are RB0 and RB1, and REs of the reference signal are REs whose identifiers are RE0, RE3, RE6, and RE9 in RB0 and REs whose identifiers are RE0, RE3, RE6, and RE9 in RB1.

For example, the correspondence may be a correspondence between the first group identifier and information about the RE in which the time-frequency resource of the first reference signal is located (where the correspondence in this example is referred to as a third correspondence below). In this case, the information about the RB in which the time-frequency resource of the first reference signal is located is default or predefined. For example, the information about the RE in which the time-frequency resource of the first reference signal is located is an identifier or a number of the RE. The first terminal device considers by default that the RE of the first reference signal is in one or more RBs, but the first terminal device does not know an arrangement manner of the RE of the first reference signal in each RB. In this case, the first terminal device may determine the time-frequency domain position of the time-frequency resource of the first reference signal based on the first group identifier, the third correspondence, and the default (or predefined) information about the RB. For example, the third correspondence obtained by the first terminal device may be shown in the following Table 1-3.

**Table 1-3**

| Group identifier | RE identifier |
|---|---|
| RNTI1 | RE0, RE4, RE8 |

Table 1-3 shows the third correspondence between the first group identifier obtained by the first terminal device and the time-frequency resource of the first reference signal. The time-frequency resource of the first reference signal is implemented by using the identifier of the RE. The first group identifier is RNTI1, and the third correspondence is a $2^{nd}$ row in Table 1-3. That is, RNTI1 corresponds to {RE0, RE4, RE8}. {RE0, RE4, RE8} indicates that the time-frequency resource of the reference signal is in REs whose identifiers are RE0, RE4, and RE8 in the default RB. It is assumed that identifiers of default RBs are RB1 and RB2. In this case, the first terminal device may determine that the time-frequency resource of the first reference signal is in the RBs whose identifiers are RB1 and RB2, and REs of the reference signal are REs whose identifiers are RE0, RE4, and RE8 in RB1 and REs whose identifiers are RE0, RE4, and RE8 in RB2.

Optionally, there is a correspondence between the first group identifier and the sequence of the first reference signal. The correspondence between the first group identifier and the sequence of the first reference signal may be defined in a protocol, or may be notified by the network device to the terminal device (for example, the first terminal device) by using signaling. This is not specifically limited in this application.

For example, there is a correspondence between the first group identifier and an n-bit character string. After the first terminal device receives the first group identifier, the first terminal device may learn that the sequence of the first reference signal is the n-bit character string.

In this implementation, the first terminal device and the network device agree on a time-frequency domain resource on which a terminal device in a user group should receive a reference signal corresponding to the user group. It may also be understood that the first terminal device stores a correspondence between a group identifier and a time-frequency resource, or a correspondence between a group identifier and a time-frequency resource is defined in a protocol. After the first terminal device receives the first group identifier, the first terminal device may determine, based on the first group identifier, the time-frequency resource corresponding to the first group identifier (that is, the time-frequency resource corresponding to the first reference signal).

Manner 2: The configuration information of the first reference signal includes both the first group identifier and first time-frequency resource information. The first time-frequency resource information indicates the time-frequency resource of the first reference signal.

In this implementation, the network device needs to send, to the first terminal device, information (namely, the first time-frequency resource information) indicating the time-frequency resource of the first reference signal, so that the first terminal device determines the time-frequency resource of the first reference signal based on the first group identifier and the first time-frequency resource information.

In a possible implementation, the first time-frequency resource information includes information about an RB in which the time-frequency resource of the first reference signal is located. In this manner, there is a correspondence between the first group identifier and information about an RE in the RB in which the time-frequency resource of the first reference signal is located.

For example, there is a third correspondence between the first group identifier and the information about the RE in the RB in which the time-frequency resource of the first reference signal is located. For descriptions of the third correspondence, refer to the foregoing example corresponding to Table 1-3. In this case, the first terminal device may determine, based on the first time-frequency resource information, a position of the RB in which the time-frequency resource of the first reference signal is located, and then determine, based on the first group identifier and the third correspondence, a position of the RE of the time-frequency resource of the first reference signal in the RB.

For example, the first time-frequency resource information is {RB 1, RB2}, indicating that the time-frequency resource of the first reference signal is located in RBs whose identifiers are RB1 and RB2. The first terminal device may obtain {RE0, RE4, RE8} based on the first group identifier and the third correspondence shown in Table 1-3. In this case, the first terminal device may determine that the time-frequency resource of the first reference signal is in the RBs whose identifiers are RB 1 and RB2, and REs of the reference signal are REs whose identifiers are RE0, RE4, and RE8 in RB1 and REs whose identifiers are RE0, RE4, and RE8 in RB2. Certainly, the first time-frequency resource information in this example may be replaced with other information that can reflect a distribution status of the time-frequency resource of the first reference signal in an RB, for example, an RB spacing or a quantity of RBs. This is not limited herein.

In another possible implementation, the first time-frequency resource information includes information about an RE in which the time-frequency resource of the first reference signal is located. In this manner, there is a correspondence between the first group identifier and information about an RB in which the time-frequency resource of the first reference signal is located.

For example, there is a second correspondence between the first group identifier and the information about the RB in which the time-frequency resource of the first reference signal is located. For descriptions of the second correspondence, refer to the foregoing example corresponding to Table 1-2. In this case, the first terminal device may determine, based on the first group identifier and the second correspondence, a position of the RB in which the time-frequency resource of the first reference signal is located, and then determine, based on the first time-frequency resource information, a position of the RE of the time-frequency resource of the first reference signal in the RB.

For example, the first time-frequency resource information is {RE0, RE3, RE6, RE9}, indicating that the time-frequency resource of the first reference signal is located in REs whose identifiers are RE0, RE3, RE6, and RE9 in the RB. The first terminal device may obtain {RB0, RB1} based on the first group identifier and the second correspondence shown in Table 1-2. In this case, the first terminal device may determine that the time-frequency resource of the first reference signal is in RBs whose identifiers are RB0 and RB1, and REs of the reference signal are REs whose identifiers are RE0, RE3, RE6, and RE9 in RB0 and REs whose identifiers are RE0, RE3, RE6, and RE9 in RB1. Certainly, the first time-frequency resource information in this example may be replaced with other information that can reflect a distribution status of the time-frequency resource of the first reference signal on the REs, for example, an RE spacing, a quantity of REs, or a subcarrier identifier. This is not limited herein.

In another possible implementation, the first time-frequency resource information includes information about an RB in which the time-frequency resource of the first reference signal is located and information about an RE in which the time-frequency resource of the first reference signal is located.

In this manner, the first terminal device may determine, based on the first time-frequency resource information configured by the network device, a position of the RB in which the time-frequency resource of the first reference signal is located and a position of the RE in which the time-frequency resource of the first reference signal is located in the RB.

In any one of the foregoing three possible implementations, the information about the RB in which the time-frequency resource of the first reference signal is located may be an identifier of the RB or a sequence number of the RB. The information about the RE in which the time-frequency resource of the first reference signal is located may be at least one of the following: information indicating a quantity of REs between REs of the first reference signal in one RB, information indicating a quantity of REs of the first reference signal in one RB, or a pattern identifier of the time-frequency resource of the first reference signal.

Specifically, a meaning of the information about the RE in which the time-frequency resource of the first reference signal is located may be predefined in a protocol, or may be notified by the network device to the terminal device by using signaling. This is not limited in this application.

For example, the information indicating the RE in which the time-frequency resource of the first reference signal is located may be information indicating a quantity of REs between REs of the first reference signal in one RB.

For example, in Example a in FIG. 5A, a shadowed RE represents an RE of the first reference signal. In this case, the information indicating the RE in which the time-frequency resource of the first reference signal is located is "an RE spacing=3", indicating that there are three REs between every two REs in one RB.

For example, the information indicating the RE in which the time-frequency resource of the first reference signal is located may alternatively be information indicating a quantity of REs of the first reference signal in one RB. For example, in Example a in FIG. 5A, a shadowed RE represents an RE of the first reference signal. In this case, the information indicating the RE in which the time-frequency resource of the first reference signal is located is "a quantity of REs=3", indicating that one RB includes three REs, and the three REs are evenly distributed in one RB.

It should be understood that the first terminal device and the network device agree on an RB on which the time-frequency resource of the first reference signal of the first terminal device should be located (which is, for example, predefined in a protocol). In this case, the first time-frequency resource information may not include the information indicating the RB in which the time-frequency resource of the first reference signal is located. In this case, the first time-frequency resource information includes only the information indicating the RE in which the time-frequency resource of the first reference signal is located.

For example, the first time-frequency resource information may alternatively be the pattern identifier of the time-frequency resource of the first reference signal, and the pattern identifier of the time-frequency resource of the first reference signal can indicate the RB in which the time-frequency resource of the first reference signal is located and/or indicate the RE in which the time-frequency resource of the first reference signal is located. In other words, the pattern identifier of the time-frequency resource of the first reference signal may indicate a pattern of the RE of the first reference signal in entire time-frequency domain, or may indicate a pattern of the RE of the first reference signal in one RB. This is not specifically limited herein.

For example, four patterns in FIG. 5A are (a), (b), (c) and (d), and the pattern indicates the RE in which the time-frequency resource of the first reference signal is located. Pattern identifiers corresponding to the four patterns may be 0 to 3 respectively. The network device indicates the pattern identifier, and the terminal device may determine, based on the pattern identifier, the RE in which the time-frequency resource of the first reference signal is located.

Optionally, the first time-frequency resource information may be CORESET configuration information. The network device may send the CORESET configuration information to the terminal device, and then the first terminal device determines the time-frequency resource of the CORESET and/or the time-frequency resource of the first reference signal based on the CORESET configuration configuration. The CORESET configuration information may indicate a quantity of CCEs spaced in frequency domain, a quantity of RBs spaced in frequency domain, an index value of a start CCE, an index value of a start RB, and/or the like. In addition, the CORESET configuration information may further indicate whether a reference signal of the CORESET (for example, a DMRS in the CORESET) is the first reference signal, and/or whether the reference signal is used for channel estimation or demodulation of the data channel (for example, channel estimation or demodulation of the PDSCH), and whether the reference signal is used for measurement of channel state information. In a possible implementation, when determining the time-frequency resource of the first reference signal based on the CORESET configuration information and/or the first group identifier, the first terminal device may use the formula "f(i)=c×N+i" and the formula "g(i)=r×N+i" that are described above. For details, refer to the foregoing related descriptions. Details are not described herein again.

Step 202: The first terminal device determines the time-frequency resource of the first reference signal based on the configuration information of the first reference signal.

In this embodiment, step 202 is an optional step.

In an optional implementation, the configuration information of the first reference signal includes the first group identifier. Optionally, there is a first correspondence between the first group identifier and the time-frequency resource of the first reference signal. In this case, the first terminal device determines the time-frequency resource of the first reference signal based on the first group identifier and the first correspondence. For example, an implementation of the first correspondence may be shown in the foregoing Table 1-1.

For example, if the first group identifier corresponds to a symbol whose index value is 0 and subcarriers whose index values are 0 to 6, the first terminal device determines that the time-frequency resource of the first reference signal is REs whose subcarrier index values are 0 to 6 in the symbol whose index value is 0. In another optional implementation, the configuration information of the first reference signal includes the first group identifier and the first time-frequency resource information. In this case, the first terminal device determines the time-frequency resource of the first reference signal based on the first group identifier and the first time-frequency resource information.

In an implementation, the first time-frequency resource information includes the information about the RB in which the time-frequency resource of the first reference signal is located. In this manner, there is a correspondence between the first group identifier and the information about the RE in the RB in which the time-frequency resource of the first reference signal is located. In this case, the first terminal device may determine, based on the first time-frequency resource information, the position of the RB in which the time-frequency resource of the first reference signal is located, and then determine, based on the first group identifier, the position of the RE of the time-frequency resource of the first reference signal in the RB.

In another implementation, the first time-frequency resource information includes the information about the RE in which the time-frequency resource of the first reference signal is located. In this manner, there is a correspondence between the first group identifier and the information about the RB in which the time-frequency resource of the first reference signal is located. In this case, the first terminal device may determine, based on the first group identifier, the position of the RB in which the time-frequency resource of the first reference signal is located, and then determine, based on the first time-frequency resource information, the position of the RE of the time-frequency resource of the first reference signal in the RB.

In another implementation, the first time-frequency resource information includes the information about the RE in which the time-frequency resource of the first reference signal is located and the information about the RB in which the time-frequency resource of the first reference signal is located. In this case, the first terminal device may determine, based on the first time-frequency resource information, the position of the RB in which the time-frequency resource of the first reference signal is located, and then determine, based on the first time-frequency resource information, the position of the RE of the time-frequency resource of the first reference signal in the RB.

Specifically, the first terminal device may determine, based on the first time-frequency resource information, the position of the RB in which the RE of the first reference signal is located and the position of the RE of the first reference signal in the RB. A position of the RE of the first reference signal in one RB may be a quantity of REs included in the time-frequency resource of the first reference signal in the RB (or a quantity of REs between time-frequency resources of the first reference signal in the RB).

The position of the RE of the first reference signal in one RB may be an offset of the RE of the first reference signal in the RB.

Optionally, the first terminal device determines an offset (referred to as a first offset below) of the RE of the first reference signal in one RB based on the first group identifier. Specifically, that the first terminal device may calculate an offset of the RE of the first reference signal in one RB based on the first group identifier may also be understood as that the first terminal device can calculate, based on the first group identifier, a specific RE that is the RE of the first reference signal in the RB.

Specifically, the first terminal device may determine the offset (namely, the first offset) of the RE of the first reference signal in one RB by using Formula 1:

$$K_{offset}=N_{RNTI} \bmod M_1 \text{ (Formula 1).}$$

$K_{offset}$ represents the first offset. $N_{RNTI}$ represents the first group identifier. Mi represents a value obtained by increasing a quantity of REs between REs of the first reference signal in one RB by 1; or may be understood as a quantity of distribution manners of REs of the first reference signal in one RB; or may be understood as a quantity of different calculated values of $K_{offset}$; or may be understood as a quantity of candidate positions of the first reference signal in one RB. A value of Mi is a positive integer, for example, 3 or 4.

For example, FIG. 5A is used as an example. The value of Mi is 4. In this case, the quantity of REs between the REs of the first reference signal in one RB is 3, that is, there are three REs between two adjacent REs of the first reference signal in one RB. The time-frequency resource of the first reference signal occupies three REs in one RB. The quantity of distribution manners of the REs of the first reference signal in one RB is 4. Because one RB includes 12 REs, one RE in every four REs is an RE of the first reference signal, that is, the RE of the first reference signal may have four candidate positions. Details are shown in Example a, Example b, Example c, and Example d in FIG. 5A. In this case, the first terminal device substitutes the first group identifier into the foregoing Formula 1 to calculate the first offset, where the first offset indicates the offset of the RE of the first reference signal in one RB. Specifically, the first terminal device performs a modulo operation with a divisor of 4 by using the first group identifier, to obtain the first offset

$K_{offset}$. If the value of $K_{offset}$ is 0, it indicates that the RE of the first reference signal is a 1st RE from bottom to top in the RB. In this case, an arrangement manner of the time-frequency resource of the first reference signal is shown in Example d in FIG. 5A. REs of the first reference signal are a 1st RE, a 5th RE, and a 9th RE in the RB. Similarly, when the value of $K_{offset}$ is 1, the RE of the first reference signal is shown in Example c in FIG. 5A; when the value of $K_{offset}$ is 2, the RE of the first reference signal is shown in Example b in FIG. 5A; or when the value of $K_{offset}$ is 3, the RE of the first reference signal is shown in Example a in FIG. 5A.

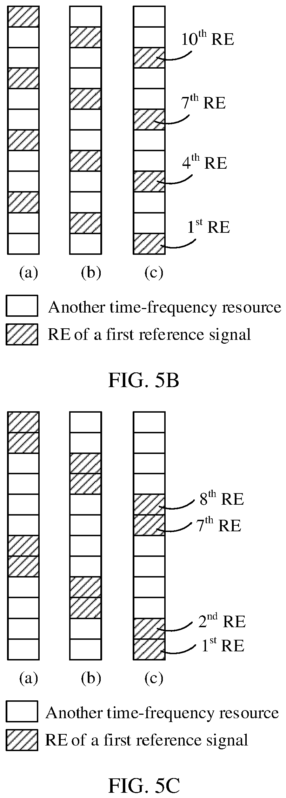

For example, FIG. 5B is used as an example. The value of Mi is 3. In this case, the quantity of REs between the REs of the first reference signal in one RB is 2, that is, there are two REs between two adjacent REs of the first reference signal in one RB. The time-frequency resource of the first reference signal occupies four REs in one RB. The quantity of distribution manners of the REs of the first reference signal in one RB is 3. Because one RB includes 12 REs, one RE in every three REs is an RE of the first reference signal, that is, the RE of the first reference signal may have three candidate positions. Details are shown in Example a, Example b, and Example c in FIG. 5B. In this case, the first terminal device substitutes the first group identifier into the foregoing Formula 1 to calculate the first offset, to obtain the first offset $K_{offset}$. If the value of $K_{offset}$ is 0, it indicates that the RE of the first reference signal is a 1st RE from bottom to top in the RB. In this case, an arrangement manner of the time-frequency resource of the first reference signal is shown in Example c in FIG. 5B. REs of the first reference signal are a 1st RE, a 4th RE, a 7th RE, and a 10th RE in the RB. Similarly, when the value of $K_{offset}$ is 1, the RE of the first reference signal is shown in Example b in FIG. 5B; or when the value of $K_{offset}$ is 2, the RE of the first reference signal is shown in Example a in FIG. 5B.

Specifically, the first terminal device may alternatively determine the offset (namely, the first offset) of the RE of the first reference signal in one RB by using Formula 2:

$$K_{offset} = (N_{RNTI} \bmod M_2) \times N_1 \text{ (Formula 2).}$$

$K_{offset}$ represents the first offset. $N_{RNTI}$ represents the first group identifier. $M_2$ represents a value obtained by decreasing a quantity of REs between REs of the first reference signal in one RB by 1; or may be understood as a quantity of distribution manners of REs of the first reference signal in one RB; or may be understood as a quantity of different calculated values of $K_{offset}$; or may be understood as a quantity of candidate positions of the first reference signal in one RB. A value of $M_2$ is a positive integer, for example, 2 or 3. $N_1$ represents a quantity of consecutive REs of the first reference signal. A value of Ni is a positive integer, for example, 1, 2, or 3.

For example, FIG. 5C is used as an example. The value of $M_2$ is 3, and the value of Ni is 2. In this case, the quantity of REs between the REs of the first reference signal in one RB is 4, that is, there are four REs between two adjacent REs of the first reference signal in one RB. The time-frequency resource of the first reference signal occupies four REs in one RB. The quantity of distribution manners of the REs of the first reference signal in one RB is 3. That is, the RE of the first reference signal may have three candidate positions. Details are shown in Example a, Example b, and Example c in FIG. 5C. The quantity of consecutive REs of the first reference signal is 2. In this case, the first terminal device substitutes the first group identifier into the foregoing Formula 2 to calculate the first offset, to obtain the first offset $K_{offset}$. If the value of $K_{offset}$ is 0, it indicates that the RE of the first reference signal is a 1st RE from bottom to top in the RB. In this case, an arrangement manner of the time-frequency resource of the first reference signal is shown in Example c in FIG. 5C. REs of the first reference signal are a 1st RE, a 2nd RE, a 7th RE, and an 8th RE in the RB. Similarly, when the value of $K_{offset}$ is 1, the RE of the first reference signal is shown in Example b in FIG. 5C; or when the value of $K_{offset}$ is 2, the RE of the first reference signal is shown in Example a in FIG. 5C.

In this embodiment, the first terminal device determines the time-frequency resource of the first reference signal based on the configuration information of the first reference signal described in any one of the foregoing implementations, so that the first terminal device can receive the first reference signal on the time-frequency resource of the first reference signal.

Step 203: The network device sends the first reference signal to the first terminal device. Correspondingly, the first terminal device receives the first reference signal from the network device.

Specifically, the network device sends the first reference signal to the first terminal device on the time-frequency resource of the first reference signal. Correspondingly, the first terminal device receives the first reference signal on the time-frequency resource of the first reference signal.

The first reference signal is one or more known sequences determined based on the first group identifier. Generally, a quantity of REs of the first reference signal is equal to a quantity of the foregoing known sequences, and the REs of the first reference signal are in one-to-one correspondence with the foregoing plurality of known sequences. In other words, each RE in the time-frequency resource of the first reference signal has a sequence corresponding to the RE. Therefore, that the first terminal device receives the first reference signal on the time-frequency resource of the first reference signal may also be understood as that the first terminal device receives, on each RE of the first reference signal, the sequence corresponding to the RE.

Step 204a: The first terminal device determines channel state information based on the first reference signal.

In this step, the first terminal device determines the sequence of the first reference signal. Then, the first terminal device determines, based on the sequence of the first reference signal, the channel state information to be fed back.

Specifically, for example, the first terminal device receives the first reference signal, performs channel estimation based on the first reference signal, and obtains the channel state information.

Optionally, the first terminal device may determine the sequence of the first reference signal based on the first group identifier. Then, the first terminal device determines, based on the sequence of the first reference signal, the channel state information to be fed back.

In a possible implementation, the first terminal device determines the first offset based on the first group identifier, where the first offset is the offset of the resource element RE of the first reference signal in one resource block RB; and the first terminal device determines the sequence of the first reference signal based on the first group identifier and the first offset.

In this implementation, the first terminal device calculates the first offset in a process of determining the sequence of the first reference signal. Sequences of a reference signal that correspond to different group identifiers may be distinguished by using the first offset. That is, different offsets correspond to different sequences of the first reference signal, to avoid interference between reference signals of different user groups, and improve communication performance.

Specifically, the first terminal device or the network device may calculate the sequence of the first reference signal by using the following formula:

First, the network device uses the first group identifier as a scrambling identifier (scrambling ID) and calculates a pseudo random sequence (pseudo random sequence) $c_{init}$ by using Formula 3:

$$c_{init} = (2^{17}(N_{symb}^{slot}n_{s,f}^{\mu} + l + 1)(2N_{RNTI} + 1) + 2N_{RNTI})\bmod 2^{31} \quad \text{(Formula 3).}$$

$N_{RNTI}$ represents the first group identifier, $l$ is a number of an orthogonal frequency division multiplexing OFDM symbol, $n_{s,f}^{\mu}$ is a quantity of slots (slots) included in a radio frame (radio frame) when a subcarrier spacing configuration parameter is $\mu$, and $N_{symb}^{slot}$ is a quantity of OFDM symbols included in a slot.

Then, the network device substitutes the pseudo random sequence $c_{init}$ into the following Formula 4, to obtain a sequence $r_l(m)$:

$$r_l(m) = \frac{1}{\sqrt{2}}(1 - 2 \cdot c(2m)) + j\frac{1}{\sqrt{2}}(1 - 2 \cdot c(2m+1)) \quad \text{(Formula 4).}$$

Then, the network device substitutes the foregoing sequence $r_l(m)$ into the following Formula 5, to obtain k :

$$k = nN_{sc}^{RB} + Mk' + K_{offset} \quad \text{(Formula 5).}$$

k represents an identifier of a subcarrier in frequency domain; $K_{offset}$ represents the foregoing first offset, that is, the offset of the RE of the first reference signal in one RB; $N_{sc}^{RB}$ represents a quantity of subcarriers included in one RB, for example, 12; n represents a number of the RB, and a value of n may be 0, 1, ...; and M may be Mi or $M_2$. Mi represents the value obtained by increasing the quantity of REs between the REs of the first reference signal in one RB by 1; and $M_2$ represents the value obtained by decreasing the quantity of REs between the REs of the first reference signal in one RB by 1. M represents the quantity of distribution manners of the REs of the first reference signal in one RB; or may be understood as representing the quantity of different calculated values of $K_{offset}$; or may be understood as representing the quantity of candidate positions of the first reference signal in one RB. The value of M is a positive integer, for example, 2, 3, or 4. When M is $M_1$, the value of M may be 3 or 4. When M is $M_2$, the value of M may be 2 or 3. Therefore, when n, $N_{sc}^{RB}$ , k, $K_{offset}$, and M are known, the network device may calculate k .

Alternatively, Formula 5 may be transformed into the following formula:

$$k = nN_{sc}^{RB} + Mk^{'} + K_{offset} + m \quad \text{(transformation of Formula 5)}.$$

A value of m is 0, 1, ..., or Ni-1, and $N_1$ represents the quantity of consecutive REs of the first reference signal. Therefore, when n, m, $N_{sc}^{RB}$, k, $K_{offset}$, and M are known, the network device may calculate $k'$.

Then, the network device substitutes $k'$ into Formula 6, and calculates a sequence $a_{k,l}^{(p,\mu)}$ of the first reference signal:

$$a_{k,l}^{(p,\mu)} = \beta \cdot r_l(3n + k^{'}) \quad \text{(Formula 6)}.$$

$\beta$ represents a power parameter; k represents an identifier of a subcarrier in frequency domain; $l$ represents an identifier of a symbol in time domain; p represents a number of an antenna port for sending the first reference signal; and $\mu$ represents a subcarrier spacing configuration parameter. For example, a value of $\mu$ may be 0, 1, 2, 3, or 4 that corresponds to a subcarrier spacing of 15 kHz, 30 kHz, 60 kHz, 120 kHz, or 240 kHz.

It should be understood that the step of calculating the sequence of the first reference signal by the network device may be the same as the step of calculating the first reference signal by the first terminal device. In other words, Formula 1, Formula 2, Formula 3, Formula 4, Formula 5, and Formula 6 are also applied to calculating, by the network device, the sequence of the first reference signal based on the first group identifier.

In this implementation, the first terminal device determines the sequence of the first reference signal based on the first group identifier. However, in the NR standard, a terminal device calculates a sequence of a reference signal based on a user identifier (for example, a temporary identifier C-RNTI of the terminal device). Determining the sequence of the first reference signal based on the group identifier (for example, the first group identifier) can avoid signaling indication overheads of the sequence. In addition, different group identifiers may correspond to different sequences, so that interference randomization can be implemented on the sequence, to improve communication performance.

In a possible implementation, a process in which the first terminal device determines, based on the sequence of the first reference signal, the channel state information to be fed back may be specifically as follows:

The first terminal device compares the sequence of the first reference signal calculated by the first terminal device with a sequence of the first reference signal that is received from the network device, to obtain channel state information of a channel on the time-frequency resource of the first reference signal. Then, the first terminal device calculates, based on an interpolation algorithm or an averaging algorithm (or another algorithm, which is not limited), channel state information of a time-frequency resource near the time-frequency resource of the first reference signal. For example, in the example in FIG. 4B, it is assumed that a block with slashes represents an RE of the first reference signal, and a block without slashes represents an RE of the control channel. After the first terminal device calculates channel state information of a 1st RE, a 5th RE, and a 9th RE, the first terminal device may calculate channel state information of the other nine REs (that is, REs of the control channel) based on the interpolation algorithm. In other words, the channel state information calculated by the first terminal device can reflect both a channel state on the time-frequency resource of the first reference signal and a channel state on the time-frequency resource near the time-frequency resource of the first reference signal.

In a possible implementation, the terminal device determines channel state information, where the channel state information includes first channel state information and/or second channel state information. The first channel state information includes instantaneous channel state information determined by the first terminal device based on the first reference signal, and the second channel state information includes average channel state information determined by the first terminal device based on the first reference signal. The instantaneous channel state information is channel state information measured by the first terminal device on a time domain unit (for example, a symbol of the time-frequency resource of the first reference signal). The average channel state information is an average result or a time-domain filtering result of a plurality of pieces of channel state information measured by the first terminal device on a plurality of time domain units. However, in the NR standard, in one time of feedback, the terminal device may feed back only average channel state information to the network device, or may feed back only instantaneous channel state information to the network device, but does not feed back both instantaneous channel state information and average channel state information to the network device.

The channel state information includes at least one of the following:

(1) a channel quality indicator (channel quality indicator, CQI) corresponding to the time-frequency resource of the first reference signal, where the channel quality indicator CQI may be a channel quality indicator CQI measured on a time domain unit, that is, an instantaneous channel quality indicator CQI; or may be an average result of a plurality of channel quality indicators CQIs measured on a plurality of time domain units, that is, an average channel quality indicator CQI;

(2) a modulation and coding scheme (modulation and coding scheme, MCS) corresponding to the time-frequency resource of the first reference signal, where the modulation and coding scheme MCS may be a modulation and coding scheme MCS measured on a time domain unit, that is, an instantaneous modulation and coding scheme MCS; or may be an average result of a plurality of modulation and coding schemes MCSs measured on a plurality of time domain units, that is, an average modulation and coding scheme MCS; and

(3) information indicating the time-frequency resource corresponding to the first reference signal, where the information indicating the time-frequency resource corresponding to the first reference signal indicates a time-frequency resource corresponding to the channel state information fed back by the first terminal device.

The information indicating the time-frequency resource corresponding to the first reference signal may be at least one of the following: a control channel resource set CORESET identifier corresponding to the first reference signal, an identifier of the first reference signal, the first group identifier, and an identifier of a first control channel element CCE group corresponding to the first reference signal.

The control channel resource set CORESET identifier corresponding to the first reference signal indicates that the time-frequency resource of the first reference signal is related to a CORESET indicated by the CORESET identifier. Because the network device knows a time-frequency domain position of the CORESET indicated by the CORESET identifier, when the channel state information fed back by the first terminal device includes the CORESET identifier, the network device can learn that the channel state information reflects a channel state on a time-frequency resource of a reference signal in the CORESET indicated by the CORESET identifier.

The first control channel element CCE group identifier corresponding to the first reference signal indicates that the time-frequency resource reflected by the channel state information to be fed back is located in one or more CCE groups. Because the network device can determine, based on the CCE group identifier, a position of a time-frequency resource corresponding to a CCE in time-frequency domain, when the channel state information fed back by the first terminal device includes the CCE group identifier, the network device can learn that the channel state information reflects a channel state of the time-frequency resource indicated by the CCE group identifier.

The identifier of the first reference signal indicates an identifier corresponding to a reference signal corresponding to the channel state information to be fed back, and the identifier may represent the time-frequency resource of the reference signal. Because the network device can determine, based on the identifier of the first reference signal, the position of the time-frequency resource corresponding to the reference signal in time-frequency domain, when the channel state information fed back by the first terminal device includes the identifier of the first reference signal, the network device can learn that the channel state information reflects the channel state on the time-frequency resource indicated by the identifier of the first reference signal.

The first group identifier indicates a group identifier corresponding to the reference signal corresponding to the channel state information to be fed back. The group identifier may represent the time-frequency resource of the reference signal, and/or a sequence, and/or a user group corresponding to the reference signal. Because the network device can determine, based on the group identifier, the position of the time-frequency resource corresponding to the reference signal in time-frequency domain, when the channel state information fed back by the first terminal device includes the group identifier, the network device can learn that the channel state information reflects the channel state on the time-frequency resource indicated by the group identifier.

The channel state information in this embodiment is not completely the same as the channel state information CSI in the NR standard. First, measurement bases are different. In the NR standard, the CSI fed back by the terminal device to the network device is measured based on the CSI-RS. However, in this embodiment, the channel state information fed back by the first terminal device to the network device is determined based on the first reference signal. It can be learned from related descriptions in step 201a that the first reference information and the CSI-RS are different reference signals. Second, content is different. In the NR standard, the CSI may include one or more of the following: a channel quality indicator (channel quality indicator, CQI), a precoding matrix indicator (precoding matrix indicator, PMI), a CSI reference signal resource indicator (CSI-RS resource indicator, CRI), an SSB resource indicator (SS/PBCH Block Resource Indicator, SSBRI), a layer indicator (layer indicator, LI), a rank indicator (rank indicator, RI), layer 1 reference signal received power (layer 1 reference signal received power, L1-RSRP), or the like. However, the channel state information in this application may include the content of the CSI in the NR standard, and may further include information related to the time-frequency resource of the first reference signal, for example, the control channel resource set CORESET identifier, the identifier of the first reference signal, and the first group identifier. When the first terminal device performs channel estimation on the control channel, the channel state information may further include channel state information of the control channel.

Step 205: The first terminal device sends the channel state information to the network device.

In this embodiment, after the first terminal device determines the channel state information, the first terminal device sends the channel state information to the network device by using a time-frequency resource agreed on with the network device (or a time-frequency resource configured by the network device), so that the network device communicates with the terminal device based on the channel state information.

The channel state information may include both the first channel state information (that is, the instantaneous channel state information determined by the first terminal device based on the first reference signal) and the second channel state information (that is, the average channel state information determined by the first terminal device based on the first reference signal).

In this case, the first terminal device may feed back the first channel state information and the second channel state information to the network device in any one of the following implementations. In this scenario, the first terminal device may feed back both the first channel state information and the second channel state information. Because the first channel state information and the second channel state information are fed back for different purposes, and measurement and feedback methods/content are/is different, the first terminal feeds back both the first channel state information and the second channel state information, to assist the network device in determining different communication policies.

The following embodiment is used to describe a method for determining, by the first terminal device, a resource for feeding back channel state information. The method may be used as an independent embodiment, or may be combined with another embodiment of the present invention. This is not specifically limited in this application.

In a possible implementation, when the first channel state information is periodically fed back, and the second channel state information is triggered to be fed back, the first terminal device uses a time-frequency resource for feeding back the second channel state information as a reference. That is, the first terminal device may feed back the first channel state information and the second channel state information on the time-frequency resource for feeding back the second channel state information. For example, the first terminal device feeds back the first channel state information and the second channel state information by using the time-frequency resource that is configured by the network device and that is used to feed back the second channel state information. For example, the time-frequency resource for feeding back the second channel state information may be indicated by using control information. For example, the indication is carried in downlink control information DCI.

In a possible implementation, the first channel state information is semi-persistently fed back, and the second channel state information is triggered to be fed back.

If the first terminal device needs to feed back a negative acknowledgment (NACK) to the network device, the first terminal device uses a time-frequency resource for feeding back the second channel state information as a reference. That is, the first terminal device may feed back the first channel state information and the second channel state information on the time-frequency resource for feeding back the second channel state information. For example, the first terminal device feeds back the first channel state information and the second channel state information by using the time-frequency resource that is configured by the network device and that is used to feed back the second channel state information. Optionally, the time-frequency resource that is configured by the network device and that is used to feed back the second channel state information may be different from a time-frequency resource that is indicated in downlink control information DCI and that is used to feed back the channel state information.

If the first terminal device needs to feed back an acknowledgment (ACK) to the network device, the first terminal device uses a time-frequency resource for feeding back the first channel state information as a reference. That is, the first terminal device may feed back the first channel state information and the second channel state information on the time-frequency resource for feeding back the first channel state information. For example, the first terminal device feeds back the first channel state information and the second channel state information by using the time-frequency resource that is configured by the network device and that is used to feed back the first channel state information. Optionally, the time-frequency resource that is configured by the network device and that is used to feed back the first channel state information may be a time-frequency resource that is indicated in downlink control information DCI and that is used to feed back the channel state information.

If the first terminal device needs to feed back an acknowledgment (ACK) to the network device, the first terminal device may feed back only the first channel state information, and does not feed back the second channel state information. In this case, the first terminal device may use a time-frequency resource for feeding back the first channel state information as a reference. That is, the first terminal device may feed back the first channel state information on the time-frequency resource for feeding back the first channel state information. For example, the first terminal device feeds back the first channel state information by using the time-frequency resource that is configured by the network device and that is used to feed back the first channel state information. Optionally, the time-frequency resource that is configured by the network device and that is used to feed back the first channel state information may be a time-frequency resource that is indicated in downlink control information DCI and that is used to feed back the channel state information.

In a possible implementation, the first channel state information is triggered to be fed back, and the second channel state information is triggered to be fed back. In this case, the first terminal device may feed back the first channel state information and the second channel state information by using a time-frequency resource that is indicated in downlink control information DCI and that is used to feed back the channel state information. Similarly, the network device may receive the first channel state information and the second channel state information by using the time-frequency resource that is indicated in the downlink control information DCI and that is used to feed back the channel state information.

The triggered feedback in this embodiment of this application may also be referred to as aperiodic feedback. This is not limited in the present invention.

It should be understood that, during actual application, the first terminal device may feed back the first channel state information and the second channel state information to the network device in any one of the foregoing implementations. This is not specifically limited herein.

It should be understood that, during actual application, the network device may receive, in any one of the foregoing implementations, the first channel state information and the second channel state information that are fed back by the first terminal device. This is not specifically limited herein.

In this application, a first group of reference signals received by a first terminal device are reference signals shared by the terminal devices in the first user group, and the first reference signal can be used for both channel estimation of the control channel and feedback of the channel state information. Therefore, pilot overheads can be reduced.

In an optional implementation, before step 202, the channel state information transmission method further includes the following step:

Step 201b: The network device sends channel state feedback configuration information to the first terminal device. Correspondingly, the first terminal device receives the channel state feedback configuration information from the network device.

The channel state feedback configuration information indicates content (that is, content of the channel state information) that needs to be fed back by the first terminal device and/or how to feed back the foregoing content (that is, a time-frequency resource on which the channel state information is fed back).

Optionally, the channel state feedback configuration information includes first indication information. The first indication information indicates a time-frequency resource for feeding back channel state information. The channel state information that may be generated by the first terminal device is first channel state information and/or second channel state information. Therefore, the first indication information may also be understood as indicating a time-frequency resource for feeding back the first channel state information and/or the second channel state information. In other words, the network device may indicate, by using the first indication information, a time-frequency resource to be used by the first terminal device to transmit, to the network device, the channel state information to be fed back, so that the first terminal device feeds back the first channel state information and/or the second channel state information on the time-frequency resource indicated by the first indication information. In this implementation, the network device can indicate a time-frequency resource to be used by the first terminal device to feed back the channel state information. The network device may separately indicate the time-frequency resource for feeding back the first channel state information, the network device may separately indicate the time-frequency resource for feeding back the second channel state information, or the network device may indicate a time-frequency resource to be used by the first terminal device to feed back the first channel state information and the second channel state information to the network device. This is not specifically limited herein.

Optionally, the channel state feedback configuration information further includes second indication information and/or third indication information. The second indication information indicates the first terminal device to feed back first channel state information, and the third indication information indicates the first terminal device to feed back the second channel state information. For example, the second indication information indicates the first terminal device to feed back instantaneous channel state information, and the third indication information indicates the first terminal device to feed back average channel state information. In this implementation, the network device can indicate the first terminal device to feed back both the average channel state information and the instantaneous channel state information to the network device. In this way, CSI reporting with different measurement requirements can be implemented, and accuracy of obtaining the channel state information is improved, to improve communication performance. However, in the NR standard, the network device generally indicates the terminal device to feed back only average channel state information or instantaneous channel state information, and does not require the terminal device to feed back both the average channel state information and the instantaneous channel state information.

Optionally, the second indication information and the third indication information may be one piece of information. That is, the first terminal device determines, based on the information, to feed back the first channel state information and/or the second channel state information.

In a possible implementation, the method further includes: The first terminal device receives second indication information and/or third indication information, where the second indication information indicates the first terminal device to feed back average channel state information, and the third indication information indicates the first terminal device to feed back instantaneous channel state information.

Optionally, the second indication information and the third indication information may be one piece of information.

That is, the first terminal device determines, based on the information, to feed back the average channel state information and/or the instantaneous channel state information.

Optionally, the channel state feedback configuration information further includes a time-domain filtering length, and the time-domain filtering length is used to determine a time domain unit for measuring the second channel state information, for example, used to determine a time domain unit for measuring the average channel state information. In this implementation, when the first terminal device needs to measure the average channel state information, the network device may configure the time-domain filtering length for the first terminal device based on an actual network status, to obtain accurate channel state information, so as to improve communication performance. However, in the NR standard, the network device does not configure the time-domain filtering length for the first terminal device, and in the NR standard, the network device indicates only whether the first terminal device needs to perform time-domain filtering.

It should be understood that the first indication information, the second indication information, the third indication information, and the like may be carried in the channel state feedback configuration information, or may be carried in other information to be configured for the first terminal device. For example, when the time-frequency resource of the first reference signal is located in a CORESET, the first indication information, the second indication information, or the third indication information may be carried in CORESET configuration information to be sent by the network device to the first terminal device.

In a possible implementation, before step 205, the channel state information transmission method further includes the following step:

Step 204b: The first terminal device blindly detects a control channel based on the first reference signal.

Optionally, a sequence of step 204a and step 204b is not limited. For example, step 204a is performed before step 204b, or step 204a is performed after step 204b, or step 204a and step 204b are performed at the same time.

In this embodiment, because the first reference signal can be used for channel estimation of the control channel, the first terminal device may blindly detect the control channel based on the first reference signal, and include a result of blindly detecting the control channel in the channel state information in step 205, so that the result can be fed back to the network device in a form of the channel state information. For example, the channel state information in step 205 is determined based on blind detection performed by the first terminal device on the control channel.

In this case, the channel state information further includes an identifier of a second control channel element CCE group, a channel quality indicator CQI corresponding to a second control channel element CCE group, and/or a modulation and coding scheme MCS corresponding to a second control channel element CCE group. The second control channel element CCE group includes a control channel element CCE group whose channel quality meets a preset threshold; all control channel element CCE groups determined in a blind detection procedure of the control channel; or a control channel element CCE group that is successfully blindly detected.

In an optional implementation, the second control channel element CCE group is the control channel element CCE group whose channel quality meets the preset threshold. The control channel element CCE group whose channel quality meets the preset threshold may be a time-frequency resource with a good channel state. For example, a measurement value of a channel state indicator (for example, layer 1 reference signal received power L1-RSRP) corresponding to the time-frequency resource is greater than a preset threshold. Alternatively, the time-frequency resource may be a time-frequency resource with a best channel state, for example, a time-frequency resource corresponding to a maximum value in measurement values of a plurality of channel state indicators. Alternatively, the time-frequency resource may be a time-frequency resource with a poor channel state. For example, a measurement value of a channel state indicator (for example, layer 1 reference signal received power L1-RSRP) corresponding to the time-frequency resource is less than a preset threshold. In this way, the network device can determine, based on channel state information that is of a time-frequency resource position indicated by a control channel element CCE group meeting a preset threshold and that is fed back by the first terminal device, to schedule the resource during retransmission.

For example, the first terminal device may feed back an identifier of the CCE group (for example, an index value (index) of the CCE group) and a CQI and/or an MCS corresponding to the identifier of the CCE group. The CQI and/or the MCS may be absolute values/an absolute value or differences/a difference. The difference may be an MCS or a CQI for current data scheduling. The CCE group may be determined according to a method specified in a protocol, or may be determined based on signaling sent by the network device to the first terminal device.

In another optional implementation, the second control channel element CCE group is all the control channel element CCE groups determined in the blind detection procedure of the control channel.

Specifically, to receive the downlink control information DCI, the terminal device needs to blindly detect a control channel candidate set, to determine a control channel that carries the DCI, and obtain the DCI from the control channel. After the blind detection succeeds, the terminal device may feed back average channel state information and/or instantaneous channel state information of all control channel candidates (for example, PDCCH candidates) in a blind detection process.

Further, a blind detection sequence of the control channel may be implemented based on the first terminal device, that is, the first terminal device determines the blind detection sequence; or a blind detection sequence may be specified in a protocol; or a blind detection sequence may be notified by the network device to the terminal device by using signaling. In addition, the PDCCH candidate blindly detected by the terminal device may be configured by the network device. For example, the network device configures an aggregation level and a quantity of corresponding PDCCH candidates for the first terminal device.

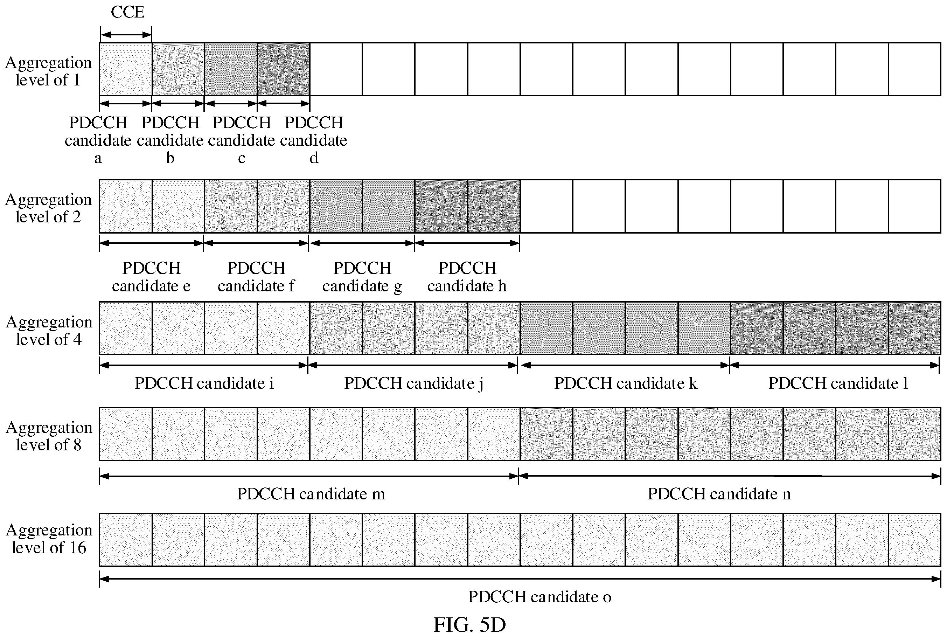

For example, the blind detection sequence may be a PDCCH candidate at a low aggregation level to a PDCCH candidate at a high aggregation level. At a same aggregation level, detection may start from a PDCCH candidate with a smaller CCE index. A lowest number of a CCE included in a PDCCH candidate may be calculated and determined by using a formula specified in a protocol. The aggregation level refers to a quantity of CCEs included in one PDCCH candidate. Using FIG. 5D as an example, the aggregation level may be 1, 2, 4, 8, 16, or the like. The aggregation level of 1 may correspond to four PDCCH candidates, that is, a PDCCH candidate a, a PDCCH candidate b, a PDCCH candidate c, and a PDCCH candidate d in FIG. 5D, where one PDCCH candidate includes one CCE. The aggregation level of 2 may correspond to four PDCCH candidates, that is, a PDCCH candidate e, a PDCCH candidate f, a PDCCH candidate g, and a PDCCH candidate h in FIG. 5D, where one PDCCH includes two CCEs. The aggregation level of 4 may correspond to four PDCCH candidates, that is, a PDCCH candidate i, a PDCCH candidate j, a PDCCH candidate k, and a PDCCH candidate 1 in FIG. 5D, where one PDCCH candidate includes four CCEs. The aggregation level of 8 may correspond to two PDCCH candidates, that is, a PDCCH candidate m and a PDCCH candidate n in FIG. 5D, where one PDCCH candidate includes eight CCEs. The aggregation level of 16 may correspond to one PDCCH candidate, that is, a PDCCH candidate o in FIG. 5D, where one PDCCH candidate includes 16 CCEs.

For example, the network device configures the aggregation level for blind detection and the quantity of PDCCH candidates for the first terminal device. For example, if the first network device successfully detects DCI when blindly detecting a $2^{nd}$ PDCCH candidate (for example, the PDCCH candidate f in FIG. 5D) at the aggregation level of 2, the first terminal device may stop blind detection, and feed back channel state information corresponding to all blindly detected CCEs to the network device. In this case, all the blindly detected CCEs (that is, all the CCE groups determined in the blind detection procedure of the control channel) are the first four CCEs at the aggregation level of 2 in FIG. 5D, that is, two CCEs corresponding to the PDCCH candidate e and two CCEs corresponding to the PDCCH candidate f. For another example, if the first network device successfully detects DCI when blindly detecting a $2^{nd}$ PDCCH candidate at the aggregation level of 4, the first terminal device may stop blind detection, and feed back channel state information corresponding to all blindly detected CCEs to the network device. In this case, all the blindly detected CCEs (that is, all the CCE groups determined in the blind detection procedure of the control channel) are the first eight CCEs at the aggregation level of 4 in FIG. 5D, that is, four CCEs corresponding to the PDCCH candidate i and four CCEs corresponding to the PDCCH candidate j.

In a possible implementation, the network device and the first terminal device may unify the blind detection sequence, so that the network device can dynamically change all CCE candidates blindly detected by the first terminal device. The first terminal device stops blind detection each time at a PDCCH candidate in which DCI actually sent by the network device is located. The first terminal device stops detection after the blind detection succeeds. In this method, the network device may learn of a CCE corresponding to the channel state information fed back by the first terminal device, so that the network device subsequently allocates a resource for data scheduling.

In another optional implementation, the second control channel element CCE group is a control channel element CCE group that is successfully blindly detected, that is, a CCE group corresponding to a PDCCH that is successfully blindly detected. In this case, the first terminal device feeds back only channel state information of a CCE corresponding to a PDCCH candidate in which successfully detected DCI is located. When sending the DCI, the network device selects a PDCCH candidate with a good channel state to send the DCI, and the first terminal device also feeds back channel state information corresponding to the PDCCH candidate.

For example, FIG. 5D is still used as an example. The network device configures an aggregation level for blind detection and a quantity of PDCCH candidates for the first terminal device. If the first network device successfully detects DCI when blindly detecting a $2^{nd}$ PDCCH candidate (that is, the PDCCH candidate f) at the aggregation level of 2, the terminal device may stop blind detection, and feed back, to the network device, channel state information corresponding to CCEs (that is, two CCEs corresponding to the PDCCH candidate f) that are successfully blindly detected. For another example, if the first network device successfully detects DCI when blindly detecting a $2^{nd}$ PDCCH candidate (that is, the PDCCH candidate j) at the aggregation level of 4, the terminal device may stop blind detection, and feed back, to the network device, channel state information corresponding to CCEs (that is, four CCEs corresponding to the PDCCH candidate j) that are successfully blindly detected.

In this implementation, the network device may obtain channel state information corresponding to optimal scheduling, to reduce measurement and feedback complexity of the first terminal device, and reduce a measurement and feedback delay of the first terminal device.

In this implementation, the first reference signal may be used for channel estimation of the control channel. When calculating the channel state information, the first terminal device may further blindly detect the control channel (for example, a downlink control channel) based on the first reference signal. When feeding back the channel state information to the network device, the first terminal device can also feed back the result of blindly detecting the control channel to the network device as a part of the channel state information. In the foregoing manner, the channel state information may be fed back with reference to a blind detection status of the control channel, so that accuracy and applicability of the channel state information can be improved, to improve communication performance.

The foregoing describes a solution in which the network device configures the first reference signal corresponding to the first user group for the first terminal device, so that the first terminal device reports the channel state information based on the first reference signal. However, during actual application, the network device may configure reference signals of more than one user group for the first terminal device, and the network device may configure reference signals of a plurality of user groups for the first terminal device, so that the first terminal device feeds back, based on different reference signals, channel state information corresponding to different reference signals. Further, the network device can decide terminal pairing based on channel state information that is of reference signals corresponding to different user groups and that is fed back by the first terminal device. That is, the network device determines a user group to which the first terminal device should be divided.

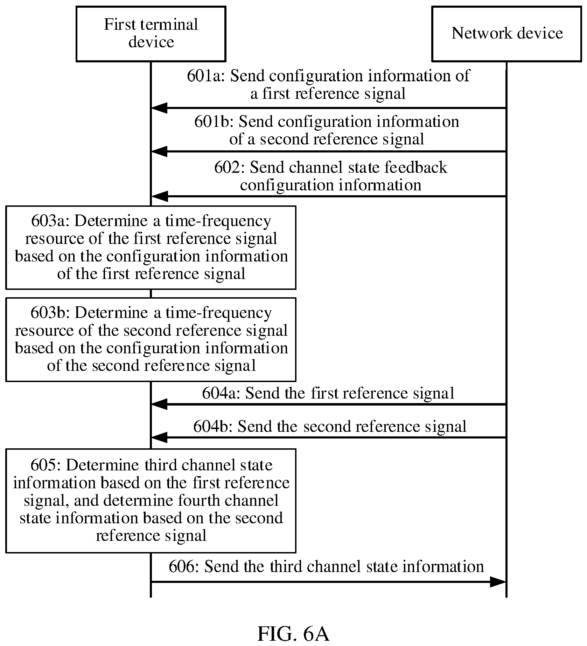

The following uses an example in which a network device configures reference signals of two user groups for a first terminal device for description. As shown in FIG. 6A, the first terminal device and the network device perform the following steps.

Step 601a: The network device sends configuration information of a first reference signal to the first terminal device. Correspondingly, the first terminal device receives the configuration information of the first reference signal from the network device.

The configuration information of the first reference signal indicates a time-frequency resource of the first reference signal, and the configuration information of the first reference signal includes the foregoing first group identifier. Optionally, the configuration information of the first reference signal may further include first time-frequency resource information. For details, refer to related descriptions in step 201a. Details are not described herein again.

Step 601b: The network device sends configuration information of a second reference signal to the first terminal device. Correspondingly, the first terminal device receives the configuration information of the second reference signal from the network device. Optionally, the configuration information of the first reference signal and the configuration information of the second reference signal may be sent by using one piece of information, or may be sent by using different information. This is not limited herein.

The second reference signal is a reference signal configured by the network device for the first terminal device, and the second reference signal corresponds to a second user group. In other words, a terminal device in the second user group may use the second reference signal to perform channel estimation on a control channel and/or feed back channel state information. The second user group includes at least two terminal devices. The first terminal device may belong to the second user group, or the first terminal device may not belong to the second user group. This is not specifically limited herein.

In addition, the configuration information of the second reference signal indicates a time-frequency resource of the second reference signal, that is, indicates a time-frequency resource on which the first terminal device can receive the second reference signal. For an implementation of the time-frequency resource of the second reference signal, refer to the implementation of the time-frequency resource of the first reference signal in step 201a. Details are not described herein again.

In a possible implementation, the configuration information of the second reference signal includes a second group identifier. The second group identifier identifies the second user group.

Optionally, the second group identifier may be used to determine the time-frequency resource of the second reference signal and/or a sequence of the second reference signal. The network device includes the second group identifier in the configuration information of the second reference signal that is to be sent to the first terminal device, to indicate the first terminal device to use a reference signal (that is, the second reference signal) corresponding to the second user group, and the first terminal device receives the second reference signal (the sequence including the second reference signal) on a time-frequency resource corresponding to the second user group (or the second group identifier). In this implementation, the first terminal device may determine the time-frequency resource of the second reference signal based on the second group identifier.

In another possible implementation, the configuration information of the second reference signal includes a second group identifier and the second time-frequency resource information. The second time-frequency resource information indicates the time-frequency resource of the second reference signal. In this implementation, the first terminal device may determine the time-frequency resource of the second reference signal based on the second group identifier and the second time-frequency resource information.

For details, refer to related descriptions in step 201a. Details are not described herein again.

It should be understood that the time-frequency resource of the first reference signal does not overlap the time-frequency resource of the second reference signal. In other words, a time-frequency domain position of the time-frequency resource of the first reference signal is different from a time-frequency domain position of the time-frequency resource of the second reference signal. Optionally, the time-frequency domain position of the time-frequency resource of the first reference signal is adjacent to the time-frequency domain position of the time-frequency resource of the second reference signal.

It should be understood that there is no specific limitation on a time sequence between step 601a and step 601b. The network device may perform step 601a before performing step 601b, or may perform step 601b before performing step 601a, or may perform step 601a and step 601b at the same time. This is not specifically limited herein.

Step 602: The network device sends channel state feedback configuration information to the first terminal device. Correspondingly, the first terminal device receives the channel state feedback configuration information from the network device.

The channel state feedback configuration information indicates content (that is, content of the channel state information) that needs to be fed back by the first terminal device and/or how to feed back the foregoing content (that is, a time-frequency resource on which the channel state information is fed back). It should be understood that the channel state feedback information in step 602 may be sent to the first terminal device by using a separate message, or the channel state feedback information and the configuration information of the first reference signal or the configuration information of the second reference signal may be encapsulated into a message.

Optionally, the channel state feedback configuration information includes first indication information. The first indication information indicates a time-frequency resource for feeding back channel state information. Channel state information generated by the first terminal device includes channel state information measured based on the first reference signal and/or channel state information measured based on the second reference signal. Therefore, the first indication information may also be understood as indicating a time-frequency resource for feeding back the channel state information measured based on the first reference signal and/or the channel state information measured based on the second reference signal. In other words, the network device may indicate, by using the first indication information, a time-frequency resource to be used by the first terminal device to transmit, to the network device, the channel state information to be fed back, so that the first terminal device feeds back, on the time-frequency resource indicated by the first indication information, the channel state information measured based on the first reference signal and/or the channel state information measured based on the second reference signal. Optionally, the first indication information may indicate two different time-frequency resources (for example, time-frequency resources on which uplink control channels are located) respectively used to feed back the channel state information measured based on the first reference signal and the channel state information measured based on the second reference signal. Optionally, the first indication information may alternatively indicate one time-frequency resource, indicating the first terminal device to feed back the channel state information measured based on the first reference signal or the channel state information measured based on the second reference signal.

Optionally, the channel state feedback configuration information further includes second indication information and/or third indication information. The second indication information indicates the first terminal device to feed back first channel state information, and the third indication information indicates the first terminal device to feed back the second channel state information. When the first terminal device receives the second indication information, the first terminal device determines first channel state information measured based on the first reference signal and first channel state information measured based on the second reference signal. When the first terminal device receives the third indication information, the first terminal device determines second channel state information measured based on the first reference signal and second channel state information measured based on the second reference signal.

Optionally, the second indication information and the third indication information may be one piece of information. That is, the first terminal device determines, based on the information, to feed back the first channel state information and/or the second channel state information.

In a possible implementation, the method further includes: The first terminal device receives second indication information and/or third indication information, where the second indication information indicates the first terminal device to feed back average channel state information, and the third indication information indicates the first terminal device to feed back instantaneous channel state information. When the first terminal device receives the second indication information, the first terminal device determines first channel state information measured based on the first reference signal and average channel state information measured based on the second reference signal. When the first terminal device receives the third indication information, the first terminal device determines second channel state information measured based on the first reference signal and instantaneous channel state information measured based on the second reference signal.

Optionally, the second indication information and the third indication information may be one piece of information. That is, the first terminal device determines, based on the information, to feed back the average channel state information and/or the instantaneous channel state information.

Optionally, the channel state feedback configuration information may further include fourth indication information, and the fourth indication information indicates the first terminal device to feed back, according to a predefined rule, a set of channel state information that meets the predefined rule from channel state information measured based on different reference signals. For example, the fourth indication information indicates to feed back channel state information indicating a better channel state in the channel state information measured based on the first reference signal and the channel state information measured based on the second reference signal. For example, if a channel state indicated by the channel state information measured based on the first reference signal is better than a channel state indicated by the channel state information measured based on the second reference signal, the first terminal device may feed back the channel state information measured based on the first reference signal to the network device.

Optionally, the first terminal device may feed back, according to a predefined rule, a set of channel state information from channel state information measured based on different reference signals. For example, the first terminal device may feed back channel state information with a better channel state in the channel state information measured based on the first reference signal and the channel state information measured based on the second reference signal. For example, if a channel state indicated by the channel state information measured based on the first reference signal is better than a channel state indicated by the channel state information measured based on the second reference signal, the first terminal device may feed back the channel state information measured based on the first reference signal to the network device. For example, if a channel state indicated by the channel state information measured based on the second reference signal is better than a channel state indicated by the channel state information measured based on the first reference signal, the first terminal device may feed back the channel state information measured based on the second reference signal to the network device.

It should be understood that the first indication information, the second indication information, the third indication information, the fourth indication information, and the like may be carried in the channel state feedback configuration information, or may be carried in other information to be configured for the first terminal device. For example, when the time-frequency resource of the first reference signal is located in a CORESET, the first indication information, the second indication information, the third indication information, and the fourth indication information may be carried in CORESET configuration information to be sent by the network device to the first terminal device.

Step 603a: The first terminal device determines the time-frequency resource of the first reference signal based on the configuration information of the first reference signal.

Step 603b: The first terminal device determines the time-frequency resource of the second reference signal based on the configuration information of the second reference signal.

In this embodiment, step 603a and step 603b are similar to step 202. For details, refer to related descriptions in step 202. Details are not described herein again.

It should be understood that there is no specific limitation on a time sequence between step 603a and step 603b. The network device may perform step 603a before performing step 603b, or may perform step 603b before performing step 603a, or may perform step 603a and step 603b at the same time. This is not specifically limited herein.

Step 604a: The network device sends the first reference signal to the first terminal device. Correspondingly, the first terminal device receives the first reference signal from the network device.

Specifically, the network device sends the first reference signal to the first terminal device on the time-frequency resource of the first reference signal. Correspondingly, the first terminal device receives the first reference signal on the time-frequency resource of the first reference signal.

Step 604b: The network device sends the second reference signal to the first terminal device. Correspondingly, the first terminal device receives the second reference signal from the network device.

Specifically, the network device sends the second reference signal to the first terminal device on the time-frequency resource of the second reference signal. Correspondingly, the first terminal device receives the second reference signal on the time-frequency resource of the second reference signal.

In this embodiment, step 604a and step 604b are similar to step 203. For details, refer to related descriptions in step 203. Details are not described herein again.

It should be understood that there is no specific limitation on a time sequence between step 604a and step 604b. The network device may perform step 604a before performing step 604b, or may perform step 604b before performing step 604a, or may perform step 604a and step 604b at the same time. This is not specifically limited herein.

Step 605: The first terminal device determines third channel state information based on the first reference signal, and determines fourth channel state information based on the second reference signal.

The third channel state information includes the channel state information determined by the first terminal device based on the first reference signal, and the fourth channel state information includes the channel state information determined by the first terminal device based on the second reference signal.

The third channel state information includes average channel state information determined by the first terminal device based on the first reference signal, and the fourth channel state information includes average channel state information determined by the first terminal device based on the second reference signal.

Specifically, the first terminal device may determine a sequence of the first reference signal based on the first group identifier. Then, the first terminal device compares the sequence of the first reference signal that is determined based on the first group identifier with a sequence of the first reference signal that is received by the first terminal device on the time-frequency resource of the first reference signal, to determine the instantaneous channel state information of the first reference signal. The first terminal device may measure instantaneous channel state information of a plurality of groups of first reference signals on a plurality of time units in a configured time-domain filtering window. Then, the first terminal device averages the instantaneous channel state information of the plurality of groups of first reference signals to obtain the average channel state information of the first reference signal. Similarly, the first terminal device also calculates the average channel state information of the second reference signal through a similar step. For details, refer to related descriptions in step 204a. Details are not described herein again.

Step 606: The first terminal device sends the channel state information to the network device.

Optionally, the channel state information may be the third channel state information and/or the fourth channel state information.

For example, when a channel state indicated by the third channel state information is better than a channel state indicated by the fourth channel state information, the first terminal device sends the third channel state information.

In a possible implementation, the channel state information includes at least one of the following: a channel quality indicator CQI corresponding to the time-frequency resource of the second reference signal; a modulation and coding scheme MCS corresponding to the time-frequency resource of the second reference signal; or information indicating the time-frequency resource corresponding to the second reference signal.

The information indicating the time-frequency resource corresponding to the second reference signal may be at least one of the following: a control channel resource set identifier corresponding to the second reference signal, an identifier of the second reference signal, a second group identifier, and an identifier of a third control channel element CCE group corresponding to the second reference signal.

In this embodiment, the first terminal device may receive a plurality of reference signals (for example, the first reference signal and the second reference signal), and the plurality of reference signals may correspond to different user groups. Certainly, the first terminal device may belong to either of the foregoing two user groups (that is, the first user group corresponding to the first reference signal and the second user group corresponding to the second reference signal), or the first terminal device may not belong to the foregoing two user groups. In this case, the first terminal device can separately perform channel estimation based on the first reference signal and the second reference signal to determine channel state information (for example, the third channel state information determined based on the first reference signal and the fourth channel state information determined based on the second reference signal). Then, the first terminal device may report, to the network device according to a preset rule, a part or all of a plurality of pieces of channel state information that are respectively determined based on the plurality of reference signals. In such an implementation, this helps the network device performs decision-making (for example, terminal pairing, that is, allocation of the terminal device to a more suitable user group) based on the channel state information corresponding to the plurality of groups of reference signals measured by the first terminal device and a part or all of the channel state information that is fed back.

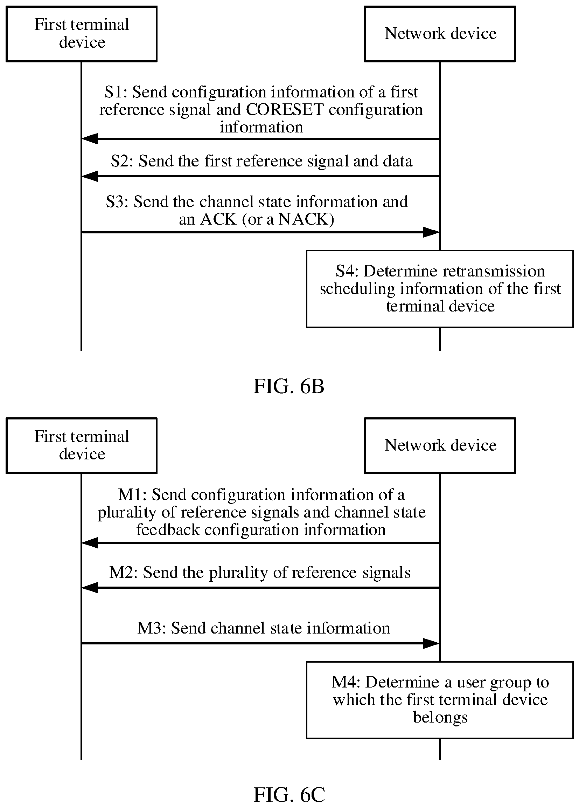

The following describes, in detail with reference to FIG. 6B, a solution in which instantaneous channel state information is fed back based on a first reference signal. This embodiment may be used as an independent embodiment, or may be combined with another embodiment of the present invention. This is not specifically limited herein. A first terminal device and a network device may separately perform the following steps.

Step S 1: The network device sends configuration information of a first reference signal and CORESET configuration information to the first terminal device. Correspondingly, the first terminal device receives the configuration information of the first reference signal and the CORESET configuration information from the network device.

For descriptions of the first reference signal, refer to related descriptions in step 201a. Details are not described herein again.

The CORESET configuration information may include channel state feedback configuration information. For example, the network device sends the CORESET configuration information to the first terminal device, to indicate at least one of the following: information indicating whether the first terminal device measures and feeds back instantaneous channel state information based on the first reference signal, content of channel state information to be fed back, and a time-frequency resource for feeding back the channel state information.

Step S2: The network device sends the first reference signal and data to the first terminal device. Correspondingly, the first terminal device receives the first reference signal and the data from the network device.

Step S3: The first terminal device sends channel state information and hybrid automatic repeat request-acknowledgment (hybrid automatic repeat request-acknowledge character, HARQ-ACK) information of the data to the network device. Correspondingly, the network device receives the channel state information and the HARQ-ACK information of the data from the first terminal device.

The channel state information and the HARQ-ACK information of the data may be sent at the same time, or may be sent separately.

The HARQ-ACK information of the data may be an acknowledgment ACK, indicating that the first terminal device successfully receives the foregoing data. Alternatively, the HARQ-ACK information of the data may be a negative acknowledgment NACK, indicating that the first terminal device fails to receive the foregoing data.

For content of the channel state information fed back by the first terminal device to the network device, refer to related descriptions in step 204b. Details are not described herein again.

The following provides a method for determining, by the first terminal device, whether to measure and feedback instantaneous channel state information. This embodiment may be used as an independent embodiment, or may be combined with another embodiment of the present invention. This is not specifically limited in this application. The following describes various implementations in detail:

In an optional implementation, the CORESET configuration information indicates whether to measure and feed back instantaneous channel state information based on the first reference signal. In this implementation, the network device may indicate, in a CORESET configuration, that a first reference signal of a CORESET is used by the first terminal device to measure and feed back instantaneous channel state information based on the first reference signal. When detecting that data scheduling is performed based on the CORESET, the first terminal device feeds back instantaneous channel state information of the first reference signal that is based on the CORESET. A time-frequency resource (for example, a PUCCH resource) for feeding back the instantaneous channel state information may be determined based on a feedback resource indicated in the CORESET configuration information.

In another optional implementation, downlink control information DCI indicates whether to measure and feed back instantaneous channel state information based on the first reference signal. In this implementation, the network device triggers, by using the DCI, the first terminal device whether to measure and feed back instantaneous channel state information based on the first reference signal. For example, a 1-bit information field is designed in the DCI, and the information field indicates whether the first terminal device measures and feeds back instantaneous channel state information based on the first reference signal. For example, 0 represents no feedback, and 1 represents feedback. A time-frequency resource (for example, a PUCCH resource) for feeding back the instantaneous channel state information may be a PUCCH resource indicated in the DCI.

In another optional implementation, it is determined, based on a receiving status of a data channel (for example, a PDSCH), whether to measure and feed back instantaneous channel state information based on the first reference signal. In this implementation, it is determined, depending on whether the PDSCH is successfully received, whether to perform measure and feed back instantaneous channel state information based on the first reference signal. For example, when the data is successfully received, an acknowledgment ACK is fed back, and instantaneous channel state information based on the first reference signal is not fed back. A time-frequency resource (for example, a PUCCH resource) for feeding back the instantaneous channel state information may be a PUCCH resource indicated in DCI. For example, when the data fails to be received, a negative acknowledgment NACK and instantaneous channel state information based on the first reference signal are fed back. The time-frequency resource (for example, the PUCCH resource) for feeding back the instantaneous channel state information may be a PUCCH resource that is used to feed back average channel state information and that is indicated in the CORESET.

Step S4: The network device determines retransmission scheduling information of the first terminal device.

In this step, after the network device receives the instantaneous channel state information and the HARQ-ACK information of the first terminal device, the first terminal device may decide, based on the instantaneous channel state information and the HARQ-ACK information, whether to perform data retransmission or perform a next time of transmission of new data.

In this implementation, the first terminal device may determine the channel state information by using a channel state of the first reference signal that is obtained during DCI blind detection, and channel measurement does not need to be repeated. This helps reduce a delay. In addition, the first terminal device may measure channel state information based on the first reference signal of the CORESET for blind detection, to feed back instantaneous channel state information. This helps save pilot resources. In this implementation, the first reference signal of the CORESET is a broadband reference signal, and the channel state is stable. This is more suitable for a high reliability requirement during URLLC retransmission. Compared with a DMRS of the PDSCH, for the first reference signal, a larger measurement bandwidth is required, more comprehensive channel information is learned of, and a channel condition is more stable.

The following describes, in detail with reference to FIG. 6C, a solution in which average channel state information is fed back based on a first reference signal. This embodiment may be used as an independent embodiment, or may be combined with another embodiment of the present invention. This is not specifically limited herein. A first terminal device and a network device may separately perform the following steps.

Step M1: The network device sends configuration information of a plurality of reference signals and channel state feedback configuration information to the first terminal device. Correspondingly, the first terminal device receives the configuration information of the plurality of reference signals and the channel state feedback configuration information from the network device.

The channel state feedback configuration information may be located in CORESET configuration information. Therefore, step M1 may be replaced with: The network device sends the configuration information of the plurality of reference signals and the CORESET configuration information to the first terminal device. Correspondingly, the first terminal device receives the configuration information of the plurality of reference signals and the CORESET configuration information from the network device.

Each of the plurality of reference signals corresponds to a different user group. For example, the plurality of reference signals include a first reference signal (a reference signal shared by terminal devices in a first user group) and a second reference signal (a reference signal shared by the terminal devices in the first user group) that are described above.

In an optional implementation, a to-be-measured CORESET (that is, a time-frequency resource of each reference signal that needs to be measured) and an uplink PUCCH feedback resource (that is, a resource used for feeding back channel state information) are indicated in the channel state feedback configuration information.

Optionally, the network device may configure one CORESET for the first terminal device, and the CORESET corresponds to a plurality of reference signals used for channel state information measurement and feedback. For example, the network device may send an identifier (for example, a CORESET ID) of the CORESET to the first terminal device. In this implementation, one CORESET configuration may include time-frequency resource pattern configurations of a plurality of reference signals. For example, a time-frequency resource pattern configuration of the first reference signal is a pattern identifier of a reference signal shared by the terminal devices in the first user group, and a time-frequency resource pattern configuration of the second reference signal is a pattern identifier of a reference signal shared by terminal devices in a second user group. In addition, the network device may configure a time-frequency resource of each reference signal for the first terminal device, including a time domain position (for example, a symbol index) and a frequency domain position (for example, a subcarrier index or an RB index). Optionally, the network device may configure, for the first terminal device, information about a CCE group used for CSI measurement and feedback. For example, one CORESET configuration may include a configuration of the foregoing CCE group, and the first terminal device may perform CSI measurement and feedback based on the CCE group.

Further, the first terminal device may feed back a pattern identifier (for example, a pattern ID) of one or more reference signals, and/or an identifier (for example, a CCE group ID) of one or more CCE groups, and a CQI and/or an MCS corresponding to the reference signal or the CCE group.

Optionally, the network device may configure a plurality of CORESETs for the first terminal device, and each CORESET corresponds to one reference signal. For example, the network device may send an identifier (for example, a CORESET ID) of each of the plurality of CORESETs to the first terminal device. In this implementation, the network device may configure a time-frequency resource of each reference signal for the first terminal device, including a time domain position (for example, a symbol index) and a frequency domain position (for example, a subcarrier index or an RB index). Optionally, the network device may configure, for the first terminal device, information about one or more CCE groups used for CSI measurement and feedback. For example, one CORESET configuration may include a configuration of the foregoing CCE group, and the first terminal device may perform CSI measurement and feedback based on the CCE group.

Further, the first terminal device may feed back an identifier of one or more CORESETs (for example, a plurality of CORESET IDs), an identifier of one or more CCE groups (for example, a CCE group ID), and an identifier of one or more CORESETs, and/or a CQI and/or an MCS corresponding to the one or more CCE groups.

Optionally, the network device may configure a plurality of CORESETs for the first terminal device, and one CORESET corresponds to one or more reference signals. For example, the network device may send an identifier (for example, a CORESET ID) of each of the plurality of CORESETs to the first terminal device. In this implementation, the network device may configure a time-frequency resource of each reference signal for the first terminal device, including a time domain position (for example, a symbol index) and a frequency domain position (for example, a subcarrier index or an RB index). Optionally, the network device may configure, for the first terminal device, information about one or more CCE groups used for CSI measurement and feedback. For example, one CORESET configuration may include a configuration of the foregoing CCE group, and the first terminal device may perform CSI measurement and feedback based on the CCE group.

Further, the first terminal device may feed back an identifier of one or more CORESETs (for example, a plurality of CORESET IDs), and/or a pattern identifier (for example, a pattern ID) of one or more reference signals, and/or an identifier (for example, a CCE group ID) of one or more CCE groups, and an identifier of one or more CORESETs, and/or a CQI and/or an MCS corresponding to one or more reference signals and/or one or more CCE groups.

In another optional implementation, a reference signal for channel state information measurement and a resource for feeding back the foregoing channel state information are indicated in the CORESET configuration. In this implementation, the network device may indicate, to the first terminal device, whether the reference signal of the CORESET is used for channel state information measurement and feedback.

Optionally, the CORESET configuration includes a configuration indicating channel measurement based on one or more reference signals (for example, a time-frequency resource pattern identifier of a reference signal for channel measurement) and a configuration indicating interference measurement based on one or more reference signals (for example, a time-frequency resource pattern identifier of a reference signal for interference measurement). In this implementation, the first terminal device may perform channel measurement based on the reference signal for channel measurement, and perform interference measurement based on the reference signal for interference measurement, so that the first terminal device can obtain accurate channel state information. Optionally, the reference signal used for interference measurement may be a zero-power first reference signal.

Optionally, the network device may indicate a time-domain filtering length for measurement to the first terminal device, and the time-domain filtering length is used to determine a time domain unit for measuring average channel state information. In this implementation, when the first terminal device measures the average channel state information, the network device may configure the time-domain filtering length for the first terminal device based on an actual network status, to obtain accurate channel state information, so as to improve communication performance. However, in an NR standard, the network device does not configure the time-domain filtering length for the first terminal device, and in the NR standard, the network device only indicates whether the first terminal device needs to perform time-domain filtering. In addition, the first terminal device may average results of a plurality of measured channel states in the time-domain filtering length, to obtain the average channel state information. The network device may configure a specific filtering window size (that is, a value of the time-domain filtering length) for the first terminal device, and the first terminal device performs window smoothing to determine the average channel state information. Different moving speeds may correspond to different time-domain filtering windows. The first terminal device may feed back a change trend (for example, a CQI/MCS difference) of a measurement result based on a plurality of times of measurement.

Optionally, the network device may indicate, in the CORESET configuration, whether to measure and feed back average channel state information based on a reference signal; or may indicate, in a channel state information configuration, whether to measure and feed back average channel state information based on a reference signal; or may indicate, in DCI, whether to measure and feed back average channel state information based on a reference signal. For details, refer to the foregoing related descriptions. Details are not described herein again.

Step M2: The network device sends a plurality of reference signals to the first terminal device. Correspondingly, the first terminal device receives the plurality of reference signals from the network device.

In a possible implementation, the network device sends the first reference signal to the first terminal device on each time domain unit in the time-domain filtering length, so that the network device sends the plurality of first reference signals to the first terminal device, and the first terminal device averages instantaneous channel state information measured for the plurality of first reference signals, to obtain average channel state information determined in the time-domain filtering length.

In another possible implementation, the network device sends a plurality of different reference signals to the first terminal device on each time domain unit in the time-domain filtering length, so that the network device sends a plurality of groups of reference signals to the first terminal device, and each group of reference signals include a plurality of same reference signals. In this way, the first terminal device averages instantaneous channel state information measured for each reference signal, to obtain average channel state information determined in the time-domain filtering length. For example, the network device sends a plurality of first reference signals, a plurality of second reference signals, and the like to the first terminal device in the time-domain filtering length. Then, the first terminal device averages instantaneous channel state information measured for the plurality of first reference signals, to obtain average channel state information determined based on the first reference signal in the time-domain filtering length. The first terminal device averages instantaneous channel state information measured for the plurality of second reference signals, to obtain average channel state information determined based on the second reference signal in the time-domain filtering length.

Step M3: The first terminal device sends the channel state information to the network device. Correspondingly, the network device receives the channel state information from the first terminal device.

Specifically, the first terminal device may feed back the average channel state information in any one of the following implementations:

In an optional implementation, a PUCCH resource for feeding back average channel state information is associated with a CORESET ID. For example, the average channel state information is obtained by averaging measurement of a same group of reference signals associated with a same CORESET. For example, measurement and feedback of channel state information of a reference signal corresponding to one CORESET ID correspond to one PUCCH resource. The network device may perform one-to-one configuration, that is, one PUCCH resource corresponds to one CORESET ID. In this case, channel state information of reference signals corresponding to different CORESET IDs may correspond to different PUCCH resources, or may correspond to a same PUCCH resource.

In another optional implementation, a PUCCH resource for feeding back average channel state information is configured uniformly, and the average channel state information is obtained by averaging measurement of a same group of reference signals associated with a same CORESET ID. Average channel state information of reference signals of a plurality of CORESET IDs is fed back only on a same PUCCH resource, and the PUCCH resource is a resource dedicated to feedback of the average channel state information.

Specifically, specific content of the average channel state information fed back by the first terminal device may be implemented in the following plurality of manners:

In another optional implementation, channel state information for a CORESET ID and/or a DMRS pattern ID and/or a CCE group ID corresponding to an optimal reference signal is fed back. In this implementation, the first terminal device may feed back channel state information of a group of reference signals, and the channel state information of the group is an optimal result in measurement. This helps reduce feedback overheads, and helps the network device perform pairing on the first terminal device based on optimal performance, that is, determine a user group to which the first terminal device should be divided.

In another optional implementation, channel state information of CORESET IDs and/or DMRS pattern IDs and/or CCE group IDs corresponding to a plurality of groups of reference signals is fed back. In this implementation, the network device may indicate, to the first terminal device, a quantity of groups for feedback (or the quantity of groups may be predefined in a protocol). When the quantity of groups is greater than 1, an arrangement sequence of content fed back for each group may be predefined in a protocol, or may be notified by the network device to the first terminal device. A plurality of sets of channel state information may be fed back in a joint feedback manner or fed back for a plurality of times, or a plurality of sets of channel state information may be fed back at different moments. When channel state information corresponding to a plurality of groups of reference signals is fed back, the network device may obtain more information used to determine pairing of the first terminal device, so that the network device performs pairing on the first terminal device more appropriately, to improve overall communication performance.

Step M4: The network device determines a user group to which the first terminal device belongs.

In this embodiment, step M4 is an optional step.

Specifically, that the network device determines a user group to which the first terminal device belongs may be understood as that the network device determines a more suitable user group to which the first terminal device is to be divided; or the network device determines a user group to which the first terminal device may be divided with other specific terminal devices. Because the network device may generally obtain channel state information CSI fed back by a plurality of terminal devices, a process in which the network device determines division of terminal devices in the plurality of terminal devices into one suitable user group is also referred to as terminal pairing.

The CORESET configuration information is used to configure the CORESET, and different CORESETs may correspond to different beams. Channel state information of the first terminal device on one or more beams is fed back, so that the network device can be assisted in performing pairing on the first terminal device. One first terminal device group shares one CORESET, and shares one set of DCI for data scheduling.

In this embodiment, the first terminal device may measure and feed back average CSI by using a group of RSs and a broadband reference signal of the CORESET, that is, the collected channel information is used for pairing of the first terminal device, to improve robustness without a CSI-RS, and reduce pilot overheads. The network device determines pairing information of the first terminal device based on the feedback of the first terminal device, and one group of first terminal devices may be scheduled by using same precoding and one set of DCI, to improve communication performance. In this implementation, the first terminal device may measure average channel state information of each group of reference signals, and feed back, to the network device, average channel state information measured by using one or more groups of reference signals. This helps the network device decide pairing of the first terminal device, to improve robustness and communication performance.

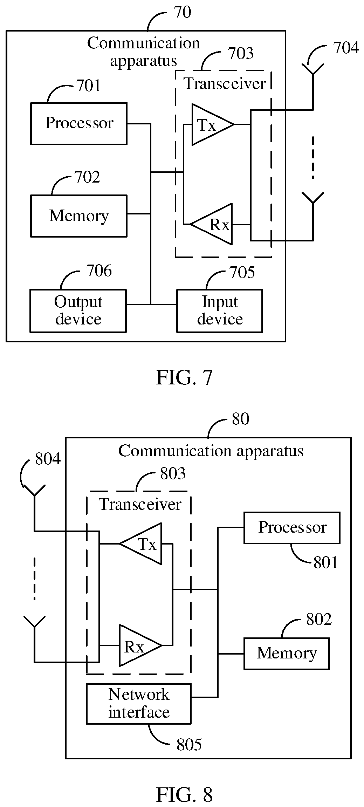

FIG. 7 is a schematic structural diagram of a communication apparatus 70 according to an embodiment. It should be understood that the first terminal device in the method embodiments corresponding to FIG. 2, FIG. 6A, FIG. 6B, and FIG. 6C may be based on a structure of the communication apparatus 70 shown in FIG. 7 in this embodiment.

The communication apparatus 70 includes at least one processor 701. Optionally, the communication apparatus further includes at least one memory 702 and at least one transceiver 703. The processor 701, the memory 702, and the transceiver 703 are connected to each other. Optionally, the communication apparatus 70 may further include an input device 705, an output device 706, and one or more antennas 704. The antenna 704 is connected to the transceiver 703, and the input device 705 and the output device 706 are connected to the processor 701.

In this embodiment, the memory 702 is mainly configured to store a software program and data. The memory 702 may exist independently, and is connected to the processor 701. Optionally, the memory 702 and the processor 701 may be integrated, for example, integrated into one or more chips. The memory 702 can store program code for executing the technical solutions in embodiments of this application, and the processor 701 controls the execution. Various types of executed computer program code may also be considered as drivers of the processor 701. It should be understood that FIG. 7 in this embodiment shows only one memory and one processor. However, during actual application, the communication apparatus 70 may include a plurality of processors or a plurality of memories. This is not specifically limited herein. In addition, the memory 702 may also be referred to as a storage medium, a storage device, or the like. The memory 702 may be a storage element (that is, an on-chip storage element) located on a same chip as the processor, or an independent storage element. This is not limited in this embodiment of this application.

In this embodiment, the transceiver 703 may be configured to support receiving or sending of a radio frequency signal between the communication apparatus 70 and an access network device, and the transceiver 703 may be connected to the antenna 704. The transceiver 703 includes a transmitter Tx and a receiver Rx. Specifically, the one or more antennas 704 may receive a radio frequency signal. The receiver Rx in the transceiver 703 is configured to: receive the radio frequency signal from the antenna 704, convert the radio frequency signal into a digital baseband signal or a digital intermediate frequency signal, and provide the digital baseband signal or the digital intermediate frequency signal for the processor 701, to enable the processor 701 to perform further processing, for example, demodulation processing and decoding processing, on the digital baseband signal or the digital intermediate frequency signal. In addition, the transmitter Tx in the transceiver 703 is further configured to: receive a modulated digital baseband signal or a modulated digital intermediate frequency signal from the processor 701, convert the modulated digital baseband signal or the modulated digital intermediate frequency signal into a radio frequency signal, and transmit the radio frequency signal through the one or more antennas 704. Specifically, the receiver Rx may selectively perform one-level or multi-level down frequency mixing processing and analog-to-digital conversion processing on the radio frequency signal to obtain a digital baseband signal or a digital intermediate frequency signal, and a sequence of the down frequency mixing and the analog-to-digital conversion processing is adjustable. The transmitter Tx may selectively perform one-level or multi-level up frequency mixing processing and digital-to-analog conversion processing on the modulated digital baseband signal or the modulated digital intermediate frequency signal to obtain a radio frequency signal, and a sequence of the up frequency mixing processing and the digital-to-analog conversion processing is adjustable. The digital baseband signal and the digital intermediate frequency signal may be collectively referred to as a digital signal.

It should be understood that the transceiver 703 may also be referred to as a transceiver unit, a transceiver, a transceiver apparatus, or the like. Optionally, a component that is configured to implement a receiving function and that is in the transceiver unit may be considered as a receiving unit, and a component that is configured to implement a sending function and that is in the transceiver unit may be considered as a sending unit. In other words, the transceiver unit includes the receiving unit and the sending unit. The receiving unit may also be referred to as a receiver, an input port, a receiving circuit, or the like. The sending unit may be referred to as a transmitter, a transmitter, an output port, a transmitting circuit, or the like.

Optionally, the transmitter Tx is also referred to as a transmission channel or a radio frequency (radio frequency, RF) transmission channel. In this application, the transmission channel may work in the following manner, but is not limited to the following manner: The transmission channel may receive a baseband signal from a baseband chip, perform radio frequency processing (such as up-conversion, amplification, and filtering) on the baseband signal to obtain a radio frequency signal, and finally radiate the radio frequency signal to space through the antenna 704. Specifically, the transmission channel may include electronic components such as an antenna switch, an antenna tuner, a low noise amplifier (low noise amplifier, LNA), a power amplifier (power amplifier, PA), a frequency mixer (mixer), a local oscillator (local oscillator, LO), and a filter (filter). These electronic components may be integrated into one or more chips according to a requirement. The antenna 704 may also be sometimes considered as a part of the transmission channel.

The processor 701 may be a baseband processor, or may be a central processing unit (central processing unit, CPU). The baseband processor and the CPU may be integrated together or separated from each other. The processor 701 may be configured to implement various functions for a terminal device, for example, configured to process a communication protocol and communication data, or configured to: control an entire terminal device, execute a software program, and process data of the software program, or configured to assist in completing a computing processing task, for example, graphics and image processing or audio processing. Alternatively, the processor 701 is configured to implement one or more of the foregoing functions.

In addition, the output device 706 communicates with the processor 701, and may display information in a plurality of manners. This is not specifically limited herein.

Specifically, in the communication apparatus 70, the transceiver 703 receives a first reference signal from a network device, where the first reference signal is used by a terminal device in a first user group to perform channel estimation on a control channel, and the first user group includes at least two terminal devices. The processor 701 determines channel state information based on the first reference signal. The transceiver 703 sends the channel state information to the network device through the antenna 704.

In an optional implementation, the transceiver 703 receives a first group identifier, where the first group identifier identifies the first user group, and the first group identifier is used to determine a time-frequency resource of the first reference signal and/or a sequence of the first reference signal.

In an optional implementation, the transceiver 703 receives first indication information from the network device, where the first indication information indicates a time-frequency resource for feeding back channel state information. The processor 701 controls the transceiver 703 to feed back first channel state information and second channel state information on the time-frequency resource indicated by the first indication information.

In an optional implementation, the processor 701 performs channel estimation based on the first reference signal and blindly detects a control channel. The channel state information further includes an identifier of a second control channel element CCE group, a channel quality indicator CQI corresponding to a second control channel element CCE group, and/or a modulation and coding scheme MCS corresponding to a second control channel element CCE group.

The communication apparatus 70 may further perform another method performed by the terminal device (for example, the first terminal device) in the possible implementations in the foregoing method embodiments. Details are not described herein again.

FIG. 8 is a schematic structural diagram of another communication apparatus 80 according to an embodiment. It should be understood that the network device in the method embodiments corresponding to FIG. 2, FIG. 6A, FIG. 6B, and FIG. 6C may be based on a structure of the communication apparatus 80 shown in FIG. 8 in this embodiment. It should be further understood that when a network device or a base station of a subsequently evolved standard performs the method in embodiments of this application, the network device or the base station of the subsequently evolved standard may also use the structure of the communication apparatus 80 shown in FIG. 8 in this embodiment.

The communication apparatus 80 includes at least one processor 801. Optionally, the communication apparatus 80 may further include at least one memory 802, at least one transceiver 803, at least one network interface 805, and one or more antennas 804. The processor 801, the memory 802, the transceiver 803, and the network interface 805 are connected by using a connection apparatus, and the antenna 804 is connected to the transceiver 803. The connection apparatus may include various types of interfaces, transmission cables, buses, or the like. This is not limited in this embodiment.

The network interface 805 is configured to enable the communication apparatus 80 to connect to another communication apparatus through a communication link. Specifically, the network interface 805 may include a network interface between the communication apparatus 80 and a core network element, for example, an SI interface. Alternatively, the network interface 805 may include a network interface between the communication apparatus 80 and another network device (for example, another access network device or a core network element), for example, an X2 interface or an Xn interface.

For the transceiver 803, the memory 802, and the antenna 804, refer to related descriptions of the transceiver 703, the memory 702, and the antenna 704 in the embodiment corresponding to FIG. 7. Details are not described herein again.

In addition, the processor 801 is mainly configured to process a communication protocol and communication data, control an entire network device, execute a software program, and process data of the software program, for example, configured to support the communication apparatus 80 in performing an action described in the foregoing embodiments.

Specifically, the transceiver 803 in the communication apparatus 80 sends a first reference signal to a first terminal device, where the first reference signal is used by a terminal device in a first user group to perform channel estimation on a control channel, the first reference signal is used by the first terminal device to determine channel state information, and the first user group includes at least two terminal devices. In addition, the transceiver 803 receives the channel state information from the first terminal device.

In an optional implementation, the transceiver 803 sends a first group identifier to the first terminal device, where the first group identifier identifies the first user group, and the first group identifier is used to determine a time-frequency resource of the first reference signal and/or a sequence of the first reference signal.

In an optional implementation, the transceiver 803 sends first indication information to the first terminal device, where the first indication information indicates a time-frequency resource for feeding back channel state information. The processor 801 controls the transceiver 803 to receive first channel state information and second channel state information on the time-frequency resource indicated by the first indication information. The channel state information further includes an identifier of a second control channel element CCE group, a channel quality indicator CQI corresponding to a second control channel element CCE group, and/or a modulation and coding scheme MCS corresponding to a second control channel element CCE group.

The communication apparatus 70 may further perform another method performed by the network device in the possible manners in the foregoing method embodiments. Details are not described herein again.

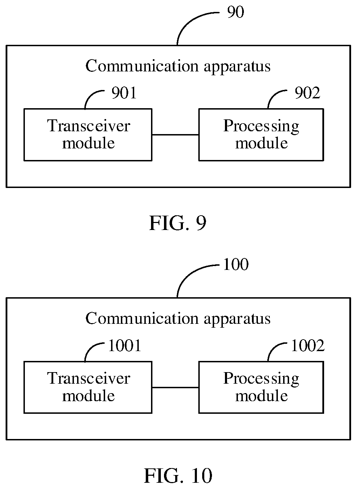

As shown in FIG. 9, this application further provides another communication apparatus 90. The communication apparatus 90 may be a terminal device or a chip in the terminal device. The communication apparatus 90 includes a transceiver module 901 and a processing module 902.

The transceiver module 901 is configured to receive a first reference signal from a network device, where the first reference signal is used by a terminal device in a first user group to perform channel estimation on a control channel, and the first user group includes at least two terminal devices. The processing module 902 is configured to determine channel state information based on the first reference signal. The transceiver module 901 is further configured to send the channel state information to the network device.

In an optional implementation, the transceiver module 901 is further configured to receive a first group identifier, where the first group identifier identifies the first user group, and the first group identifier is used to determine a time-frequency resource of the first reference signal and/or a sequence of the first reference signal.

In an optional implementation, the transceiver module 901 is further configured to receive first indication information from the network device, where the first indication information indicates a time-frequency resource for feeding back channel state information. The processing module 902 is further configured to feed back first channel state information and second channel state information on the time-frequency resource indicated by the first indication information.

In an optional implementation, the processing module 902 is further configured to perform channel estimation based on the first reference signal and blindly detect a control channel. The channel state information further includes an identifier of a second control channel element CCE group, a channel quality indicator CQI corresponding to a second control channel element CCE group, and/or a modulation and coding scheme MCS corresponding to a second control channel element CCE group.

The communication apparatus 90 may further perform another method performed by the terminal device in the possible manners in the foregoing method embodiments. Details are not described herein again.

In this embodiment of this application, module division is an example, and is merely logical function division. During actual implementation, another division manner may be used. For example, the communication apparatus 90 may include: a receiving module, configured to receive a first reference signal from a network device, where the first reference signal is used by a terminal device in a first user group to perform channel estimation on a control channel, and the first user group includes at least two terminal devices; a determining module, configured to determine channel state information based on the first reference signal; and a sending module, configured to send the channel state information to the network device.

As shown in FIG. 10, this application further provides another communication apparatus 100. The communication apparatus 100 may be an access network device or a chip in the access network device. The communication apparatus 100 includes a transceiver module 1001 and a processing module 1002. The processing module 1002 may be configured to invoke the transceiver module 1001 to perform a receiving and/or sending function.

The transceiver module 1001 is configured to send a first reference signal to a first terminal device, where the first reference signal is used by a terminal device in a first user group to perform channel estimation on a control channel, the first reference signal is used by the first terminal device to determine channel state information, and the first user group includes at least two terminal devices. In addition, the transceiver module 1001 is further configured to receive the channel state information from the first terminal device.

In an optional implementation, the transceiver module 1001 is further configured to a first group identifier to the first terminal device, where the first group identifier identifies the first user group, and the first group identifier is used to determine a time-frequency resource of the first reference signal and/or a sequence of the first reference signal.

In an optional implementation, the transceiver module 1001 is further configured to send first indication information to the first terminal device, where the first indication information indicates a time-frequency resource for feeding back channel state information. The processing module 1002 is configured to control the transceiver module 1001 to receive first channel state information and second channel state information on the time-frequency resource indicated by the first indication information. The channel state information further includes an identifier of a second control channel element CCE group, a channel quality indicator CQI corresponding to a second control channel element CCE group, and/or a modulation and coding scheme MCS corresponding to a second control channel element CCE group.

The communication apparatus 70 may further perform another method performed by the network device in the possible manners in the foregoing method embodiments. Details are not described herein again.

In this embodiment of this application, module division is an example, and is merely logical function division. During actual implementation, another division manner may be used. For example, the communication apparatus 90 may include: a sending module, configured to send a first reference signal to a first terminal device, where the first reference signal is used by a terminal device in a first user group to perform channel estimation on a control channel, the first reference signal is used by the first terminal device to determine channel state information, and the first user group includes at least two terminal devices; and a receiving module, configured to receive the channel state information from the first terminal device.

In an implementation process, the steps in the foregoing methods can be implemented by using a hardware integrated logical circuit in the processor, or by using instructions in a form of software. The steps in the methods disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware of the processor. To avoid repetition, details are not described herein again.

In addition, this application provides a computer program product. The computer program product includes one or more computer instructions. When the computer program instructions are loaded and executed on a computer, the procedures or functions according to embodiments of this application are all or partially generated. For example, the methods related to the network device in FIG. 2, FIG. 6A, FIG. 6B, and FIG. 6C are implemented. For another example, the methods related to the first terminal device in FIG. 2, FIG. 6A, FIG. 6B, and FIG. 6C are implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like.

In addition, this application further provides a computer-readable storage medium. The storage medium stores a computer program or instructions, and the computer program or the instructions is/are executed by a processor to implement the methods related to the first terminal device in FIG. 2, FIG. 6A, FIG. 6B, and FIG. 6C.

In addition, this application further provides a computer-readable storage medium. The storage medium stores a computer program or instructions, and the computer program or the instructions is/are executed by a processor to implement the methods related to the network device in FIG. 2, FIG. 6A, FIG. 6B, and FIG. 6C.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without causing the essence of corresponding technical solutions to depart from the scope of the technical solutions of embodiments of this application.

## Claims

1.  A channel state information transmission method, comprising:

    receiving, by a first communication apparatus, a first reference signal, wherein the first reference signal is used by a terminal device in a first user group to perform channel estimation on a control channel, and the first user group comprises at least two terminal devices;
    determining, by the first communication apparatus, channel state information based on the first reference signal; and
    sending, by the first communication apparatus, the channel state information.

2.  The method according to claim 1, wherein the method further comprises:
    receiving, by the first communication apparatus, a first group identifier, wherein the first group identifier identifies the first user group, and the first group identifier is used to determine a time-frequency resource of the first reference signal and/or a sequence of the first reference signal.

3.  The method according to claim 2, wherein the method further comprises:
    determining, by the first communication apparatus, the time-frequency resource of the first reference signal based on the first group identifier.

4.  The method according to any one of claims 1 to 3, wherein a cell in which the first communication apparatus is located comprises at least two user groups, and the at least two user groups comprise the first user group.

5.  The method according to any one of claims 1 to 4, wherein the time-frequency resource of the first reference signal is located in a first symbol in time domain, and the first symbol comprises only a resource element of a reference signal.

6. The method according to claim 5, wherein the first symbol is located before a symbol on which the control channel is located.

7. The method according to claim 5 or 6, wherein the first symbol is located at a symbol preceding the symbol on which the control channel is located, or the first symbol is located at a 1$^{st}$ symbol of the symbol on which the control channel is located.

8. The method according to any one of claims 3 to 7, wherein the method further comprises:

   receiving, by the first communication apparatus, first time-frequency resource information, wherein the first time-frequency resource information indicates the time-frequency resource of the first reference signal; and
   the determining, by the first communication apparatus, the time-frequency resource of the first reference signal based on the first group identifier comprises:
   determining, by the first communication apparatus, the time-frequency resource of the first reference signal based on the first group identifier and the first time-frequency resource information.

9. The method according to claim 8, wherein the first time-frequency resource information comprises at least one of the following: information indicating a quantity of resource elements between resource elements of the first reference signal in one resource block; information indicating a quantity of resource elements of the first reference signal in one resource block; or a pattern identifier of the time-frequency resource of the first reference signal.

10. The method according to claim 2, wherein the method further comprises:
    determining, by the first communication apparatus, the sequence of the first reference signal based on the first group identifier.

11. The method according to claim 10, wherein the determining, by the first communication apparatus, the sequence of the first reference signal based on the first group identifier comprises:

    calculating, by the first communication apparatus, a first offset based on the first group identifier, wherein the first offset is an offset of a resource element of the first reference signal in one resource block; and
    calculating, by the first communication apparatus, the sequence of the first reference signal based on the first group identifier and the first offset.

12. The method according to any one of claims 1 to 11, wherein

    a subcarrier spacing of the first reference signal is the same as a subcarrier spacing of a control channel of the first communication apparatus, and the subcarrier spacing of the first reference signal is different from a subcarrier spacing of a data channel of the first communication apparatus;
    a subcarrier spacing of the first reference signal is different from a subcarrier spacing of a control channel of the first communication apparatus, and the subcarrier spacing of the first reference signal is the same as a subcarrier spacing of a data channel of the first communication apparatus; or
    a subcarrier spacing of the first reference signal is different from a subcarrier spacing of a control channel of the first communication apparatus, and the subcarrier spacing of the first reference signal is different from a subcarrier spacing of a data channel of the first communication apparatus.

13. The method according to any one of claims 1 to 12, wherein

    the subcarrier spacing of the first reference signal is greater than the subcarrier spacing of the control channel of the first communication apparatus; and/or
    the subcarrier spacing of the first reference signal is greater than the subcarrier spacing of the data channel of the first communication apparatus.

14. The method according to any one of claims 1 to 13, wherein the channel state information comprises first channel state information and/or second channel state information; and
    the first channel state information comprises instantaneous channel state information determined by the first communication apparatus based on the first reference signal, and the second channel state information comprises average channel state information determined by the first communication apparatus based on the first reference signal.

15. The method according to claim 14, wherein the channel state information comprises at least one of the following:

a channel quality indicator CQI corresponding to the time-frequency resource of the first reference signal;
a modulation and coding scheme MCS corresponding to the time-frequency resource of the first reference signal; or
information indicating the time-frequency resource corresponding to the first reference signal, wherein the information indicating the time-frequency resource corresponding to the first reference signal may be at least one of the following: a control channel resource set identifier corresponding to the first reference signal, an identifier of the first reference signal, the first group identifier, or an identifier of a first control channel element CCE group corresponding to the first reference signal.

16. The method according to any one of claims 1 to 15, wherein the method further comprises:

receiving, by the first communication apparatus, first indication information, wherein the first indication information indicates a time-frequency resource for feeding back channel state information;
the sending, by the first communication apparatus, the channel state information comprises:
feeding back, by the first communication apparatus, the first channel state information and the second channel state information on the time-frequency resource indicated by the first indication information.

17. The method according to any one of claims 1 to 16, wherein the method further comprises:

performing, by the first communication apparatus, channel estimation based on the first reference signal, and blindly detecting a control channel, wherein
the channel state information further comprises an identifier of a second control channel element CCE group, a channel quality indicator CQI corresponding to a second control channel element CCE group, and/or a modulation and coding scheme MCS corresponding to a second control channel element CCE group.

18. The method of any one of claims 1 to 17, wherein the first communication apparatus belongs to the first user group.

19. The method according to any one of claims 1 to 18, wherein the method further comprises:
receiving, by the first communication apparatus, a second reference signal, wherein the second reference signal is used by a first communication apparatus in a second user group to perform channel estimation on a control channel, and the second user group comprises at least two first communication apparatuses.

20. The method according to claim 19, wherein the second user group does not comprise the first communication apparatus; and
the determining, by the first communication apparatus, channel state information based on the first reference signal comprises:
determining, by the first communication apparatus, the channel state information based on the first reference signal and the second reference signal.

21. The method according to any one of claims 1 to 20, wherein the sending, by the first communication apparatus, the channel state information comprises:
sending, by the first communication apparatus, third channel state information to a second communication apparatus, wherein a channel state indicated by the third channel state information is better than a channel state indicated by the fourth channel state information.

22. The method according to any one of claims 19 to 21, wherein the channel state information comprises at least one of the following:

a channel quality indicator CQI corresponding to a time-frequency resource of the second reference signal;
a modulation and coding scheme MCS corresponding to a time-frequency resource of the second reference signal; or
information indicating a time-frequency resource corresponding to the second reference signal, wherein
the information indicating the time-frequency resource corresponding to the second reference signal may be at least one of the following: a control channel resource set identifier corresponding to the second reference signal, an identifier of the second reference signal, a second group identifier, and an identifier of a third control channel element CCE group corresponding to the second reference signal.

23. The method according to any one of claims 19 to 22, wherein the method further comprises:

receiving, by the first communication apparatus, first indication information, wherein the first indication information indicates a time-frequency resource for feeding back the first channel state information and/or the second channel state information; and
the sending, by the first communication apparatus, the channel state information comprises:
feeding back, by the first communication apparatus, the first channel state information and the second channel state information on the time-frequency resource indicated by the first indication information.

24. The method according to any one of claims 19 to 23, wherein the method further comprises:
receiving, by the first communication apparatus, second indication information and/or third indication information, wherein the second indication information indicates the first communication apparatus to feed back the first channel state information, and the third indication information indicates the first communication apparatus to feed back the second channel state information.

25. The method according to any one of claims 19 to 23, wherein the method further comprises:
receiving, by the first communication apparatus, second indication information and/or third indication information, wherein the second indication information indicates the first communication apparatus to feed back average channel state information, and the third indication information indicates the first communication apparatus to feed back instantaneous channel state information.

26. The method according to any one of claims 1 to 25, wherein the first reference signal is used for channel measurement and/or interference measurement.

27. The method according to any one of claims 1 to 26, wherein the first reference signal is further used by the terminal device in the first user group to demodulate a data channel, and the demodulating a data channel comprises at least one of channel estimation of the data channel, data channel demodulation, and data channel decoding.

28. The method according to any one of claims 1 to 27, wherein the first group identifier is a group radio network temporary identifier RNTI of the first user group.

29. A channel state information transmission method, comprising:

sending, by a second communication apparatus, a first reference signal, wherein the first reference signal is used by a terminal device in a first user group to perform channel estimation on a control channel, the first reference signal is used by a first communication apparatus to determine channel state information, and the first user group comprises at least two terminal devices; and
receiving, by the second communication apparatus, the channel state information.

30. The method according to claim 29, wherein the method further comprises:
sending, by the second communication apparatus, a first group identifier, wherein the first group identifier identifies the first user group, and the first group identifier is used to determine a time-frequency resource of the first reference signal and/or a sequence of the first reference signal.

31. The method according to claim 29 or 30, wherein a cell in which the first communication apparatus is located comprises at least two user groups, and the at least two user groups comprise the first user group.

32. The method according to any one of claims 29 to 31, wherein the time-frequency resource of the first reference signal is located in a first symbol in time domain, and the first symbol comprises only a resource element of a reference signal.

33. The method according to claim 32, wherein the first symbol is located before a symbol on which the control channel is located.

34. The method according to claim 32 or 33, wherein the first symbol is a symbol preceding the symbol on which the control channel is located, or the first symbol is a $1^{st}$ symbol of the symbol on which the control channel is located.

35. The method according to any one of claims 29 to 34, wherein the method further comprises:

sending, by the second communication apparatus, first time-frequency resource information to the first communication apparatus, wherein the first time-frequency resource information indicates the time-frequency resource of the first reference signal.

36. The method according to claim 35, wherein the first time-frequency resource information comprises at least one of the following: information indicating a quantity of resource elements between resource elements of the first reference signal in one resource block; information indicating a quantity of resource elements of the first reference signal in one resource block; or a pattern identifier of the time-frequency resource of the first reference signal.

37. The method according to any one of claims 29 to 36, wherein

a subcarrier spacing of the first reference signal is the same as a subcarrier spacing of a control channel of the first communication apparatus, and the subcarrier spacing of the first reference signal is different from a subcarrier spacing of a data channel of the first communication apparatus;

a subcarrier spacing of the first reference signal is different from a subcarrier spacing of a control channel of the first communication apparatus, and the subcarrier spacing of the first reference signal is the same as a subcarrier spacing of a data channel of the first communication apparatus; or

a subcarrier spacing of the first reference signal is different from a subcarrier spacing of a control channel of the first communication apparatus, and the subcarrier spacing of the first reference signal is different from a subcarrier spacing of a data channel of the first communication apparatus.

38. The method according to any one of claims 29 to 37, wherein

the subcarrier spacing of the first reference signal is greater than the subcarrier spacing of the control channel of the first communication apparatus; and/or

the subcarrier spacing of the first reference signal is greater than the subcarrier spacing of the data channel of the first communication apparatus.

39. The method according to any one of claims 29 to 38, wherein the channel state information comprises first channel state information and/or second channel state information; and

the first channel state information comprises instantaneous channel state information determined by the first communication apparatus based on the first reference signal, and the second channel state information comprises average channel state information determined by the first communication apparatus based on the first reference signal.

40. The method according to claim 39, wherein the channel state information comprises at least one of the following:

a channel quality indicator CQI corresponding to the time-frequency resource of the first reference signal;

a modulation and coding scheme MCS corresponding to the time-frequency resource of the first reference signal; or

information indicating the time-frequency resource corresponding to the first reference signal, wherein the information indicating the time-frequency resource corresponding to the first reference signal may be at least one of the following: a control channel resource set identifier corresponding to the first reference signal, an identifier of the first reference signal, the first group identifier, and an identifier of a first control channel element CCE group corresponding to the first reference signal.

41. The method according to any one of claims 29 to 40, wherein the method further comprises:

sending, by the second communication apparatus, first indication information, wherein the first indication information indicates a time-frequency resource for feeding back channel state information;

the receiving, by the second communication apparatus, the channel state information comprises:

receiving, by the second communication apparatus, the first channel state information and the second channel state information on the time-frequency resource indicated by the first indication information.

42. The method according to any one of claims 29 to 41, wherein the channel state information further comprises an identifier of a second control channel element CCE group, a channel quality indicator CQI corresponding to a second control channel element CCE group, and/or a modulation and coding scheme MCS corresponding to a second control channel element CCE group.

43. The method of any one of claims 29 to 42, wherein the first communication apparatus belongs to the first user group.

44. The method according to any one of claims 29 to 43, wherein the method further comprises:
sending, by the second communication apparatus, a second reference signal to the first communication apparatus, wherein the second reference signal is used by a first communication apparatus in a second user group to perform channel estimation on a control channel, and the second user group comprises at least two first communication apparatuses.

45. The method according to any one of claims 29 to 44, wherein the receiving, by the second communication apparatus, the channel state information comprises:
receiving, by the second communication apparatus, the channel state information from the first communication apparatus, wherein the channel state information is channel state information determined by the first communication apparatus based on the first reference signal and the second reference signal.

46. The method according to any one of claims 29 to 44, wherein the receiving, by the second communication apparatus, the channel state information comprises:
receiving, by the second communication apparatus, third channel state information from the first communication apparatus, wherein a channel state indicated by the third channel state information is better than a channel state indicated by fourth channel state information.

47. The method according to any one of claims 44 to 46, wherein the channel state information comprises at least one of the following:

a channel quality indicator CQI corresponding to a time-frequency resource of the second reference signal;
a modulation and coding scheme MCS corresponding to a time-frequency resource of the second reference signal; or
information indicating a time-frequency resource corresponding to the second reference signal, wherein
the information indicating the time-frequency resource corresponding to the second reference signal may be at least one of the following: a control channel resource set identifier corresponding to the second reference signal, an identifier of the second reference signal, a second group identifier, and an identifier of a third control channel element CCE group corresponding to the second reference signal.

48. The method according to any one of claims 44 to 47, wherein the method further comprises:

sending, by the second communication apparatus, first indication information to the first communication apparatus, wherein the first indication information indicates a time-frequency resource for feeding back the first channel state information and/or the second channel state information; and
the receiving, by the second communication apparatus, the channel state information comprises:
receiving, by the second communication apparatus, the first channel state information and the second channel state information from the first communication apparatus on the time-frequency resource indicated by the first indication information.

49. The method according to any one of claims 44 to 48, wherein the method further comprises:
sending, by the second communication apparatus, second indication information and/or third indication information to the first communication apparatus, wherein the second indication information indicates the first communication apparatus to feed back the first channel state information, and the third indication information indicates the first communication apparatus to feed back the second channel state information.

50. The method according to any one of claims 44 to 48, wherein the method further comprises:
sending, by the second communication apparatus, second indication information and/or third indication information to the first communication apparatus, wherein the second indication information indicates the first communication apparatus to feed back average channel state information, and the third indication information indicates the first communication apparatus to feed back instantaneous channel state information.

51. The method according to any one of claims 29 to 50, wherein the first reference signal is used for channel measurement and/or interference measurement.

52. The method according to any one of claims 29 to 51, wherein the first reference signal is further used by the terminal device in the first user group to demodulate a data channel, and the demodulating a data channel comprises at least one of channel estimation of the data channel, data channel demodulation, and data channel decoding.

53. The method according to any one of claims 29 to 52, wherein the first group identifier is a group radio network temporary identifier RNTI of the first user group.

54. A communication apparatus, comprising:

a receiving module, configured to receive a first reference signal, wherein the first reference signal is used by a terminal device in a first user group to perform channel estimation on a control channel, and the first user group comprises at least two terminal devices;
a processing module, configured to determine channel state information based on the first reference signal; and
a sending module, sends the channel state information.

55. The communication apparatus according to claim 54, wherein the receiving module is further configured to receive a first group identifier, wherein the first group identifier identifies the first user group, and the first group identifier is used to determine a time-frequency resource of the first reference signal and/or a sequence of the first reference signal.

56. The communication apparatus according to claim 55, wherein the processing module is further configured to determine the time-frequency resource of the first reference signal based on the first group identifier.

57. The communication apparatus according to any one of claims 54 to 56, wherein a cell in which the first communication apparatus is located comprises at least two user groups, and the at least two user groups comprise the first user group.

58. The communication apparatus according to any one of claims 54 to 57, wherein the time-frequency resource of the first reference signal is located in a first symbol in time domain, and the first symbol comprises only a resource element of a reference signal.

59. The communication apparatus according to claim 58, wherein the first symbol is located before a symbol on which the control channel is located.

60. The communication apparatus according to claim 58 or 59, wherein the first symbol is a symbol preceding the symbol on which the control channel is located, or the first symbol is a $1^{st}$ symbol of the symbol on which the control channel is located.

61. The communication apparatus according to any one of claims 56 to 60, wherein the transceiver module is further configured to receive first time-frequency resource information, wherein the first time-frequency resource information indicates the time-frequency resource of the first reference signal; and
the processing module is specifically configured to determine the time-frequency resource of the first reference signal based on the first group identifier and the first time-frequency resource information.

62. The communication apparatus according to claim 61, wherein the first time-frequency resource information comprises at least one of the following: information indicating a quantity of resource elements between resource elements of the first reference signal in one resource block; information indicating a quantity of resource elements of the first reference signal in one resource block; or a pattern identifier of the time-frequency resource of the first reference signal.

63. The communication apparatus according to claim 54, wherein the processing module is further configured to determine the sequence of the first reference signal based on the first group identifier.

64. The communication apparatus according to claim 63, wherein the processing module is specifically configured to:

calculate a first offset based on the first group identifier, wherein the first offset is an offset of a resource element of the first reference signal in one resource block; and
calculate the sequence of the first reference signal based on the first group identifier and the first offset.

65. The communication apparatus according to any one of claims 54 to 64, wherein

a subcarrier spacing of the first reference signal is the same as a subcarrier spacing of a control channel of the first communication apparatus, and the subcarrier spacing of the first reference signal is different from a subcarrier spacing of a data channel of the first communication apparatus;

a subcarrier spacing of the first reference signal is different from a subcarrier spacing of a control channel of the first communication apparatus, and the subcarrier spacing of the first reference signal is the same as a subcarrier spacing of a data channel of the first communication apparatus; or

a subcarrier spacing of the first reference signal is different from a subcarrier spacing of a control channel of the first communication apparatus, and the subcarrier spacing of the first reference signal is different from a subcarrier spacing of a data channel of the first communication apparatus.

66. The communication apparatus according to any one of claims 54 to 65, wherein

the subcarrier spacing of the first reference signal is greater than the subcarrier spacing of the control channel of the first communication apparatus; and/or

the subcarrier spacing of the first reference signal is greater than the subcarrier spacing of the data channel of the first communication apparatus.

67. The communication apparatus according to any one of claims 54 to 66, wherein the channel state information comprises first channel state information and/or second channel state information; and

the first channel state information comprises instantaneous channel state information determined by the first communication apparatus based on the first reference signal, and the second channel state information comprises average channel state information determined by the first communication apparatus based on the first reference signal.

68. The communication apparatus according to claim 67, wherein the channel state information comprises at least one of the following:

a channel quality indicator CQI corresponding to the time-frequency resource of the first reference signal;

a modulation and coding scheme MCS corresponding to the time-frequency resource of the first reference signal; or

information indicating the time-frequency resource corresponding to the first reference signal, wherein the information indicating the time-frequency resource corresponding to the first reference signal may be at least one of the following: a control channel resource set identifier corresponding to the first reference signal, an identifier of the first reference signal, the first group identifier, or an identifier of a first control channel element CCE group corresponding to the first reference signal.

69. The communication apparatus according to any one of claims 54 to 68, wherein

the receiving module is further configured to receive first indication information, wherein the first indication information indicates a time-frequency resource for feeding back channel state information; and

that the sending module is further configured to send the channel state information comprises:

the processing module is further configured to feed back the first channel state information and the second channel state information on the time-frequency resource indicated by the first indication information.

70. The communication apparatus according to any one of claims 54 to 69, wherein the processing module is further configured to perform channel estimation based on the first reference signal, and blindly detect a control channel, wherein

the channel state information further comprises an identifier of a second control channel element CCE group, a channel quality indicator CQI corresponding to a second control channel element CCE group, and/or a modulation and coding scheme MCS corresponding to a second control channel element CCE group.

71. The communication apparatus according to any one of claims 54 to 70, wherein the first communication apparatus belongs to the first user group.

72. The communication apparatus according to any one of claims 54 to 71, wherein the receiving module is further configured to receive a second reference signal, wherein the second reference signal is used by a first communication apparatus in a second user group to perform channel estimation on a control channel, and the second user group comprises at least two first communication apparatuses.

73. The communication apparatus according to claim 72, wherein the second user group does not comprise the first communication apparatus; and
the processing module is specifically configured to determine the channel state information based on the first reference signal and the second reference signal.

74. The communication apparatus according to any one of claims 54 to 73, wherein the sending module is specifically configured to send third channel state information to a second communication apparatus, wherein a channel state indicated by the third channel state information is better than a channel state indicated by fourth channel state information.

75. The communication apparatus according to any one of claims 71 to 74, wherein the channel state information comprises at least one of the following:

a channel quality indicator CQI corresponding to a time-frequency resource of the second reference signal;
a modulation and coding scheme MCS corresponding to a time-frequency resource of the second reference signal; or
information indicating a time-frequency resource corresponding to the second reference signal, wherein
the information indicating the time-frequency resource corresponding to the second reference signal may be at least one of the following: a control channel resource set identifier corresponding to the second reference signal, an identifier of the second reference signal, a second group identifier, and an identifier of a third control channel element CCE group corresponding to the second reference signal.

76. The communication apparatus according to any one of claims 72 to 75, wherein the receiving module is further configured to receive first indication information, wherein the first indication information indicates a time-frequency resource for feeding back the first channel state information and/or the second channel state information; and
the sending module is specifically configured to feed back the first channel state information and the second channel state information on the time-frequency resource indicated by the first indication information.

77. The communication apparatus according to any one of claims 72 to 76, wherein the receiving module is further configured to receive second indication information and/or third indication information, wherein the second indication information indicates the first communication apparatus to feed back the first channel state information, and the third indication information indicates the first communication apparatus to feed back the second channel state information.

78. The communication apparatus according to any one of claims 72 to 77, wherein the receiving module is further configured to receive second indication information and/or third indication information, wherein the second indication information indicates the first communication apparatus to feed back average channel state information, and the third indication information indicates the first communication apparatus to feed back instantaneous channel state information.

79. The communication apparatus according to any one of claims 54 to 78, wherein the first reference signal is used for channel measurement and/or interference measurement.

80. The communication apparatus according to any one of claims 54 to 79, wherein the first reference signal is further used by the terminal device in the first user group to demodulate a data channel, and the demodulating a data channel comprises at least one of channel estimation of the data channel, data channel demodulation, and data channel decoding.

81. The communication apparatus according to any one of claims 54 to 80, wherein the first group identifier is a group radio network temporary identifier RNTI of the first user group.

82. A communication apparatus, comprising:

a sending module, configured to send a first reference signal, wherein the first reference signal is used by a terminal device in a first user group to perform channel estimation on a control channel, the first reference signal is used by a first communication apparatus to determine channel state information, and the first user group comprises at least two terminal devices; and
a receiving module, configured to receive the channel state information.

**83.** The communication apparatus according to claim 82, wherein the sending module is further configured to send a first group identifier, wherein the first group identifier identifies the first user group, and the first group identifier is used to determine a time-frequency resource of the first reference signal and/or a sequence of the first reference signal.

**84.** The communication apparatus according to claim 82 or 83, wherein a cell in which the first communication apparatus is located comprises at least two user groups, and the at least two user groups comprise the first user group.

**85.** The communication apparatus according to any one of claims 82 to 84, wherein the time-frequency resource of the first reference signal is located in a first symbol in time domain, and the first symbol comprises only a resource element of a reference signal.

**86.** The communication apparatus according to claim 85, wherein the first symbol is located before a symbol on which the control channel is located.

**87.** The communication apparatus according to claim 85 or 86, wherein the first symbol is a symbol preceding the symbol on which the control channel is located, or the first symbol is a 1st symbol of the symbol on which the control channel is located.

**88.** The communication apparatus according to any one of claims 82 to 87, wherein the sending module is further configured to send first time-frequency resource information to the first communication apparatus, wherein the first time-frequency resource information indicates the time-frequency resource of the first reference signal.

**89.** The communication apparatus according to claim 88, wherein the first time-frequency resource information comprises at least one of the following: information indicating a quantity of resource elements between resource elements of the first reference signal in one resource block; information indicating a quantity of resource elements of the first reference signal in one resource block; or a pattern identifier of the time-frequency resource of the first reference signal.

**90.** The communication apparatus according to any one of claims 82 to 89, wherein

a subcarrier spacing of the first reference signal is the same as a subcarrier spacing of a control channel of the first communication apparatus, and the subcarrier spacing of the first reference signal is different from a subcarrier spacing of a data channel of the first communication apparatus;
a subcarrier spacing of the first reference signal is different from a subcarrier spacing of a control channel of the first communication apparatus, and the subcarrier spacing of the first reference signal is the same as a subcarrier spacing of a data channel of the first communication apparatus; or
a subcarrier spacing of the first reference signal is different from a subcarrier spacing of a control channel of the first communication apparatus, and the subcarrier spacing of the first reference signal is different from a subcarrier spacing of a data channel of the first communication apparatus.

**91.** The communication apparatus according to any one of claims 82 to 90, wherein

the subcarrier spacing of the first reference signal is greater than the subcarrier spacing of the control channel of the first communication apparatus; and/or
the subcarrier spacing of the first reference signal is greater than the subcarrier spacing of the data channel of the first communication apparatus.

**92.** The communication apparatus according to any one of claims 82 to 91, wherein the channel state information comprises first channel state information and/or second channel state information; and
the first channel state information comprises instantaneous channel state information determined by the first communication apparatus based on the first reference signal, and the second channel state information comprises average channel state information determined by the first communication apparatus based on the first reference signal.

**93.** The communication apparatus according to claim 92, wherein the channel state information comprises at least one of the following:

a channel quality indicator CQI corresponding to the time-frequency resource of the first reference signal;
a modulation and coding scheme MCS corresponding to the time-frequency resource of the first reference signal; or
information indicating the time-frequency resource corresponding to the first reference signal, wherein the information indicating the time-frequency resource corresponding to the first reference signal may be at least one of the following: a control channel resource set identifier corresponding to the first reference signal, an identifier of the first reference signal, the first group identifier, and an identifier of a first control channel element CCE group corresponding to the first reference signal.

94. The communication apparatus according to any one of claims 82 to 93, wherein the sending module is further configured to send first indication information, wherein the first indication information indicates a time-frequency resource for feeding back channel state information; and
the receiving module is specifically configured to receive the first channel state information and the second channel state information on the time-frequency resource indicated by the first indication information.

95. The communication apparatus according to any one of claims 82 to 94, wherein the channel state information further comprises an identifier of a second control channel element CCE group, a channel quality indicator CQI corresponding to a second control channel element CCE group, and/or a modulation and coding scheme MCS corresponding to a second control channel element CCE group.

96. The communication apparatus according to any one of claims 82 to 95, wherein the first communication apparatus belongs to the first user group.

97. The communication apparatus according to any one of claims 82 to 96, wherein the sending module is further configured to send a second reference signal to the first communication apparatus, wherein the second reference signal is used by a first communication apparatus in a second user group to perform channel estimation on a control channel, and the second user group comprises at least two first communication apparatuses.

98. The communication apparatus according to any one of claims 82 to 97, wherein the receiving module is specifically configured to receive the channel state information from the first communication apparatus, wherein the channel state information is channel state information determined by the first communication apparatus based on the first reference signal and the second reference signal.

99. The communication apparatus according to any one of claims 82 to 97, wherein the receiving module is specifically configured to receive third channel state information from the first communication apparatus, wherein a channel state indicated by the third channel state information is better than a channel state indicated by fourth channel state information.

100. The communication apparatus according to any one of claims 97 to 99, wherein the channel state information comprises at least one of the following:

a channel quality indicator CQI corresponding to a time-frequency resource of the second reference signal;
a modulation and coding scheme MCS corresponding to a time-frequency resource of the second reference signal; or
information indicating a time-frequency resource corresponding to the second reference signal, wherein
the information indicating the time-frequency resource corresponding to the second reference signal may be at least one of the following: a control channel resource set identifier corresponding to the second reference signal, an identifier of the second reference signal, a second group identifier, and an identifier of a third control channel element CCE group corresponding to the second reference signal.

101. The communication apparatus according to any one of claims 97 to 100, wherein the sending module is further configured to send first indication information to the first communication apparatus, wherein the first indication information indicates a time-frequency resource for feeding back the first channel state information and/or the second channel state information; and
the receiving module is specifically configured to receive the first channel state information and the second channel state information from the first communication apparatus on the time-frequency resource indicated by the first indication information.

**102.** The communication apparatus according to any one of claims 97 to 101, wherein the sending module is further configured to send second indication information and/or third indication information to the first communication apparatus, wherein the second indication information indicates the first communication apparatus to feed back first channel state information, and the third indication information indicates the first communication apparatus to feed back the second channel state information.

**103.** The communication apparatus according to any one of claims 97 to 101, wherein the sending module is further configured to send second indication information and/or third indication information to the first communication apparatus, wherein the second indication information indicates the first communication apparatus to feed back average channel state information, and the third indication information indicates the first communication apparatus to feed back instantaneous channel state information.

**104.** The communication apparatus according to any one of claims 82 to 103, wherein the first reference signal is used for channel measurement and/or interference measurement.

**105.** The communication apparatus according to any one of claims 82 to 104, wherein the first reference signal is further used by the terminal device in the first user group to demodulate a data channel, and the demodulating a data channel comprises at least one of channel estimation of the data channel, data channel demodulation, and data channel decoding.

**106.** The communication apparatus according to any one of claims 82 to 105, wherein the first group identifier is a group radio network temporary identifier RNTI of the first user group.

**107.** A communication apparatus, comprising a processor, wherein the processor is coupled to a memory, and the memory stores a computer program; and
the processor invokes the computer program in the memory, to enable the communication apparatus to perform the method according to any one of claims 1 to 28, or enable the communication apparatus to perform the method according to any one of claims 29 to 53.

**108.** A communication system, comprising:

a first communication apparatus, configured to perform the method according to any one of claims 1 to 28; and
a second communication apparatus, configured to perform the method according to any one of claims 29 to 53.

**109.** A computer-readable storage medium, storing instructions, wherein when the instructions are run on a computer, the method according to any one of claims 1 to 28 is performed, or the method according to any one of claims 29 to 53 is performed.

**110.** A computer program product comprising instructions, wherein when the computer program product runs on a computer, the method according to any one of claims 1 to 28 or claims 29 to 53 is performed.

FIG. 1

FIG. 2

Procedure 1
| Channel estimation on a PDCCH based on a DMRS of the PDCCH | → | Blind detection of DCI | → | Channel estimation on a PDSCH based on a DMRS of the PDSCH | → | PDSCH decoding |

Procedure 2
| Channel estimation based on a CSI-RS | → | CSI determining |

FIG. 3A

| Channel estimation on a PDCCH based on a first reference signal | → | Blind detection of DCI | → | Channel estimation on a PDSCH based on the first reference signal (or a DMRS of the PDSCH) | → | PDSCH decoding |

CSI determining

FIG. 3B

FIG. 4A

FIG. 4B

71

Frequency
domain

RE of
another
reference
signal

RE of a
first
reference
signal

RB

First
symbol

0 | 1 | 2 | 3

RE of a control
channel

Control resource
set CORESET

Time
domain

Symbol on which
the control channel
is located

FIG. 4C

Frequency
domain

RE of a
first
reference
signal

RB

RE of a control
channel

Symbol on which
the control
channel is located

Time
domain

FIG. 4D

FIG. 4E

Subcarrier

RB

Symbol

CORESET 3
CORESET 2
CORESET 1
RE of a first
reference signal
Another time-
frequency resource

FIG. 4F

Symbol

Subcarrier

RB

Another time-frequency resource

RE of a first reference signal

RE of a control channel

RE of a data channel

Example a          Example b          Example c

FIG. 4G

Symbol

Subcarrier

RB

Another time-
frequency resource

RE of a first reference signal

RE of a control channel

RE of a data channel

Example a    Example b    Example c

FIG. 4H

Symbol

Subcarrier

RB

Another time-
frequency resource

RE of a first reference signal

RE of a control channel

RE of a data channel

Example a    Example b    Example c

FIG. 4I

Example a  Example b  Example c  Example d

☐ Another time-frequency resource

▨ RE of a first reference signal

▧ RE of a control channel

▦ RE of a data channel

FIG. 4J

9th RE

5th RE

1st RE

(a)   (b)   (c)   (d)

☐ Another time-frequency resource

▨ RE of a first reference signal

FIG. 5A

10th RE

7th RE

4th RE

1st RE

(a)    (b)    (c)

☐ Another time-frequency resource

▨ RE of a first reference signal

FIG. 5B

8th RE

7th RE

2nd RE

1st RE

(a)    (b)    (c)

☐ Another time-frequency resource

▨ RE of a first reference signal

FIG. 5C

FIG. 5D

FIG. 6A

FIG. 6B

FIG. 6C

FIG. 7

FIG. 8

90

Communication apparatus

901

Transceiver module

902

Processing module

FIG. 9

100

Communication apparatus

1001

Transceiver module

1002

Processing module

FIG. 10

## INTERNATIONAL SEARCH REPORT

| | International application No. |
|---|---|
| | **PCT/CN2022/102259** |

**A. CLASSIFICATION OF SUBJECT MATTER**

H04W 72/12(2009.01)i; H04W 24/10(2009.01)i

According to International Patent Classification (IPC) or to both national classification and IPC

**B. FIELDS SEARCHED**

Minimum documentation searched (classification system followed by classification symbols)

H04W72/-; H04W24/-; H04L5/-; H04W74/-

Documentation searched other than minimum documentation to the extent that such documents are included in the fields searched

Electronic data base consulted during the international search (name of data base and, where practicable, search terms used)

CNTXT, CNABS, CNKI, 万方 WANFANG: CSI, 信道状态, 参考信号, RS, 组, 群, 开销, 耗费, 浪费, 延迟, 迟延, 延时, 时延, 过时, 单独, 各自, 独立, RNTI, 临时标识, 控制信道, PDCCH, PUCCH, 估计, 预估, 预计, 解调 DWPI, VEN, WPABS, EPTXT, WOTXT, USTXT, 3GPP: CSI, channel, state, reference, RS, group, cost, overhead, expense, delay, single, alone, each, respectiv+, RNTI, temporary, control, PDCCH, PUCCH, estimat+

**C. DOCUMENTS CONSIDERED TO BE RELEVANT**

| Category* | Citation of document, with indication, where appropriate, of the relevant passages | Relevant to claim No. |
|---|---|---|
| Y | CN 108964856 A (ZTE CORP.) 07 December 2018 (2018-12-07) description, paragraphs [0140]-[0160], [0214], and [0285] | 1-110 |
| Y | CN 109417453 A (SAMSUNG ELECTRONICS CO., LTD.) 01 March 2019 (2019-03-01) description, paragraphs [0015], [0119], [0133], [0147]-[0155], and [0159]-[0161] | 1-110 |
| A | CN 106899522 A (CHINA MOBILE COMMUNICATIONS CORP.) 27 June 2017 (2017-06-27) entire document | 1-110 |
| A | US 2014334391 A1 (SHARP LABORATORIES OF AMERICA, INC.) 13 November 2014 (2014-11-13) entire document | 1-110 |
| A | Huawei et al. ""DL L3 Mobility Procedure and RS Design"" *3GPP TSG RAN WG1 Meeting #88bis R1-1704190*, 25 March 2017 (2017-03-25), entire document | 1-110 |

☐ Further documents are listed in the continuation of Box C.  ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 September 2022** | **29 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/102259**

| Patent document cited in search report | | | Publication date (day/month/year) | Patent family member(s) | | | Publication date (day/month/year) |
|---|---|---|---|---|---|---|---|
| CN | 108964856 | A | 07 December 2018 | WO | 2018219074 | A1 | 06 December 2018 |
|  |  |  |  | EP | 3633901 | A1 | 08 April 2020 |
|  |  |  |  | EP | 3633901 | A4 | 24 March 2021 |
| CN | 109417453 | A | 01 March 2019 | CN | 109417453 | B | 07 December 2021 |
|  |  |  |  | CN | 114095326 | A | 25 February 2022 |
|  |  |  |  | EP | 3790216 | A1 | 10 March 2021 |
|  |  |  |  | EP | 3455994 | B1 | 16 December 2020 |
|  |  |  |  | EP | 3455994 | A4 | 12 June 2019 |
|  |  |  |  | EP | 3455994 | A1 | 20 March 2019 |
|  |  |  |  | US | 2017366377 | A1 | 21 December 2017 |
|  |  |  |  | US | 10608856 | B2 | 31 March 2020 |
|  |  |  |  | WO | 2017217805 | A1 | 21 December 2017 |
|  |  |  |  | KR | 20190009744 | A | 29 January 2019 |
|  |  |  |  | IN | 201837031922 | A | 21 December 2018 |
| CN | 106899522 | A | 27 June 2017 | CN | 106899522 | B | 19 November 2019 |
| US | 2014334391 | A1 | 13 November 2014 | WO | 2014181551 | A1 | 13 November 2014 |
|  |  |  |  | JP | 6462589 | B2 | 30 January 2019 |
|  |  |  |  | JP | 2016521466 | A | 21 July 2016 |
|  |  |  |  | US | 9271279 | B2 | 23 February 2016 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110742710